# EUROPEAN PATENT SPECIFICATION

(11) **EP 2 401 155 B1**
(45) Date of publication and mention of the grant of the patent: **27.11.2019**
(21) Application number: 10746355.6
(22) Date of filing: 22.02.2010
(51) Int. Cl.: G06F 3/12, B41J 29/38, B41J 29/42, H04N 1/00, H04N 1/44

(54) **IMAGE FORMING APPARATUS, IMAGE FORMING METHOD AND COMPUTER-READABLE INFORMATION RECORDING MEDIUM**
BILDERZEUGUNGSVORRICHTUNG, BILDERZEUGUNGSVERFAHREN UND COMPUTERLESBARES INFORMATIONSAUFZEICHNUNGSMEDIUM
APPAREIL DE FORMATION D'IMAGE, PROCÉDÉ DE FORMATION D'IMAGE ET SUPPORT D'ENREGISTREMENT D'INFORMATIONS LISIBLES PAR ORDINATEUR

(30) Priority: 25.02.2009 JP 2009042055; 26.01.2010 JP 2010014653
(43) Date of publication of application: 04.01.2012
(73) Proprietor: Ricoh Company, Ltd., Tokyo 143-8555 (JP)
(72) Inventor: TANAKA, Saki, Yokohama-shi Kanagawa 222-0032 (JP); NISHIDA, Takayori, Tokyo 142-0062 (JP)
(74) Representative: SSM Sandmair
(86) International application number: PCT/JP2010/053183
(87) International publication number: WO 2010/098476

(56) References cited:
- JP-A- 9 212 325
- US-A1- 2006 092 453
- US-B1- 6 614 546

## Description

### TECHNICAL FIELD

The present invention relates to an image forming apparatus for which a printing setting is carried out again, and thereby, a printing output can be obtained, which is suitable to types or states of devices included in the image forming apparatus, an image forming method carried out in the image forming apparatus, and a computer-readable information recording medium storing a program for achieving the image forming method.

### BACKGROUND ART

There are various types of image forming apparatuses such as printers, MFPs (Multi-Function Peripherals) and so forth. Users may carry out printing settings appropriately according to types of the image forming apparatuses, may utilize functions mounted in the image forming apparatus, and may obtain desired printing outputs.

For example, for an ink-jet printer, it is possible to carry out printing at high speed by reducing an output resolution as a printing setting, and to carry out printing with high image quality by improving the output resolution as a printing setting, In a type having a collecting function in which plural pages are reduced in size and are printed on one side or a both-sides printing function in which printing is carried out on both sides of a paper sheet, it is possible to reduce the required number of paper sheets by using the functions. Further, in a type having a punching hole function in which a hole is produced in a designated position of a paper sheet, or a staple function in which paper sheets are bound together with staples, it is possible to reduce troublesome tasks otherwise required for finishing printouts.

When using such an image forming apparatus, software called a printer driver is installed in a personal computer, for example, for controlling the image forming apparatus, and a printing setting is carried out by using the printer driver in spooling of printing data.

For example, Japanese Laid-Open Patent Application No. 2004-21456 proposes an apparatus that determines a priority order among printing setting items, the number of which increases along with improvement of functions of printers, and changes a display form based on the priory order such that a user can easily select therefrom.

In a case where a printing setting is carried out in spooling printing data as mentioned above, desired printing may not be available because of a type or a state of a printer. For example, there is a case where, when a user does not have sufficient time, spooling is carried out with a setting of "no collecting printing", and printing is carried out with a printer not having a sufficient toner remaining amount. That is, when printing is carried out with a setting of "collecting printing", it would be possible to print out all the pages. However, as a result of printing being carried out with a setting of "no collecting printing", toner becomes short, printing is thus interrupted, toner replacement is required, and thus, extra time is required.

Such a situation may not be avoided even when a user understands that printing may be interrupted because a toner remaining amount is small before the printing, since a printing setting should be carried out at a time of spooling, and it is not possible to change the printing setting when printing is actually carried out by a printer.

There is a technology called "on-demand printing" as a generalized technology. According to on-demand printing, a service is provided when a user makes a request therefor. By using this technology, a user may not be aware of a particular printer in spooling printing data, and it is possible that any printer connected to a network may be used. However, also in this technology, the same problem may occur. This is because, also in this case, a printing setting should be carried out at a time of spooling, and it is not possible to change the printing setting when printing is actually carried out by a printer.

Recently, a device common driver is used in many cases by which printing data can be output without depending on a particular type of a printer. Such a device common driver generally has compatibility for functions that are common among types, although a limitation exists for a function that is unique to a type or an optional configuration Therefore, printing data output by using a device common driver can be printed according to printing settings such as the number of copies, an object to print, a range of printing, a font, a space, the number of lines per page, the number of characters per line, and so forth.

However, when a device common driver is used, even a printing setting item that is not available for a type of printer is displayed, and thus, a user may select it. For example, although the type does not have a staple function, whether staple binding is carried out is displayed in a printing setting screen, and thus, a user may select it.

As a result, for example, the user selects "to carry out staple binding" from the printing setting screen, and waits for a printout to be bound with staples. However, actually, the printout is not bound.

A printer system has been proposed in which a printer that can carry out a function according to a printing setting is automatically selected at a time of spooling (see Japanese Laid-Open Patent Application No. 2004-58306). As a result of a printer that can carry out a function of a printing setting being automatically selected, it is possible to avoid a printing error, and thus, it is possible to provide an output that a user desires.

### SUMMARY OF THE INVENTION

According to the present invention, an image forming apparatus that carries out printing an image based on printing data, includes a data storing part configured to receive and store the printing data; a change receiving part configured to receive an input of change information that is used to change printing setting information that is included in the printing data and is set for a designated process to be carried out; and an updating part configured to update the printing setting information included in the printing data that is stored by the storing part according to the change information.

Other objects, features and advantages of the present invention will become more apparent from the following detailed description when read in conjunction with the accompanying drawings.

US 2006/0092453 A1 pertains to a printing apparatus according to the preamble of claim 1.

The present invention is defined by the subject-matter of the appended claims.

### BRIEF DESCRIPTION OF THE DRAWINGS

FIG. 1 shows a printing system including a MFP according to any one of first through fourth examples and first embodiment;
FIG. 2 shows a hardware configuration example of a MFP according to any one of first through thirteenth examples and first through second embodiments;
FIG. 3 shows a block diagram of a MFP according to a first example;
FIG. 4 shows a process sequence diagram between a client apparatus and the MFP;
FIG. 5 shows one example of a screen displayed on an operations panel of the MFP;
FIG. 6 shows one example of another screen displayed on an operations panel of the MFP;
FIG. 7 shows one example of a function configuration of a printing control part shown in FIG. 3;
FIG. 8 shows one example of another process sequence diagram between the client apparatus and the MFP;
FIG. 9 shows one example of display of an authentication information inputting screen that a printer driver displays;
FIG. 10 shows one example of display of a login screen in the MFP;
FIG. 11 shows one example of display of a printing data list screen;
FIG. 12 shows a flowchart illustrating a procedure carried out by the printing job control part shown in FIG. 7;
FIG. 13 shows a sequence diagram illustrating a specific example of a process carried out by the printing job control part;
FIG. 14 shows a flowchart illustrating a procedure carried out by the printing job control part shown in FIG. 7 in a first variant example;
FIG. 15 shows a sequence diagram illustrating a specific example of a process carried out by the printing job control part in the first variant example;
FIG. 16 shows a flowchart illustrating a procedure carried out by the printing job control part shown in FIG. 7 in a second variant example;
FIG. 17 shows a sequence diagram illustrating a specific example of a process carried out by the printing job control part in the second variant example;
FIG. 18 shows one example of a configuration of a login control part shown in FIG. 7;
FIGS. 19A, 19B show a flowchart of a procedure carried out by the login control part;
FIG. 20 shows one example of correspondence information managed by a correspondence information managing part shown in FIG. 18;
FIG. 21 shows one example of display of a password screen;
FIG. 22 shows a functional block diagram of a MFP in a second example;
FIG. 23 shows a functional block diagram of a MFP in a third example;
FIG. 24 shows a functional block diagram of a MFP in a fourth example;
FIG. 25 shows a functional block diagram of a MFP in a first embodiment;
FIG. 26 shows a printing system in any one of fifth through ninth examples and second embodiment;
FIG. 27 shows an example of a hardware configuration of a printing server that may be used in the printing system in any one of the fifth through ninth examples and the second embodiment;
FIG. 28 shows a configuration block diagram of a printing system in the fifth example;
FIG. 29 shows one example of a process sequence of a client apparatus, a printing server and a MFP in the printing system in any one of fifth through ninth examples and second embodiment;
FIG. 30 shows a functional block diagram of a printing system in a sixth example;
FIG. 31 shows a functional block diagram of a printing system in a seventh example ;
FIG. 32 shows a functional block diagram of a printing system in an eighth example;
FIG. 33 shows a functional block diagram of a printing system in a second embodiment;
FIG. 34 shows a functional block diagram of a printing system in a ninth example;
FIG. 35 shows one example of a process sequence of a client apparatus, a host MFP and a client MFP in any one of ninth through thirteenth examples;
FIG. 36 shows a functional block diagram of a printing system in a tenth example;
FIG. 37 shows a functional block diagram of a printing system in a eleventh example;
FIG. 38 shows a functional block diagram of a printing system in a twelfth example; and
FIG. 39 shows a functional block diagram of a printing system in a thirteenth example.

### DESCRIPTION OF EMBODIMENTS

In the above-mentioned printer system in which a printer that can carry out a function according to a printing setting is automatically selected in spooling, it is not possible to obtain such an advantage of on-demand printing where printing can be carried out from any printer connected to a network. When a user wants to use a specific printer, the user should be aware of functions or such of the printer.

Therefore, an apparatus and a method has been in demand by which it is possible to obtain the above-mentioned advantage of on-demand printing, to carry out a printing setting without being aware of functions of a printer, and to obtain a desired output of printing.

Advantageously, an image forming apparatus is configured so that, in a case where printing data is transmitted from a client apparatus such as a PC (personal computer) that a user uses, the image forming apparatus receives the printing data and stores it; then, printing setting information set in the printing data is displayed, and thus the user can change the printing setting information. Therefore, the image forming apparatus receives, if any, a change of the printing setting information from the user and updates the printing setting information set in the printing data; and thus, it is possible to carry out printing based on the updated printing setting information that the user desires.

Thus, not the client apparatus but the image forming apparatus displays the printing setting information set in the printing data, so that the user can change the printing setting information. Thereby, the user can change printing settings depending on functions or states of any image forming apparatus to be used which is connected to a network, and obtain desired output; and thus, it is possible to improve convenience of the user.
Thus, the above-mentioned problem can be solved. The image forming apparatus according to the embodiments includes the following parts.

The image forming apparatus that prints an image based on printing data, includes a data storing part receiving the printing data and stores it. The image forming apparatus further includes a change receiving part receiving an input of change information to be used to change printing setting information that is set in the printing data and is used for designated processes to be carried out. The image forming apparatus further includes an updating part updates the printing setting information included in the printing data that is stored by the data storing part, according to the input change information.

The printing setting information is information set for the purpose of desired processes to be carried out, and includes setting items to be set and setting contents set for the setting items, respectively. The setting items may include a collecting printing setting, a both-sides printing setting, a monochrome/color printing setting, a paper size setting, a number of copies setting, a blank paper removal setting, a toner saving mode setting, a punching hole setting, and a staple setting, for example. The corresponding setting contents are, respectively, the number of pages included in one sheet, whether both-sides printing is to be carried out, a selection between monochrome printing and color printing, a selection of paper size, the number of copies, whether blank paper should be removed, whether toner saving is to be carried out, whether punching holes is to be carried out, and whether and which positions binding with staples is to be carried out.

In one example, the change receiving part is configured to merely receive change information input by a user by using an input part. In another example, the change receiving part is configured to cause a display part to display printing setting information that includes setting items and corresponding setting contents included in printing data, so that a user sees them and can change the setting contents, and receive changed setting contents as change information. The function can be achieved by using a user interface, and specifically, by using an operations panel or such. Thereby, a user can recognize what setting items exist, and can easily change the corresponding setting contents.

The image forming apparatus may include a setting item storing part that stores setting items to be displayed on a display part. In this case, the change receiving part can display with the display part the setting items stored by the setting item storing part and the setting contents corresponding to these setting items, included in printing setting information included in printing data stored by the data storing part. In this configuration, it is possible that only the setting items which a user can change are displayed by the display part. Thereby, it is possible to prevent displaying from being redundant, and to reduce a troublesome operation of scrolling a displayed screen.

There may be a case where plural sets of printing data exist in the data storing part. In this case, a list of the printing data can be displayed by the display part, and thus, a user can select therefrom. For this purpose, the image forming part may include a data receiving part that receives printing data. At this time, the change receiving part responds to the data receiving part receiving printing data, reads the selected printing data from the data storing part, and causes the display part to display setting items and corresponding setting contents included in the printing data.

Further, the image forming apparatus may further include an information collecting part and a display determining part. The information collecting part makes an inquiry into devices included in the image forming apparatus, which devices are those having states changing as they are used, and collects information of the devices. The display determining part determines, from the collected information, setting items and corresponding setting contents to be displayed with the display part.

In this configuration, in a case where a toner remaining amount is smaller than a predetermined amount and the number of copies is large, it is possible to carry out customization such that a setting item such as a collecting printing setting or a both-sides printing setting is displayed.

Further, the image forming apparatus may further include a setting item obtaining part and an item addition determining part. The setting item obtaining part obtains setting items for which settings can be carried out, from information collected from devices included in the image forming apparatus as a result of an inquiry being made to the devices at a time of starting up of the image forming apparatus. The item addition determining part compares setting items included in printing data and the thus-obtained setting items, and determines whether setting items exist that may be added, which setting items are not included in the printing data.

When the item addition determining part determines that setting items exist that may be added, the change receiving part can cause the display part to additionally display these setting items that may be added and corresponding setting contents that indicate as not including actual setting contents. Further, the updating part can update printing setting information by adding these setting items and the corresponding setting contents. A user sees the setting items that indicate as not actually including setting contents, and recognizes that no actual setting contents are included for these setting items. Then, the user can actually set setting contents for these setting items, and thereby, can achieve printing reflecting the thus-set setting contents.

Further, when the image forming apparatus is shared by plural users, the image forming apparatus may further include an authentication part for the purpose of identifying printing data; and also, from a security point of view, the authentication part may receive an input of user identification information, determine whether the input identification information agrees with previously registered user identification information, and carry out user authentication. Printing data includes user identification information, and the updating part can update printing setting information included in printing data of a user authenticated by the authentication part, according to change information that the authenticated user inputs.

Further, the image forming apparatus may further include a printing setting storing part that stores previously set printing settings in a manner of being associated with user identification information. In this case, the updating part can update printing setting information included in printing data stored by the data storing part by using printing settings stored by the printing setting storing part as change information, when the change receiving part has not received change information for a predetermined period. Thereby, even when a user does not input change information, it is possible that desired printing according to a type of a device, or according to user's requests is automatically achieved.

The authentication part may include a card reader that reads user identification information from an IC card that stores the user identification information. Further, the authentication part may be included not in the image forming apparatus but in an authentication server that is provided separately.

An image forming method according to an embodiment of the present invention includes steps that are carried out in the image forming apparatus according to the embodiment described above. These steps may be carried out as a result of a program stored in a computer-readable information recording medium, according to an embodiment of the present invention, being executed.

Below, embodiments of the present invention will be described in detail with reference to figures.

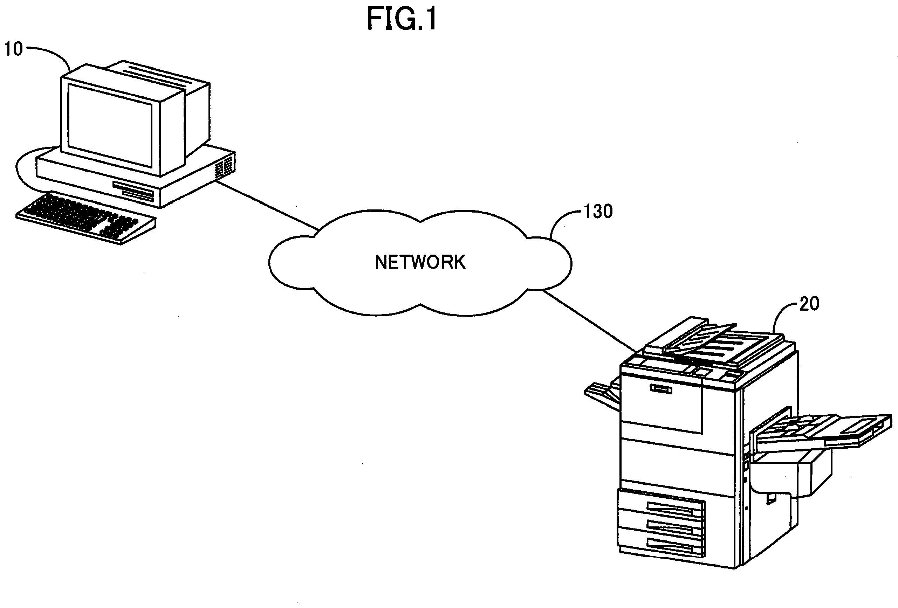

FIG. 1 shows a printing system including a MFP (Multi-Function Peripheral) according to any one of first through fourth examples and first embodiment of the present invention. The printing system shown in FIG. 1 includes a client apparatus 10 that a user uses and a MFP 20 that is one example of an image forming apparatus; the client apparatus 10 and the MFP 20 are connected together via, a network 130 so that the client apparatus 10 and the MFP 20 can communicate with each other via the network 130. The network 130 may be the Internet, an intranet, or such. The client apparatus 10 and the MFP 20 may be connected together directly by a cable, or may communicate with each other in a wireless manner by using a wireless LAN or such. As mentioned above, according to any one of the first through fourth examples and the first embodiment, the MFP can be used as one example of an image forming apparatus. However, one that can be used as an image forming apparatus is not limited to a MFP. That is, the MFP 20 in any one of the first through fourth examples and the first embodiment may be a laser printer (LP) or such having a sole function of a printer.

In the client apparatus 10, a printer driver is installed for controlling the MFP 20, and thus, a user can use the MFP 20 via the client apparatus 10. For this purpose, the client apparatus 10 includes a memory that stores the printer driver, a processor that reads and executes the printer driver, and a communication device that carries out communications with the MFP 20. Further, the client apparatus 10 stores applications such as a document creating application, a spreadsheet application or such, for the purpose of creating printing data to be printed, and includes an input device such as a keyboard or a mouse for inputting characters, and a display part for displaying input characters or such. The client apparatus 10 is, for example, a PC (Personal Computer).

The printer driver mounted in the client apparatus 10 may be a printer driver for controlling the MFP 20. However, the printer driver may be a device common driver that does not depend on apparatus types. The device common driver has compatibility for functions that are generally common among apparatus types. Based on printing data output by using a device common driver, it is possible to print an image or images according to those set in printing setting information for the number of copies, an object of printing, a range of printing, a font, a margin, the number of lines, the number of characters per line, and so forth. Thus, it is possible to print an image or images generally according to settings as printing setting information based on printing data output by using a device common driver.

Such a printer driver or a device common driver converts a file of a document or such created by using an application that the client apparatus 10 has into printing data. The printing data includes printing setting information that has setting items and setting contents corresponding to the setting items. The setting items include a collecting printing setting, a both-sides printing setting, a monochrome/color printing setting, a paper size setting, a number of copies setting, a blank paper removal setting, a toner saving mode setting, a punching hole setting and a staple setting. Corresponding setting contents include the number of pages to be printed into one sheet for the collecting printing setting, whether to carry out both-sides printing for the both-sides printing setting, a selection between monochrome printing and color printing for the monochrome/color printing setting, a selection of a paper sheet size for the paper size setting, the number of copies for a number of copies setting, whether to carry out blank paper removal for the blank paper removal setting, whether to carry out toner saving for the toner saving mode setting, whether and which positions to punch holes for the punching hole setting, and whether and which positions to bind with staples for the staple setting.

The MFP 20 outputs an image or images based on printing data received from the client apparatus 10. For this purpose, the MFP 20 includes a printing device (image outputting part). The printing device includes, in a case of an electrophotographic color printer, a photosensitive drum, a charging unit that charges the photosensitive drum, an exposure device that emits laser light to form a latent image on the photosensitive drum, a developing unit including a toner cartridge for developing the latent image formed on the photosensitive drum, a primary transfer unit that transfers the toner image formed on the photosensitive drum to a transfer belt, a paper feeding unit that supplies paper sheets, a secondary transfer unit that transfers the toner image from the transfer belt to a paper sheet, and a fixing unit that fixes the transfer toner image to the paper sheet.

Further, the MFP 20 includes a processor (CPU) that controls the entirety of the MFP 20 such as a laser light applying position, strength and applying time in the exposure device, a carrying speed of the transfer belt, a paper feeding speed, fixing temperature, and so forth; a memory that stores a program to be executed by the processor for achieving the above-mentioned control; and a communications device (network I/F) that carries out communications with the client apparatus 10. Further, the MFP 20 includes a paper ejecting tray, a finisher that provides a punching hole function, a staple binding function and so forth.

Further, as a multi-function peripheral, the MFP 20 may include, not only the printing device but also a reading device required for carrying out a copying function, a facsimile function, a scanner function, and a feeder that carries an original document or such. Communications between the client apparatus 10 and the MFP 20 can be achieved by using a protocol such as HTTP, FTP or such. In FIG. 1, the single client apparatus 10 and the single MFP 20 are shown. However, a configuration of the printing system is not limited thereto. A configuration of the printing system may be one in which plural client apparatuses and plural MFPs or printers are connected to the network 130.

A user creates a document or such by using an application in the client apparatus 10, carries out printing settings such as a size of characters, the number of lines, the number of characters per line, a margin, size magnification or reduction, the number of copies, a paper size, a printing page number, the number of pages for the collecting printing function, whether to carry out both-sides printing, and so forth, and gives instructions for the MFP 20. In the related art, a printer immediately carries out a printing operation in response to receiving the printing instructions. However, the MFP 20 in the embodiments of the present invention carries out the printing operation after the user moves to the place of the MFP 20 from the client apparatus 10, changes, if necessary, printing setting information depending on a type or a state of the MFP 20, and presses a printing execution button or such.

For example, at a time of giving printing instructions for the MFP 20 from the client apparatus 10, the user carries out such a printing setting that one page is printed onto one paper sheet. However, when the user moves to the place of the MFP 20, the user find out that a toner remaining amount is small. In such a case, in the related art, the printing operation is carried out with the printing setting as it is. However, in the embodiments of the present invention, the user can change the printing setting from the MFP 20, specifically, the collecting printing setting included in the printing setting information. Therefore, it is possible to carry out the printing operation with the thus-changed printing setting information.

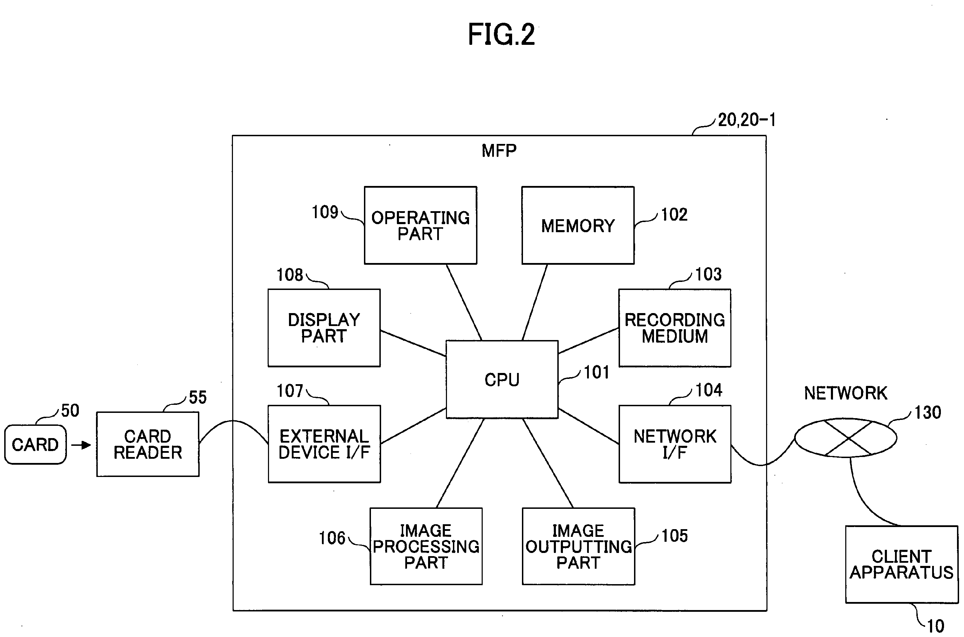

FIG. 2 shows a hardware configuration example of the MFP 20. For the sake of convenience, FIG. 2 shows a hardware configuration example in a case where the MFP 20 functions as an image forming apparatus, where a reading device required for a copying function, a facsimile function and a scanner function, and a feeder for carrying an original document are omitted. In FIG. 2, the MFP 20 includes a CPU 101, a memory 102, a recording medium 103, a network I/F 104, an image outputting part 105, an image processing part 106, an external device I/F 107, a display part 108, and an operating part 109.

A program that achieves functions in the MFP 20 is recorded (installed) in the non-volatile recording medium 103 such as a hard disk drive. The recording medium 103 stores the installed program, and also, stores required files and data. The memory 102 reads the program from the recording medium 103 in response to a program starting up instruction being given, and stores the program. The CPU 101 achieves the functions of the MFP 20 according to the program stored in the memory 102. The network I/F 104 is used as an interface for connecting to a network.

The display part 108 includes, for example, an LCD (Liquid Crystal Display) or such, and displays an operating screen, a message and so forth. The operating part 109 includes buttons (keys) as hardware, and receives an operating input of a user. The display part 108 and the operating part 109 may be configured integrally into an operations panel.

The image processing part 106 carries out various image processing operations required for outputting (printing) an image or images. The image outputting part 105 carries out outputting (printing) an image or images.

The external device I/F 107 is an interface to connect to a card reader 55 used for inputting user identification information for authentication. For example, the external device I/F 107 includes a USB port (USB host interface) or a serial port. The card reader 55 is a card reader used for reading information from a card 50, and has a hardware interface (for example, a USB connector or a serial interface) to connect to the external device I/F 107. The card reader 55 may be included in the MFP 20. The card reader 55 may be a contact type or a non- contact type. The card 50 is not limited to an IC card, and may be any card that can store a card ID unique to the card 50 such as a magnetic card or such, The card ID is, generally speaking, called a universal ID or card serial number. As a specific example of the card 50, a proximity card, a mifare card, and a Java (registered trademark) card can be cited.

The cards 50 are distributed to the users. However, depending on a security level required for operating the MFP 20, a single card 50 may be shared by plural users. It is noted that the cards 50 distributed to the users may not be of one type. As mentioned above, the card reader 55 can be easily connected to the MFP 20 by a USB or such. Therefore, plural card readers 55 corresponding to different types of cards 50 (proximity card, mifare card and Java card) may be connected to the MFP 20 simultaneously. In this case, the plural types of cards 50 can be used simultaneously.

In FIG. 2, the MFP 20 is connected to the client apparatus 50 via the network 130 (by wire or wireless). The client apparatus 10 converts document data that is a target to be printed into printing data that is interpretable by the MFP 20, in response to a printing instruction being input by a user, and transmits a printing request (printing job) including the printing data to the MFP 20.

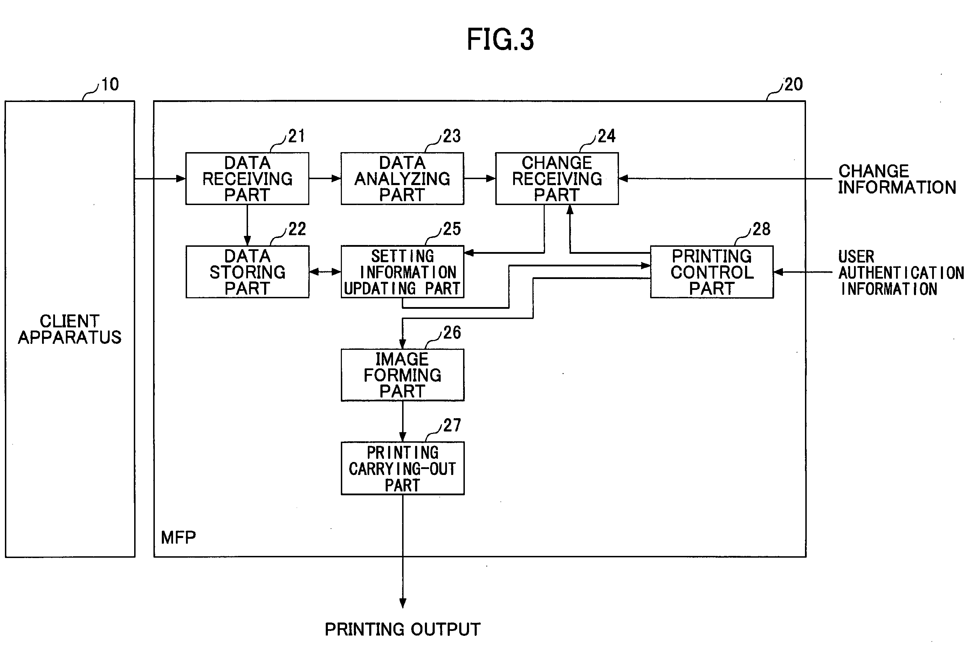

With reference to FIG. 3, functions of the MFP 20 shown in FIGS. 1 and 2 will be described. The MFP 20 includes a data receiving part 21 that receives printing data created in the client apparatus 10 and converted by the printer driver, a data storing part 22 that stores the received printing data, and a data analyzing part 23 that analyzes the printing data. These parts are realized as a result of the program installed in the MFP 20 being executed by the CPU 101. The data analyzing part 23 analyzes printing setting information included in the printing data, and recognizes setting items and setting contents included in the printing setting information.

Further, the MFP 20 includes a change receiving part 24 that receives an input of change information from a user, and a setting information updating part 25 that updates the printing setting information included in the printing data stored by the data storing part 22, according to the change information received by the change receiving part 24. Also these parts are realized as a result of the program installed in the MFP 20 being executed by the CPU 101.

The MFP 20 further includes an image forming part 26 that forms an image based on updated printing setting information in response to an instruction from a user, and a printing carrying-out part 27 that prints on a paper sheet the image that is formed based on the updated printing setting information, and outputs the image. These parts correspond to the image processing part 106 and the image outputting part 105.

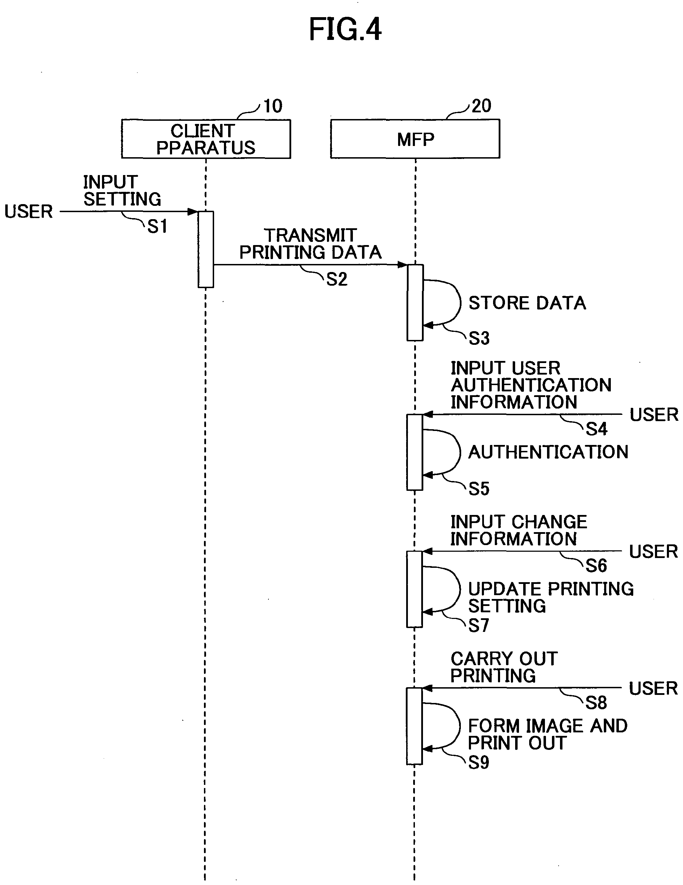

The MFP 20 may be configured to carry out secret printing described below. In this case, the MFP 20 includes a printing control part 28. The printing control part 28 receives an input of user authentication information in step S4 of FIG. 4 and carries out user authentication in step S5. When the user authentication has succeeded, an input of change information for printing setting information with the change receiving part 24 by the user is allowed, and therefore, updating of the printing setting information according to the change information with the setting information updating part 25 is allowed. Further, the printing control part 28 is provided between the setting information updating part 25 and the image forming part 26, and outputs printing data that is output by the setting information updating part 25 to the image forming part 26. The image forming part 26 forms an image or images and the printing carrying-out part 27 prints the image or images based on the printing data. The printing control part 28 is also realized as a result of the program installed in the MFP 20 being executed by the CPU 101. It is noted that, in a case where the MFP 20 has a configuration in which the printing control part 28 is not provided, printing data output by the setting information updating part 25 is directly output to the image forming part 26, the image forming part 26 forms an image or images and the printing carrying-out part 27 prints the image or images based on the printing data.

The MFP 20 receives printing data from the printer driver mounted in the client apparatus 10, stores the printing data in the data storing part 22 and receives, if any, a change of printing setting information from the user, until receiving an instruction of printing execution from the user.

The user can input change information from the operating part 109 with keys or the operations panel, for example, in step S6 of FIG. 4, and the change receiving part 24 can cause the display part 108 to display printing setting information that is currently set in the printing data. Thereby, the user can recognize setting items and corresponding setting contents, and can carry out a setting change based thereon.
The change of the printing setting information is such that, for example, although the user sets "both-sides printing is not to be carried out" at a time of giving a printing instruction from the client apparatus 10, the user changes the setting contents into "both-sides printing is to be carried out" for the purpose of saving paper sheets to be used for printing.

In this case, when the user inputs to change the setting contents from "both-sides printing is not to be carried out" into "both-sides printing is to be carried out" from the operating part 109 with keys or the operations panel, the change receiving part 24 receives the contents as change information, and sends the change information to the setting information updating part 25. The setting information updating part 25 then updates the corresponding setting contents of the printing setting information included in the printing data according to the sent change information (step S7 of FIG. 4). In this case the setting contents are rewritten into "both-sides printing is to be carried out".

After thus carrying out the setting change, the user confirms the changed setting contents, and presses a printing execution button displayed by the display part 108 to input an instruction for printing, Therefore, the setting information updating part 25 updates the printing setting information and transmits the printing data to the image forming apparatus 26, via the printing control part 28 in the case of secret printing, in response to the instruction for printing. The image forming part 26 forms an image or images based on the printing data. At this time, the image forming part 26 forms an image or images according to the setting contents such as a character size, a margin, the number of lines, the number of characters per line, a selection between monochrome printing and color printing, whether to carry out toner saving and the number of pages to be printed into one paper sheet, for example. Then, the printing carrying-out part 27 prints the image or the images according to the setting contents such as the number of copies, whether to carry out both-sides printing, whether and which positions to punch holes, and whether and which positions to bind with staples, for example.

When color printing is set in the printing setting information, the image forming part 26 forms toner images with toners of respective colors. When the number of copies as being 2 and punching of two holes on the left side of a paper sheet are set in the printing setting information, the printing carrying-out part 27 carries out color printing on two paper sheets, punches two holes on the left side of each paper sheet, and ejects the paper sheets to an ejecting tray.

With reference to FIG. 4, a specific process will be described in detail. In step S1, a user uses the client apparatus 10 such as a PC, starts an application, and creates a document. When printing the created document, the user designates a destination to which the document is to be output, carries out printing settings such as a range of printing pages, the number of copies, a monochrome/ color printing setting, a collecting printing setting, a paper size setting and a both-sides printing setting, and a toner saving setting, for example, and gives an instruction to the destination to output printing data.

The range of printing pages is input as "2- 5" for printing pages 2-5 for example. As for the collecting printing setting, a case where one page is printed into one paper sheet is set as a default setting in general, and therefore, a setting is not specially required. When two pages of images or four pages of images are printed into one paper sheet, "2" or "4" is input and a setting is carried out.

In step S2 of FIG. 4, the thus-prepared document data and printing setting information are converted into printing data by the printer driver, and are transmitted to the destination. At this time, when other printing data is already stored in the destination, the printing data is temporarily stored in the client apparatus 10 until the other printing data is processed. In a case where the destination is the MFP 20, when the other printing data stored in the MFP 20 is processed and an available memory area is thus created in the MFP 20, the printing data temporarily stored in the client apparatus 10 is then transmitted to the MFP 20 via the network 130. The MFP 20 stores the thus-transmitted printing data (step S3 of FIG. 4) until a user gives an instruction, In response to the instruction being given by the user (step S8 of FIG. 4), the MFP 20 reads the stored printing data, and carries out printing based on the printing data (step S9), on the condition that user authentication (steps S3 and S4) succeeds in a case where secret printing is carried out.

Since the MFP 20 does not carry out printing until the user gives the instruction as mentioned above, the user can change printing settings (printing setting information) from the MFP 20 (steps S6 and S7) until the user gives the above- mentioned instruction.

When using the MFP 20, in a case where secret printing is carried out and user authentication is required, the user inputs user identification information by using the operating part 109 with keys or the operations panel (step S4 of FIG. 4). The MFP 20 determines, based on user identification information previously registered and stored in the memory or such, whether there is already registered user identification information that agrees with the input user identification information, and allows an operation by the user when it is determined that there is already registered user identification information that agrees with the input user identification information (step S5 of FIG. 4). For this purpose, the MFP 20 can include the printing control part 28.

On the other hand, when it is determined that there is no already registered user identification information that agrees with the input user identification information, the printing control part 28 requires a new registration of user identification information from the user, or denies an operation by the user. For the sake of convenience, it is assumed that the printing control part 28 denies an operation by the user in this case. User identification information includes, for example, a user ID and a password, which may include characters, numerals and so forth.

In enterprises or such, authentication servers are provided in many cases for the purpose of improving security. Such an authentication server may be used for user authentication. In this case, user authentication may be carried out not only based on user ID and password being input, but also based on an IC card having mounted thereon an IC chip recording user identification information. A user places the IC card on a card reader, the card reader reads the user identification information from the IC card, and the card reader transmits the read user identification information to an authentication server. The authentication server determines whether registered user identification information agrees with the transmitted user identification information, and thus, carries out user authentication.

As user identification information, not only a user ID and a password, but also information of birth date, a division a user belongs to, and so forth may be included. Thereby, it is possible to further improve security. Further, by inputting such user identification information or by causing such user identification information to be read, it is possible that, even when plural users share the MFP 20, only printing data of a particular user can be displayed by the display part 108 for the purpose of changing printing setting information.

A card reader may be provided not only to an authentication server but also to the MFP 20 itself as described above with reference to FIG. 2. In this case, when an IC card 50 having mounted thereon an IC chip is placed on the card reader 55, the card reader 55 reads user authentication information. The IC chip is not limited to one storing user ID, password, birth date, a division a user belongs to, and so forth, and an IC chip storing merely a card number that is uniquely identified can be used.

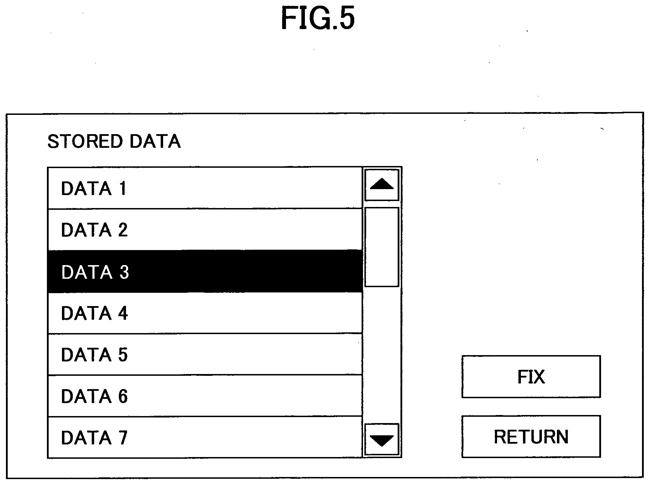

The MFP 20 includes the recording medium 103 acting as the data storing part 22 that can store plural sets of printing data, and further includes the display part 108, which can be used to display a list of the plural sets of printing data. For example, FIG. 5 shows a screen of displaying plural sets of printing data.

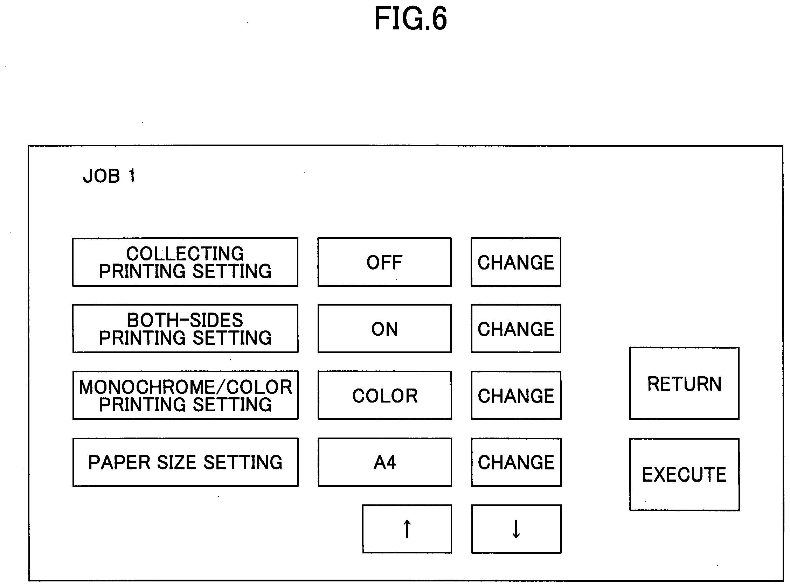

The screen of FIG. 5 is displayed in a case where user authentication carried out by the printing control part 28 (steps S4, S5 of FIG. 4) has succeeded in a case where security printing is carried out. Further, this screen can be scrolled so that any printing data can be selected, and selected printing data is displayed in a reverse state (data 3 or "DATA 3" in FIG. 5). When a user wishes to select one printing data, the printing data is caused to be in a reverse state by the user, and a button "FIX" is pressed. Thus, the printing data can be selected. Further, the screen includes a button "RETURN" for returning to the original screen. In one example, the original screen is a login screen used for user authentication carried out by the printing control part 28. In this case, from the login screen, the display is shifted to the screen of FIG. 5, and then, the display is shifted to a screen of FIG. 6 described later.

When printing data is thus selected, printing setting information included in the printing data is displayed on the display part 108. The printing setting information includes setting items and setting contents, and the change receiving part 24 reads the printing data from the data storing part 22, extracts the printing setting information from the printing data, and causes the display part 108 to display the printing setting information.

FIG. 6 shows a screen displaying printing setting information on the display part 108. The screen of FIG. 6 displays a job name "JOB 1" for identifying the printing data, and, as setting items, SETTING", "MONOCHROME/COLOR PRINTING SETTING", "PAPER SIZE SETTING" are displayed, and, as corresponding setting contents, "OFF", "ON", "COLOR", "A4" are displayed. Further, buttons "CHANGE" are displayed corresponding to the setting items. The screen can be scrolled by using scroll buttons "T", "I". Thereby, other setting items and setting contents can be displayed. Further, the screen includes a button "RETURN" for returning to the original screen (printing data selecting screen of FIG. 5), and a button "EXECUTE" for carrying out printing.

In a case where a user sets not to carry out collecting printing at a time of printing setting from the client apparatus 10, "OFF" is displayed in the screen of FIG. 6 for "COLLECTING PRINTING SETTING". Then, when the user recognizes that a toner remaining amount in the MFP 20 is small, the user considers carrying out collecting printing for the purpose of saving toner. In this case, the user presses the button "CHANGE" of "COLLECTING PRINTING SETTING", and thereby, the above-mentioned "OFF" is changed into "2" (for printing "2" pages into one paper sheet) in the screen. Then, when the user presses the button "EXECUTE" (step S6 of FIG. 4), the MFP 20 updates the corresponding printing setting information according to the thus-changed setting contents, and thus, it is possible to carry out printing based on the updated printing setting information (steps S8, S9).

From the screen of FIG. 6, when the "CHANGE" button is pressed once for "COLLECTING PRINTING SETTING", "OFF" is changed into "2", and, when the "CHANGE" button is pressed once again, "2" is changed into "4". However, in another example, when the "CHANGE" button is pressed, another screen is displayed, and from the displayed screen, by scrolling or by inputting, "2", "4", "6", "8", or such can be selected. Further, a display of the setting contents is, in another example, only "ON" is displayed in the screen of FIG. 6, when a setting of the number of pages ("2", "4", "6", "8", or such) can be made from the other screen as mentioned above.

In a case where user authentication is carried out such as in a case where secret printing is carried out, printing data can include user identification information. In this case, the printing control part 28 acting as a data receiving part can cause the display part 108 to display printing data including user identification information of a user who is authenticated, and can receive a selection of the printing data by the user (step S6 of FIG. 4). In this case, when the change receiving part 24 receives change information, the setting information updating part 25 can update printing setting information included in the printing data including the user identification information of the user who is authenticated (step S7 of FIG. 4).

As an example, description has been made that, display is shifted from the login screen into the screen of FIG. 5, and then, to into the screen of FIG. 6. However, this example is not limiting, and, in another example, in a case where user authentication is not carried out, the screen of FIG. 5 can be directly displayed. Further, in a case where not plural sets of printing data but only a single set of printing data is stored in the data storing part 22, the screen of FIG. 6 can be directly displayed. In the screen of FIG. 6, all the setting items and setting contents are displayed. Therefore, even when setting contents are partially changed by a user, the setting items and setting contents after being changed by the user are used to overwrite printing setting information, and thereby, the printing setting information can be updated (steps S6, S 7 of FIG. 4).

The client apparatus 10 can request execution of secret printing of the MFP 20. When secret printing is carried out, a user inputs a user ID and a password as user identification information together with a printing instruction. The client apparatus 10 generates printing data of document data to be printed, includes the user ID and password as the user identification information in the printing data, and transmits the printing data to the MFP 20. When receiving the user ID and password (user identification information, the MFP 20 does not immediately carry out printing an image or images based on the printing data, but stores the printing data in the recording medium 103 (steps S2, S3 of FIG. 4). After that, when the user logins into the MFP 20, and gives an instruction for printing based on the printing data (step S8), the MFP 20 carries out printing an image or images based on the printing data (step S9).

By such secret printing, printing is executed only when it is confirmed that a user who has given a printing instruction from the client apparatus 10 is present at the MFP 20. Therefore, this configuration is advantageous for avoiding information leakage especially for a case where a highly confidential document is printed.

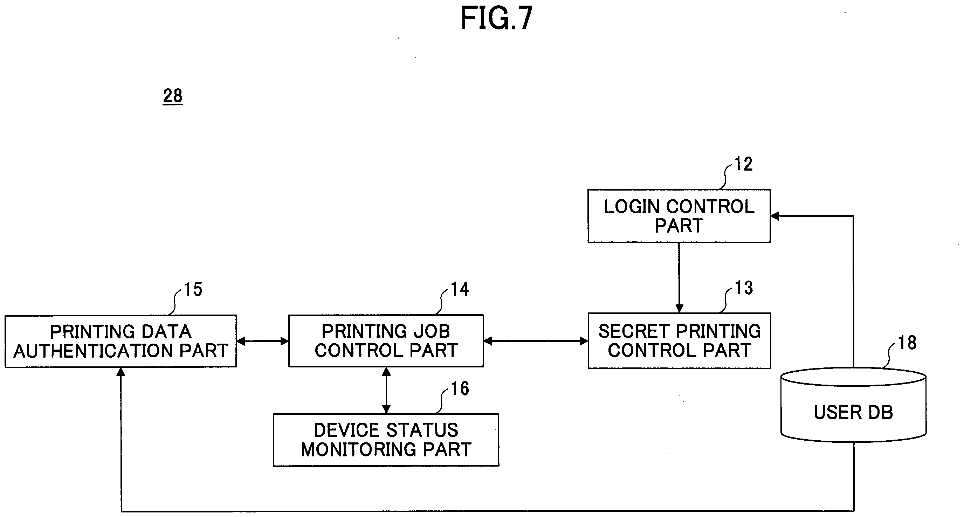

The MFP 20 includes the printing control part 28 for a case where such secret printing is carried out. FIG. 7 shows a functional configuration example of the printing control part 28. In FIG. 7, the printing control part 28 includes a login control part 12, a secret printing control part 13, a printing job control part 14, a printing data authentication part 15, a device status monitoring part 16 and a user DB 18. These parts are realized as a result of the program installed in the MFP 20 being executed by the CPU 101.

When secret printing is carried out, the data receiving part 21 of FIG. 3 receives printing data transmitted by the client apparatus 10, and stores the printing data in the data storing part 22. The data storing part 22 provides a storage area for spooling of printing data, and is provided in the recording medium 103, for example. The login control part 12 of the printing control part 28 of FIG. 7 controls a login process of an operator (user) for the MFP 20. At a time of a login process, authentication of an operator (user) is carried out based on user IDs and passwords registered in the user DB 18. The user DB 18 is a database that manages user identification information for each user with the use of the recording medium 103. As part of the user identification information, user IDs and passwords are included. The user DB 18 may be managed unitarily by a computer that is connected to the MFP 20 via the network 130. The secret printing control part 13 controls a process for receiving from an operator (user) an execution request (instruction for printing) for a printing job concerning printing data stored by the data storing part 22. In response to an execution request from an operator (user) for a printing job received by the secret printing control part 13, the printing job control part 14 causes the image outputting part 105 to print an image or images based on the printing data. The printing data authentication part 15 carries out authentication of printing data by comparing a user ID and a password included in printing data with user IDs and passwords registered in the user DB 18. The device status monitoring part 16 monitors various states of the MFP 20. For example, the device status monitoring part 16 monitors a state of each tray (to determine whether paper has run out), a state of toner of each color (whether toner has run out), and so forth. It is noted that the MFP 20 may include the device status monitoring part 16 even in a case where secret printing is not carried out.

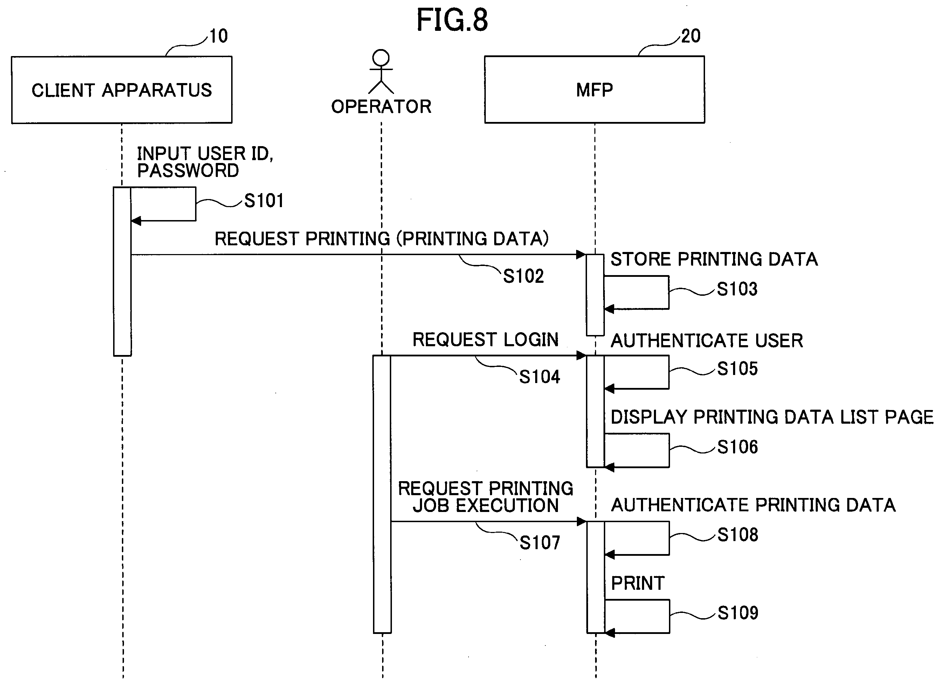

Below, a procedure of the MFP 20 will be described for a case where secret printing is carried out. FIG. 8 shows a sequence diagram for illustrating a process that the MFP 20 carries out. However, for the sake of convenience, in FIG. 8, an input of change information (step S6) and updating of printing setting information (step S7) are omitted.

In the client apparatus 10, in response to an input of an execution request for secret printing, the printer driver (not shown) requests and receives an input of a user ID and a password from a user (step S101) by using an authentication information input screen.

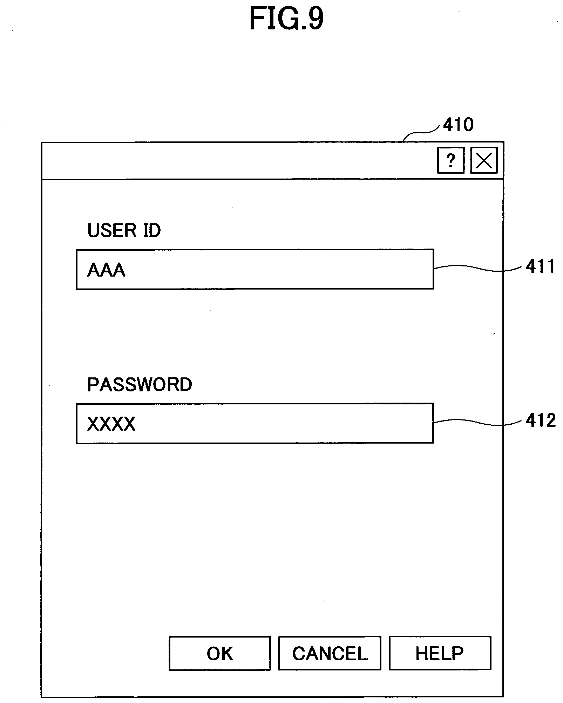

FIG. 9 shows one example of a display of the authentication information input screen. In FIG. 9, the authentication information input screen 410 has a user ID input area 411 and a password input area 412. The printer driver sets the user ID and password input from the authentication information input screen in printing data, and transmits the printing data to the MFP 20. It is noted that the authentication information input screen 410 is displayed, for example, as a result of a predetermined button provided on a printing setting screen for a user to set printing conditions (printing settings) being pressed.

The printer driver thus generates the printing data of document data to be printed, sets the input user ID and password in the printing data, and transmits the printing data to the MFP 20 as mentioned above (step S102). When receiving the transmitted printing data, the data receiving part 21 of the MFP 20 stores the printing data in the data storing part 22 (step S103). A printing job concerning the stored printing data is not carried out in synchronization with the reception of the printing data. That is, the printing job enters a locked state.

After that, when the user presses a login button provided on the operating part 109 as an operator of the MFP 20, the login control part 12 causes the display part 108 to display a login screen.

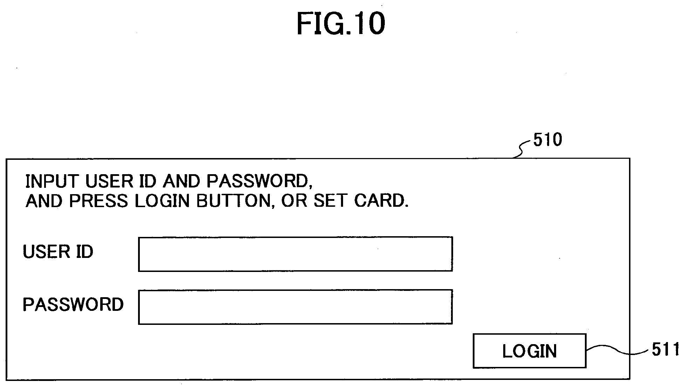

FIG. 10 shows an example of a display of the login screen. In FIG. 10, in the login screen 510, a message urging an input of a user ID and a password or a placement of a card 50 is displayed.

When the user sets a card 50 on the card reader 55 in a condition in which the login screen 510 is displayed on the display part 108, or the user inputs a user ID and a password from the login screen 510 (step S104), the login control part 12 compares a user ID and a password identified based on a card ID of the card 50 or the user ID and password input by the user, with a list of user IDs and passwords registered in the user DB 18, and thus carries out user authentication (step S105) . When the user authentication has failed, the login control part 12 denies a login of the user, and causes the display part 108 to display an error screen.

When the user authentication has succeeded, the secret printing control part 13 searches the data storing part 22 for the printing data (the printing data for which the login user (the authenticated user) has requested secret printing) in which the user ID that agrees with the user ID of the login user is set, and causes the display part 108 to display a printing data list screen including the search result (step S106).

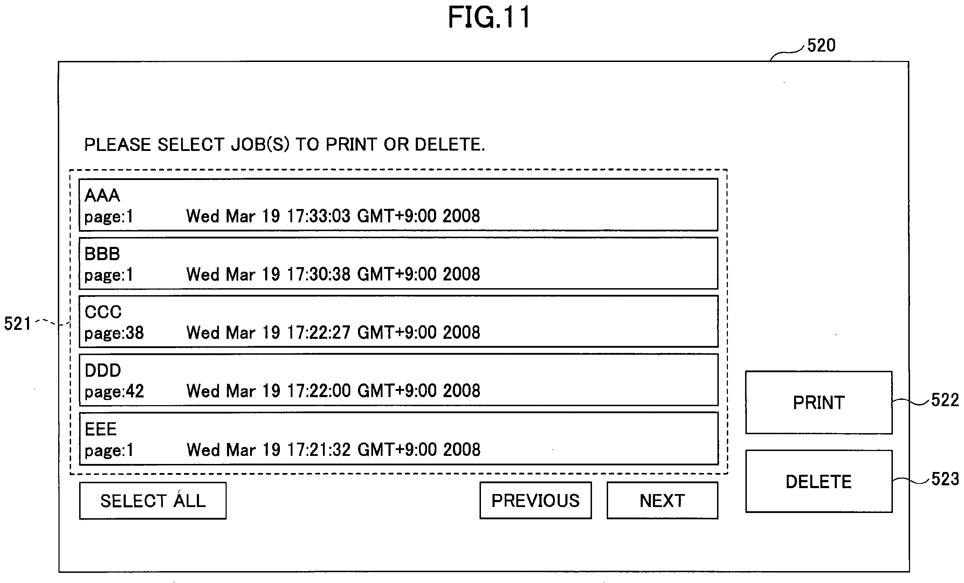

FIG. 11 shows an example of a display of the printing data list screen. This display example is a variant example of the display example described above with reference to FIG. 5. In FIG. 11, the printing data list screen 520 has a printing data list display area 521, a printing button 522 and a deleting button 523.

In the printing data list display area 521, a list of printing data (document names thereof) concerning the login user from among printing data stored by the data storing part 22 is displayed. When the deleting button 523 is pressed, the secret printing control part 13 deletes from the data storing part 22 printing data selected from the printing data list display area 521. In this case, the corresponding printing job is cancelled accordingly.

When the printing button 522 is pressed, the secret printing control part 13 requests execution of printing job(s) concerning one or more sets of printing data selected from the printing data list display area 521 of the printing job control part 14 (step S107).

The printing job control part 14 causes the printing data authentication part 15 to carry out authentication of the printing data that is the target(s) of the printing job(s) (step S108). The printing job control part 15 compares a user ID and a password included in each set of printing data with the list of user IDs and passwords registered in the user DB 18, and carries out authentication of the printing data. When the printing data is thus authenticated, the printing job control part 14 causes the printing processing part 106 and the image outputting part 105 (the image forming part 26 and printing carrying-out part 27) to carry out printing based on the corresponding sets of printing data (step S109). It is noted that, in a case where a right concerning a printing job is given to printing data for each user in the user DB 18, the printing job control part 14 may control execution of a printing job for each user according to the user's right. For example, when the login user has no execution right for any printing job, the printing job control part 14 denies execution of the printing job even when the printing data is authenticated. Further, when the login user has no execution right for color printing and the printing data concerning color printing, the printing job control part 14 denies execution of the printing job.

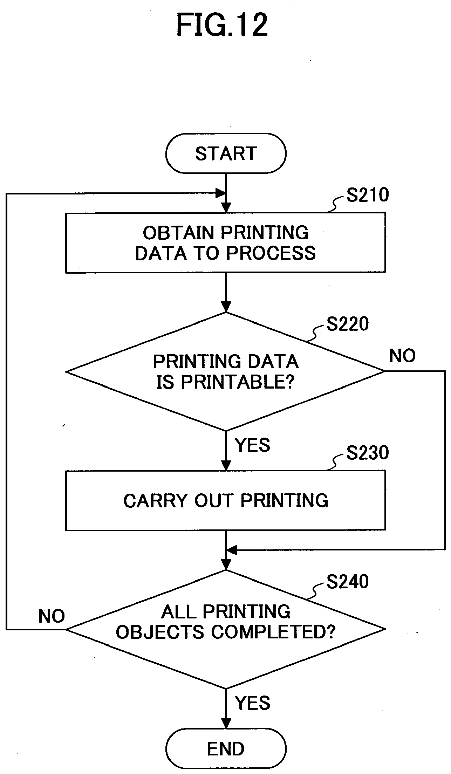

Next, details of step S109 will now be described. FIG. 12 shows a flowchart illustrating a procedure carried out by the printing job control part 14.

First, the printing job control part 14 obtains one set of printing data from a list of printing data as target (s) of printing job(s) (referred to as printing target list, hereinafter) (step S210). Next, the printing job control part 14 makes an inquiry into the device status monitoring part 16 and determines whether the MFP 20 is in a state such that printing based on the printing data can be carried out (whether printing conditions set in printing setting information included in the printing data can be met) (step S220). When it is determined that printing of the printing data can be carried out (Yes in step S220), the printing job control part controls the image outputting part 105 (image forming part 26 and the printing carrying-out part 27) and carries out the printing job(s) of the printing data (step S230).

On the other hand, when it is determined that printing based on the printing data is not possible (No in step S220), the printing job control part 14 skips (ignores) the corresponding printing job of the printing data. For example, in a case where a paper feeding tray designated by the printing data is empty, in a case where toner of a color to be used for the printing data has run out, or so, it is determined that printing based on the printing data is not possible.

Subsequent to step S230 or No in step S220, the printing job control part 14 determines whether any not yet processed printing data is in the printing target list (step S240). When not yet processed printing data exists (No in step S240), a process starting from step S210 is then carried out. Thus, jobs of the remaining printing data are continuously carried out. When not yet processed printing data does not exist (Yes in step S240), the process is finished.

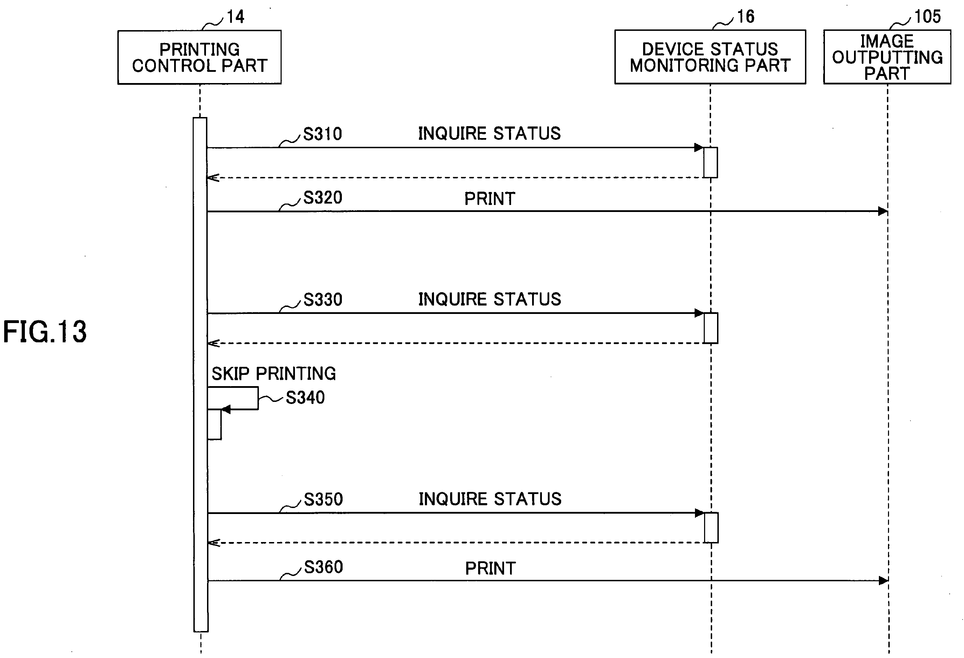

A specific case will now be described for the procedure of FIG. 12. FIG. 13 shows a sequence diagram illustrating a specific case of the procedure In FIG. 13, an example will be described in which three sets of printing data are selected as printing targets from the printing data list screen 520 (see FIG. 11) (in which a printing target list includes three sets of printing data). Paper sizes designated by the three sets of printing data are letter size, A-4 size and letter size, respectively. It is noted that, in FIG. 13, paper has run out in an A-4 paper feeding tray in the MFP 20.

First, the printing job control part 14 makes an inquiry into a state of a letter-size paper feeding tray in the MFP 20 for processing the first set of printing data designating letter size with the device status monitoring part 16 (step S310). An inquiry result (status information) indicates that letter size paper has not run out, and thus, the printing job control part 14 causes the image outputting part 105 to carry out printing based on the printing data (step S320).

Next, the printing job control part 14 makes an inquiry into a state of an A-4 paper feeding tray in the MFP 20 for processing the second set of printing data designating A-4 size with the device status monitoring part 16 (step S330). An inquiry result (status information) indicates that A-4 paper has run out, and thus, the printing job control part 14 skips the printing job of the printing data (step S340).

Next, the printing job control part 14 makes an inquiry into a state of a letter-size paper feeding tray in the MFP 20 for processing the third set of printing data designating letter size with the device status monitoring part 16 (step S350). An inquiry result (status information) indicates that letter size paper has not run out, and thus, the printing job control part 14 causes the image outputting part 105 to carry out printing based on the printing data (step S360).

As described above, by the printing control part 28, in a case where plural sets of printing data are to be printed and any set of printing data cannot be printed, that set of printing data is skipped and another printing job is continued. Accordingly, it is possible to avoid an interruption of a printing job of printing data that can be printed otherwise occurring because of an existence of printing data that cannot be printed.

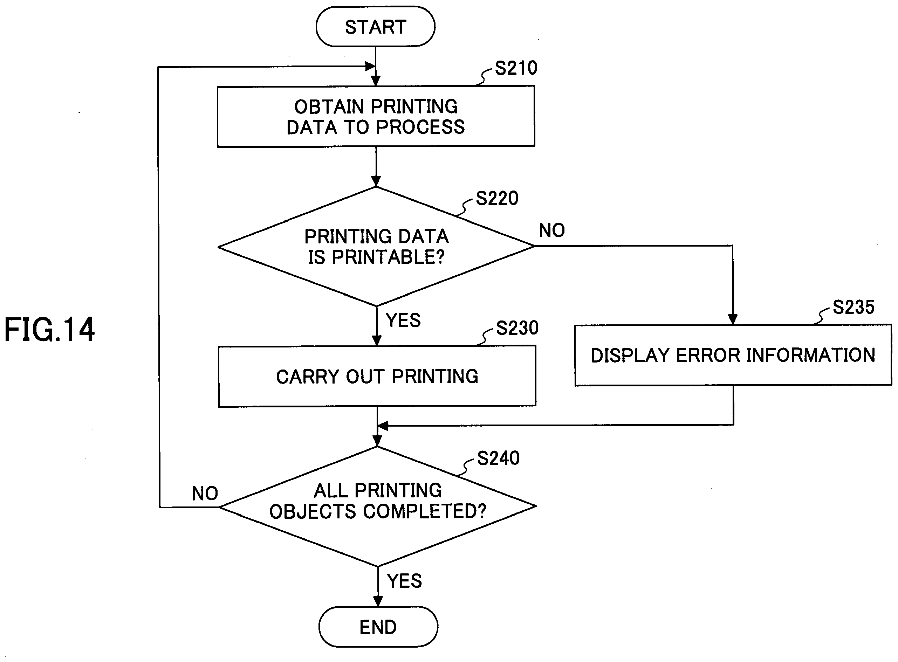

Next, a first variant example of the printing control part 28 will be described. FIG. 14 shows a flowchart illustrating a procedure carried out by the printing job control part 28 of the first variant example of the printing control part 28. In FIG. 14, the same step numbers are given to the same steps as those of FIG. 12, and description thereof may be omitted.

In FIG. 14, when it is determined that printing based on printing data to be processed is not possible (No in step S220), the printing job control part 14 causes the display part 108 to display information (error information) indicating that printing based on the printing data is not possible and a reason therefor (paper has run out, toner has run out or such) (step S235).

After displaying the error information, the printing job control part 14 proceeds with processing next printing data (step S240).

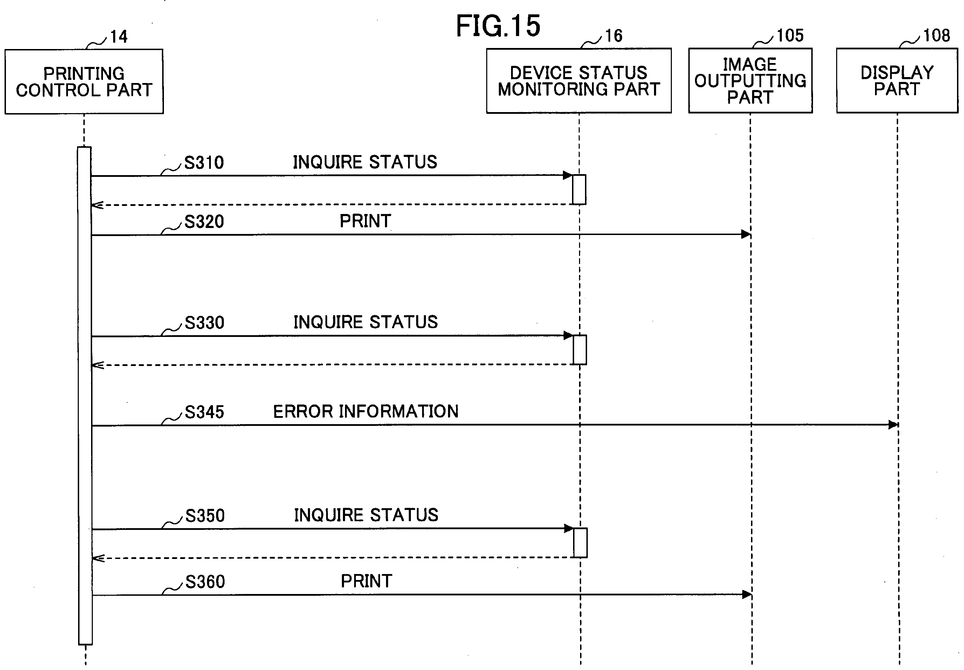

A specific case will be described for the procedure of FIG. 14. FIG. 15 shows a sequence diagram illustrating a specific case for the procedure carried out by the printing job control part 14 of the first variant example of the printing control part 28. In FIG. 15, the same step numbers are given to the same steps as those of FIG. 13, and description thereof may be omitted.

In FIG. 15, step S345 is carried out instead of step S340. In step S345, the printing job control part 14 causes the display part 108 to display error information indicating that printing is not possible because the A-4 paper feeding tray is in a state such that paper has run out. After that, the printing job control part 14 carries out the steps starting from step S350 continuously.

Thus, by the printing control part 28 in the first variant example, error information is displayed when printing targets include printing data that cannot be printed. Therefore, a user can recognize, based on the error information, that printing has failed because of error, and can carry out necessary recovery work or such.

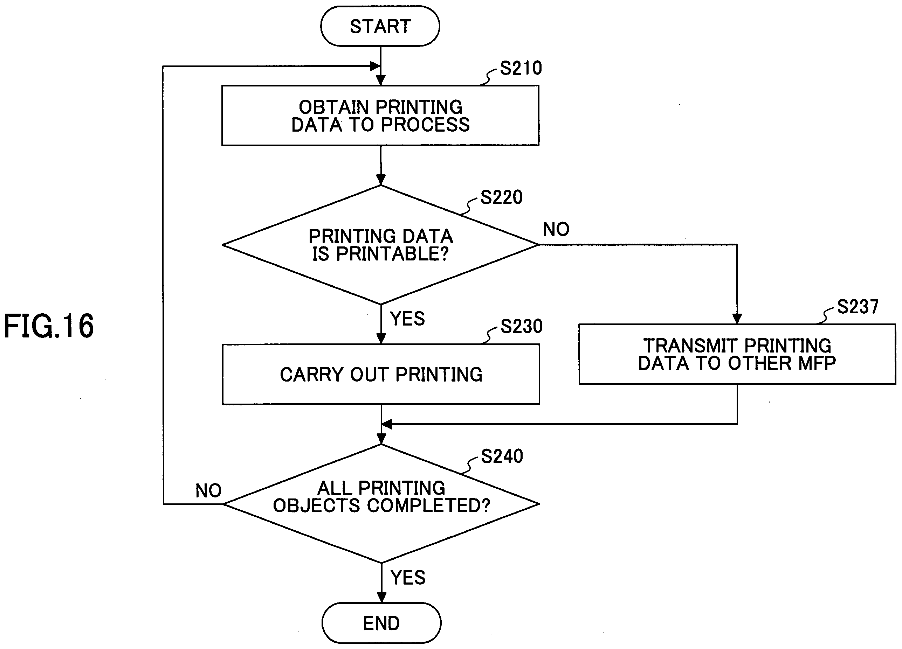

Next, a second variant example of the printing control part 28 will be described. FIG. 16 shows a flowchart illustrating a procedure carried out by the printing job control part 28 of the second variant example of the printing control part 28. In FIG. 16, the same step numbers are given to the same steps as those of FIG. 12, and description thereof may be omitted.

In FIG. 16, when it is determined that printing based on printing data to be processed is not possible (No in step S220), the printing job control part 14 transmits the printing data to another MFP to cause the other MFP to carry out printing based on the printing data (step S237).

After thus transmitting the printing data, the printing job control part 14 proceeds with processing next printing data (step S240).

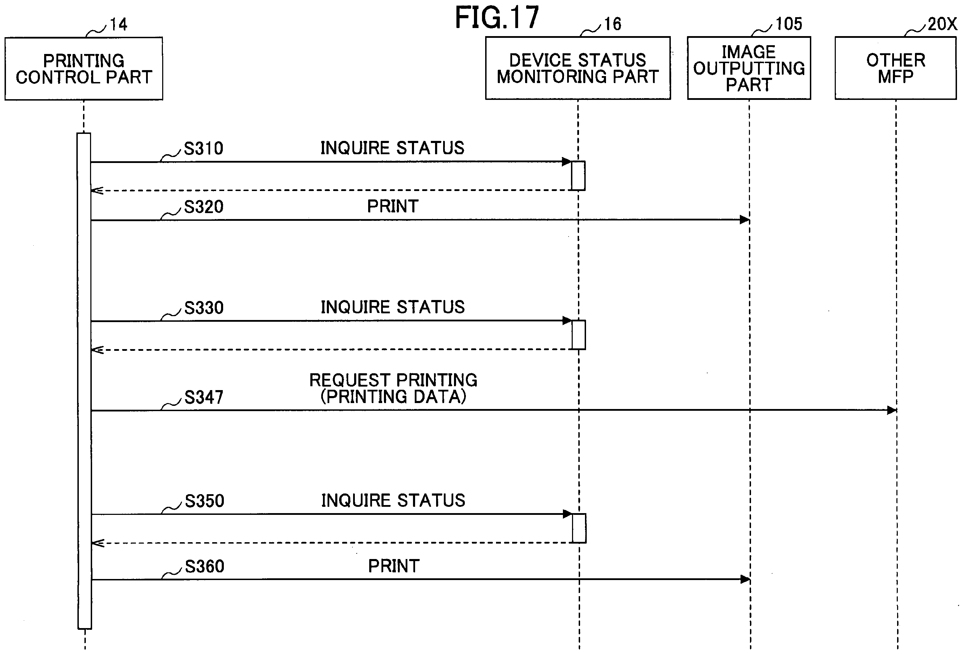

A specific case will be described for the procedure of FIG. 17. FIG. 17 shows a sequence diagram illustrating a specific case for the procedure carried out by the printing job control part 14 of the second variant example of the printing control part 28. In FIG. 17, the same step numbers are given to the same steps as those of FIG. 13, and description thereof may be omitted.

In FIG. 17, step S347 is carried out instead of step S340. In step S347, the printing job control part 14 transmits the printing data designating A-4 size to another MFP to cause the other MFP to carry out printing based on the printing data. After that, the printing job control part 14 carries out the steps starting from step S350 continuously.

Thus, by the printing control part 28 in the second variant example, in a case where plural sets of printing data are to be printed and any printing data cannot be printed, it is possible to cause another MFP to carry out printing based on that printing data.

The other MFP to which the printing is transmitted in step S237 as mentioned above may be previously set (case A), or, may be set by the user at a time when it is determined in step S220 that printing based on the printing data is not possible (case B). Further alternatively, the printing job control part 14 may automatically search for MFPs connected to the network, and transmit the printing data to a MFP obtained from the search (case C) . In any case, before transmitting the printing data to the other MFP, the printing job control part 14 may make an inquiry into a state of the other MFP, by using HTTP (Hyper Text Transfer Protocol), SNMP (Simple Network Management Protocol) or such, and transmits the printing data after thus confirming that the other MFP can carry out printing based on the printing data. Further, for the above-mentioned case A and case C, a fact that the printing data has been transmitted to the other MFP and an identifier or such of the other MFP may preferably be displayed by the display part 108.

In the MFP 20, an operator (user) can login by setting a card 50 onto the card reader 55. Below, a configuration of the login control part 12 and a procedure carried out by the login control part 12 for realizing login by using the card 50 (card authentication) will be described.

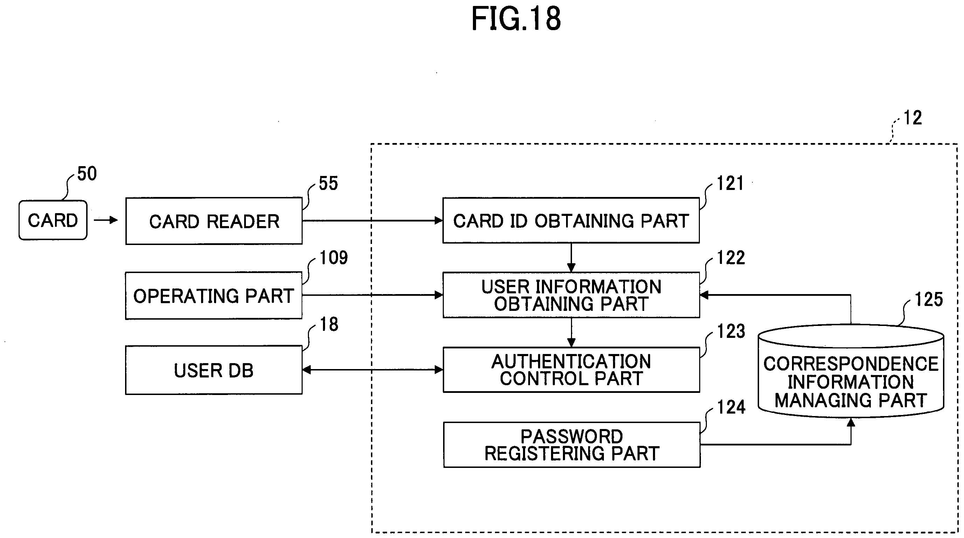

FIG. 18 shows an example of a configuration of the login control part 12. In FIG. 18, the login control part 12 includes a card ID obtaining part 121, a user information obtaining part 122, an authentication control part 123, a password registering part 124, and a correspondence information managing part 125.

The card ID obtaining part 121 obtains from the card reader 55 a card ID that the card reader 55 reads from- the card 50. The user information obtaining part 122 obtains from the correspondence information managing part 125 a user ID corresponding to the card ID obtained by the card ID obtaining part 121, and further, obtains from the operating part 109 a password that the user inputs to the operating part 109. The correspondence information managing part 125 is a storage area in the recording medium 103 used for managing correspondence information between card IDs and user authentication information. The authentication control part 123 carries out an authentication operation for the operator (user) (user authentication) based on the user ID and the password obtained by the user information obtaining part 122, based on user authentication information registered by the user DB 18. The password registering part 124, for the purpose of avoiding trouble otherwise occurring when a password is input each time of authentication, registers a password in a manner such that the password is associated with a corresponding card ID. Therefore, when a password is registered in the correspondence information managing part 125, the user information obtaining part 122 obtains a password corresponding to a card ID not from the operating part 109 but from the correspondence information managing part 125.

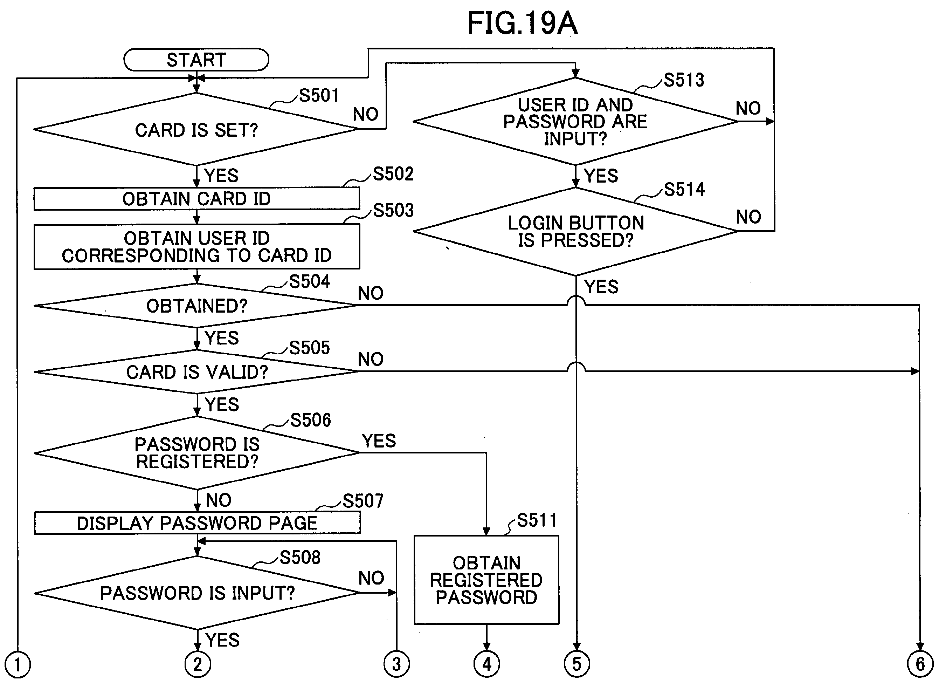

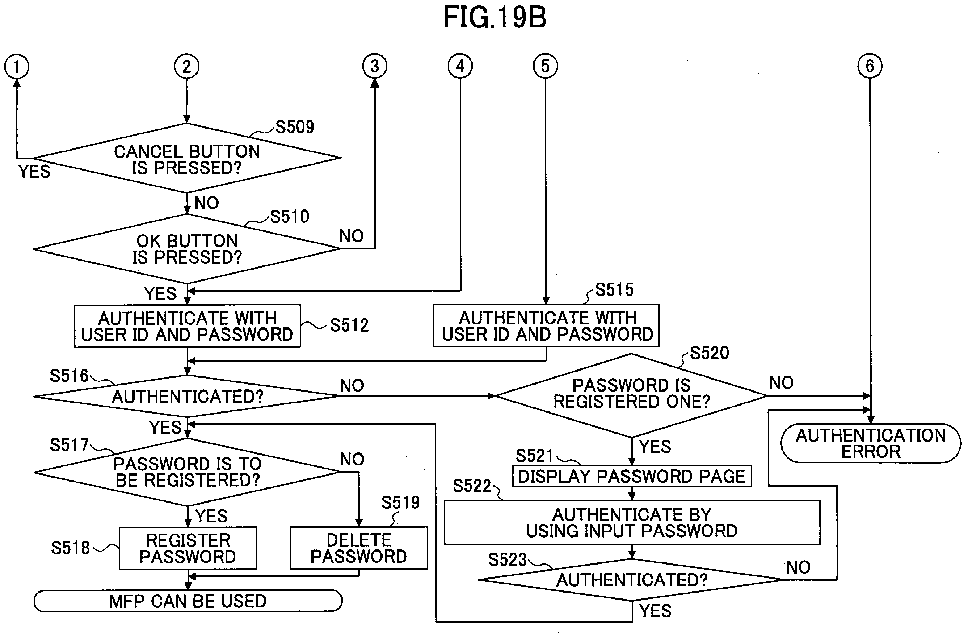

Below, a procedure of the login control part 12 will be described. FIGS. 19A and 19B show a flowchart illustrating a procedure of the login control part 12.

In a condition in which the user information obtaining part 122 causes the display part 108 to display the login screen 510 (see FIG. 10), when the user sets the card 50 on the card reader 55 (Yes in step S501), the card ID obtaining part 121 obtains from the card reader 55 the card ID that the card reader 55 reads from the card 50 (step S502) . It is noted that, to set the card 50 on the card reader 55 means, to cause the card 50 and the card reader 55 to enter a state such that the card reader 55 can read information recorded/stored in the card 50, for example, to insert the card 50 into the card reader 55, to hold the card 50 near to the card reader 55, or so.

Next, the user information obtaining part 122 obtains a user ID corresponding to the obtained card ID (referred to as a current card ID, hereinafter) from the correspondence information managing part 125 (step S503).

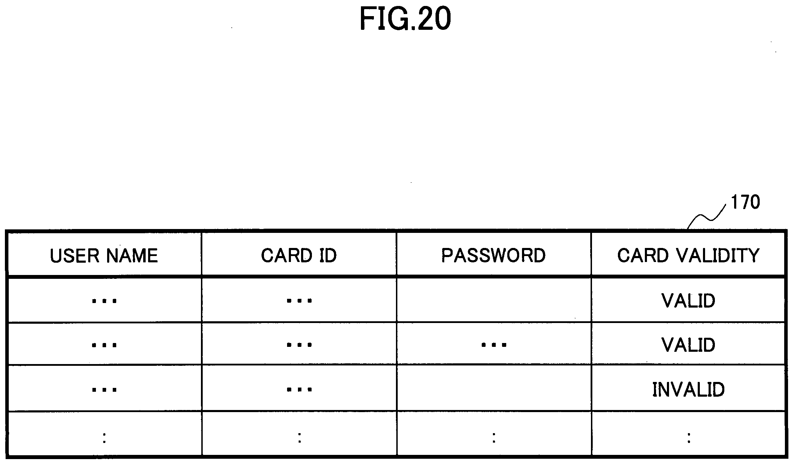

FIG. 20 shows an example of correspondence information managed by the correspondence information managing part 125. In FIG. 20, the correspondence information 170 holds a user name (user ID), a card ID, a password, and card validity for each user in such a manner that they are associated with each other. Therefor, in step S503, the user information obtaining part 122 obtains the user ID corresponding to the current card ID from the correspondence information managing part 125. It is noted that "card validity" means information indicating validity of a card 50. In a case where a card 50 is valid, authentication using the card 50 is regarded as being valid. In a case where a card 50 is invalid, authentication using the card 50 is regarded as being invalid.

It is noted that a password is necessarily registered in the correspondence information managing part 125. In a case where a password is registered for a current card ID, the user information obtaining part 122 causes the display part 108 to display a symbol (for example, "*********") in a password input field indicating that an input of a password is not necessary in the login screen 510.

When a user ID cannot be obtained (No in step S504), the user information obtaining part 122 determines that an authentication error has occurred. When a user ID can be obtained (Yes in step S504), the user information obtaining part 122 determines whether the card 50 is valid by reading a value of card validity (valid or invalid) associated with the current card ID in the correspondence information managing part 125 (step S505). When the card 50 is invalid (No in step S505), the user information obtaining part 122 determines that an authentication error has occurred.

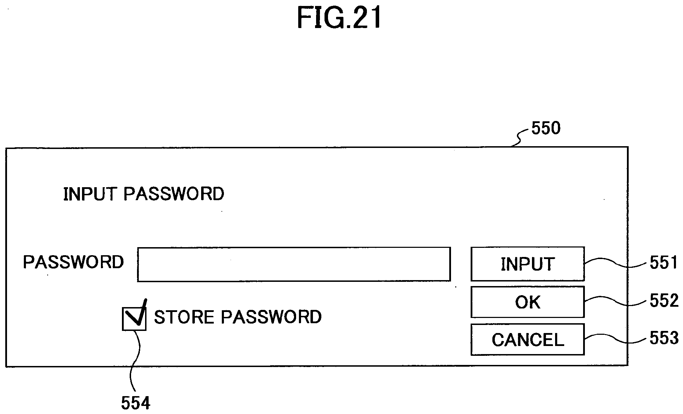

When the card 50 is valid (Yes in step S505), the user information obtaining part 122 determines whether a password is registered for the current card ID in the correspondence information managing part 125 (step S506). When a password is not registered (No in step S506), the user information obtaining part 122 causes the display part 108 to display a password screen 550 shown in FIG. 21 (step S507). After the user presses an input button 551 and a password is input by the user from the password screen 550 (Yes in step S508), when not a CANCEL button 553 (No in step S509) but an OK button 552 is pressed (Yes in step S510), the authentication control part 123 compares the user ID obtained in step S503 and the password input in step S508 with user IDs and passwords registered in the user DB 18, and carries out an authentication process (step S512).

On the other hand, when a password is registered for the current card ID in the correspondence information managing part 125 (Yes in step S506), the user information obtaining part 122 obtains the password (step S511). Next, the authentication control part 123 compares the user ID obtained in step S503 and the password with the user IDs and passwords registered in the user DB 18, and carries out an authentication process (step S512).

When authentication has succeeded (Yes in step S516), the password registering part 124 determines whether to register (store) the password input from the password screen 550 based on a state of a check button 554 in the password screen 550 (step S517). When the check button 554 is checked (Yes in step S517), the password registering part 124 registers the password in the correspondence information managing part 125 in such a manner as being associated with the current card ID (step S518) On the other hand, when the check button 554 is not checked (No in step S517), the password registering part 125 deletes a password registered for the current card ID from the correspondence information managing part 125 (step S519) . However, when no password is registered for the current card ID, deletion is not necessary.

A description will now be made for a case where, on the other hand, in a condition in which the login screen 510 is displayed, a card 50 is not set on the card reader 55 (No in step S501), a user ID and, if necessary, a password are input from the login screen 510 (Yes in step S513), and then, the LOGIN button is pressed (Yes in step S514). In this case, the user information obtaining part 122 obtains the user ID and password input from the login screen 510 (however, when a password is registered for the current card ID, the password is obtained), the authentication control part 123 compares the user ID and password with user IDs and passwords registered in the user DB 18, and carries out an authentication process (step S515) . Subsequently, a process starting from step S516 is carried out.

When authentication has failed (No in step S516), the user information obtaining part 122 determines whether the password used for the authentication is registered in the correspondence information managing part 125 (step S520). This determination may be made in such a manner that, in a case where a password registered in the correspondence information managing part 125 (referred to as registered password, hereinafter) is used, information indicating this fact is recorded in the memory 102, and the determination is made based on the memory. When the password used for the authentication is not a registered password (No in step S520), the authentication control part 123 determines that an authentication error has occurred.

When the password used for the authentication is a registered password (Yes in step S520), the user information obtaining part 122 again causes the display part 108 to display the password screen 550, and requests an input of a password of the user again (step S521). A reason for requesting an input of a password of the user again is as follows:
Recently, for the purpose of improving security, a password is periodically changed, in many cases. Therefore, such an inconsistency may occur that, although a password in the user DB 18 is updated, a password registered in the correspondence information managing part 125 is old. For the purpose that such an inconsistency can be easily treated, an opportunity to again input a new password (changed password) is given to a user in step S521.

When a password is input again from the displayed password screen 550, the user information obtaining part 122 obtains the password input from the password screen 550, and the authentication control part 123 compares the user ID obtained in step S503 and the password with user IDs and passwords registered in the user DB 18, and carries out an authentication process (step S522).

When the authentication has failed (No in step S523), the authentication control part 123 determines that an authentication error has occurred. When the authentication has succeeded (Yes in step S523), a process starting from step S517 is carried out. Therefore, when the check button 554 is checked, the password registered in the correspondence information managing part 125 is updated by the new password.

Thus, the MFP 20 manages correspondence information between card IDs and user IDs, and can determine a user ID based on a card ID. Further, for authentication in the MFP 20, not only a card ID but also an input of a password is required. Therefore, it is possible to achieve an authentication process of a security level the same as a security level of a highly functional IC card using a PIN (Personal Identification Number) even by using a card 50 in which only a card ID is recorded.

Further, the MFP 20 can store a password as being associated with a card ID, and use the password for authentication. Therefore, it is possible to omit an input of a password when using a card 50, and thus, it is possible to improve convenience.

Further, even when an inconsistency occurs between a registered password and a password managed by the user DB 18, an opportunity is given to a user for inputting a new password again in a series flow of an authentication process, and thus, it is possible to easily keep consistency of a system.

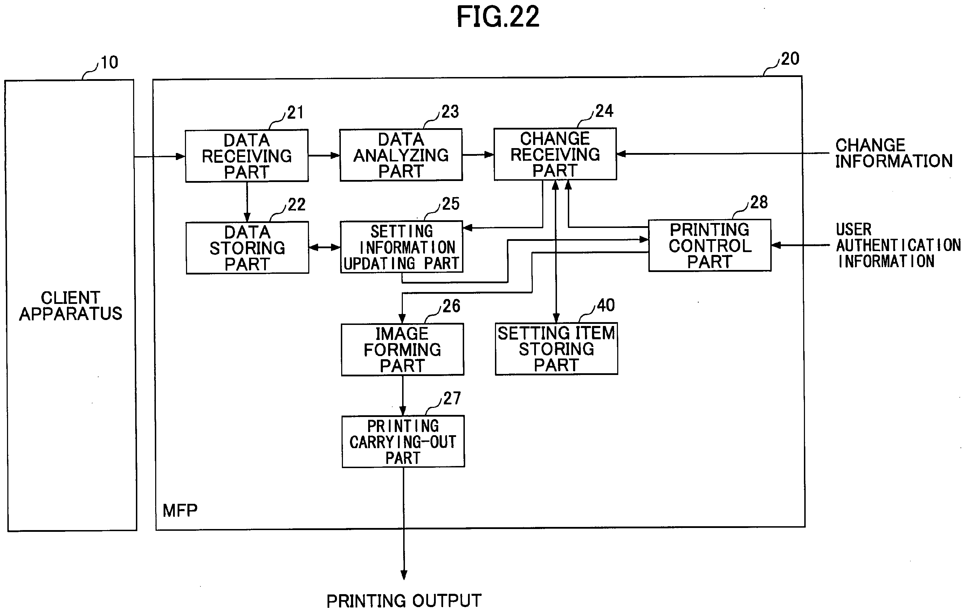

FIG. 22 shows a functional block diagram of a second example of an MFP 20. The second example has the same configuration as that of the first example described above with reference to FIGS. 1-21, except for points described below.

In addition to the configuration shown in FIG. 3, the MFP 20 shown in FIG. 22 includes a setting item storing part 40 that stores setting items to be displayed on the display part 108. The setting items stored by the setting item storing part 40 include only setting items that should be displayed, for the purpose of avoiding such a redundant display that it is troublesome for a manager (user) of the MFP 20 to scroll a displayed screen.

The change receiving part 24 causes the display part 108 to display setting items stored by the setting item storing part 40 and setting contents that are included in printing setting information included in printing data stored by the data storing part 22 and also correspond to the setting items stored by the setting item storing part 40. Since the number of setting items is thus made small, a setting change carried out by the user can be easily carried out.

In a case where the MFP 20 is shared by plural users, setting items can be stored by the setting item storing part 40 for each user. That is, setting items can be stored in such a manner as being associated with user identification information. User identification information is input by a user at a time of user authentication. Therefore, after user identification information is input by a user, a process is carried out based on the input user identification information, and a list of printing data stored by the data storing part 22 is displayed on the display part 108. Then, for printing data selected by the user from the list of printing data, setting items that are stored by the setting item storing part 40 and are associated with the user identification information, and setting contents that are included in printing setting information included in the selected printing data and correspond to the setting items are displayed on the display part 108.

The user sees the displayed setting contents, and can change, if necessary, the setting contents. When receiving thus-changed setting contents, the change receiving part 24 sends the changed setting contents to the setting information updating part 25. The setting information updating part 25 updates the printing setting information according to the changed setting contents. A process carried out after that is the same as that in the first example described above. That is, the image forming part 26 forms an image or images based on the updated respective setting contents of the printing data, and the printing carrying-out part 27 prints and outputs the formed image or images based on the updated respective setting contents of the printing data.

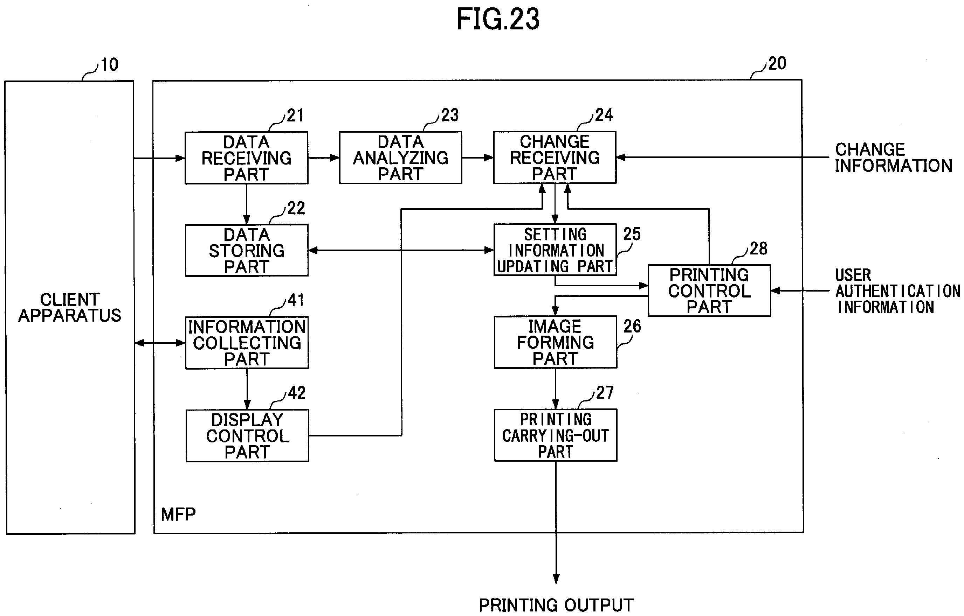

FIG. 23 shows a functional block diagram of a third example of a MFP 20. Except for the following points, the third example has the same configuration as that of the first example described above with reference to FIGS. 1-21.

The MFP 20 shown in FIG. 23 includes, in addition to the configuration shown in FIG. 3, an information collecting part 41 that makes an inquiry at predetermined intervals to devices from among those that the MFP 20 has, states of which devices change as the MFP 20 is used, and collects information of these devices. The MFP 20 in the third example further includes a display determining part 42 that determines, from the collected information, setting items and setting contents of printing setting information to be displayed on the display part 108.

The MFP 20 has devices such as a developing unit including a toner cartridge, a paper feeding unit, a finisher that carries out punching holes and binding with staples, an exposure device, a charging unit, a transfer unit, a fixing unit, a scanner, a feeder and so forth. To these devices, IC chips or such are provided, in which information for identifying the devices such as manufacturing numbers, product names and so forth, and information concerning current states of the devices such as a toner remaining amount, the number of remaining paper sheets, and so forth, is stored.

As devices among the above-mentioned devices the MFP 20 has, states of which devices change as the MFP 20 is used, the following devices can be cited. That is, the developing unit in which a toner remaining amount is reduced as the MFP 20 is used, the paper feeding unit in which the number of remaining paper sheets is reduced as the MFP 20 is used, and the finisher in which the number of remaining staples is reduced as the MFP 20 is used, can be cited.

The information collecting part 41 makes an inquiry at predetermined intervals to these devices, and collects information concerning the devices such as a toner remaining amount for each color, the number of remaining paper sheets, the number of remaining staples, and so forth, from the IC chips or such provided in the devices. The intervals at which an inquiry is made may be, for example, any intervals It is noted that the intervals are preferably shorter for a device for which a change of a state is sharp.

For example, when detecting from the collected information that a toner remaining amount is equal to or less than a predetermined amount, in a case where the number of copies to be printed is so large as to be equal to or more than 10, and settings are made such that "both-sides printing is not to be carried out" and "collecting printing is not to be carried out", the display determining part 42 can determine to display these setting items and setting contents for the purpose of urging a user to change the setting contents. In this case, the display determining part 42 sends instructions to the change receiving part 24, which causes the display part 108 to display the setting contents accordingly.

The display determining part 42 can hold a display condition for setting items to be displayed. For example, a display condition is such that, as mentioned above, "when a toner remaining amount is equal to or less than a predetermined amount, the number of copies to be printed is equal to or more than 10, and settings are made such that neither both-sides printing nor collecting printing is to be carried out, the corresponding setting items and setting contents are to be displayed". Therefore, the display determining part 42 can determine setting items and setting contents to be displayed based on such a display condition.

The user sees the setting items and setting contents displayed on the display part 108, and can recognize that a toner remaining amount is small, and it is better to change settings. Then, for example, the user can change setting contents of a both-sides printing setting into "to carry out both-sides printing", and/or setting contents of a collecting printing setting into "2" (pages), "4" (pages) or such, so as to reduce the number of copies for the purpose that all printing and outputting operations based on the printing data can be completed within the toner remaining amount.

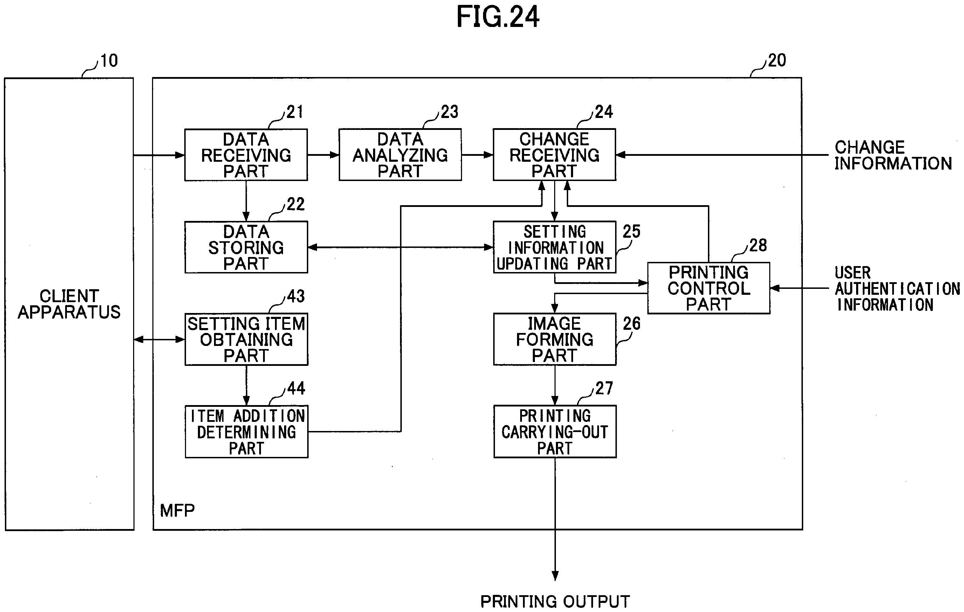

FIG. 24 shows a functional block diagram illustrating a fourth example of a MFP 20. The fourth example has the same configuration as that of the first example described above with reference to FIGS. 1-21, except for the following points.

In addition to the configuration of the first example shown in FIG. 3, the MFP 20 in the fourth example has a setting item obtaining part 43 that makes an inquiry into respective devices included in the MFP 20 at a time of starting up of the MFP 20, i.e., power supply in the MFP 20 is turned on, determines, from information collected from the respective devices in response to the inquiry, which devices can be used, and obtains setting items of devices that can be used, as setting items for which user's setting can be carried out. The MFP 20 in the fourth example further has a item addition determining part 44 that compares setting items included in printing setting information included in printing data with setting items obtained by the setting item obtaining part 43, and determines whether there is a setting item that is to be added.

There may be a case where setting items for printing settings set from the client apparatus 10 are different from setting items that can be actually set in the MFP 20. For example, the above-mentioned case can be a case where the printer driver of the client apparatus 10 is a device common driver or such, and thus, the printer driver does not cover all the functions that the MFP 20 has, or a case where an optional function is added to the MFP 20. For example, in a case where the MFP 20 does not originally have a finisher, and a finisher is afterward added as an optional device, the devices that the MFP 20 has change accordingly. The thus- added device is a device that can be used. However, if a user does not recognize the added device (finisher), setting items and setting contents concerning the finisher are not set from the client apparatus 10 by the user.

Therefore, the setting item obtaining part 43 obtains setting items that can be set, from the information of the devices collected as mentioned above. For example, in a case where the finisher is added to the MFP 20 as mentioned above, and information of the finisher is obtained as information of a device that the MFP 20 has by the setting item obtaining part 43, the setting item obtaining part 43 obtains setting items of the finisher, such as a punching hole setting, a binding with staples setting, and so forth. In a case where the finisher is such that only binding with staples is available, a binding with staples setting is obtained as a setting item by the setting item obtaining part 43.

The item addition determining part 44 determines setting items and setting contents of printing setting information to be displayed by the display part 108. For example, in a case where the finisher is added as mentioned above, a punching hole setting and a binding with staples setting are available, and thus, the item addition determining part 44 determines to add setting items, i.e., a punching hole setting and a binding with staples setting to setting items to be displayed by the display part 108. At this time, setting contents of these setting items are set as "OFF" as default settings.

The user sees the setting items "punching hole setting" and "binding with staples setting" thus displayed on the display part 108, and therefore recognizes that these functions can be used. Then, when the user wishes to use these functions, the user changes the default setting contents "OFF" of these setting items into "ON", and/or further, inputs specific positions of punching holes and/or specific positions of binding with staples to set as setting contents for the setting items.

When the user thus changes the settings (setting items and setting contents), the change receiving part 24 receives corresponding change information, and the setting information updating part 25 adds the setting items to the printing setting information according to the change information. The setting information updating part 25 further adds setting contents to the printing setting information according to the change information and updates the printing setting information of the printing data. In a case where the change information further indicates a change of other setting contents, the setting information updating part 25 changes corresponding setting contents and updates the printing setting information of the printing data.

Next, when the user inputs an instruction to execute printing to the MFP 20, the image forming part 26 forms image or images based on the updated printing data, and the printing carrying-out part 27 prints the image or images on paper, and outputs printouts.

It is noted that there may be another case where, in reverse to the above-mentioned case, a device that exists in the MFP 20 is made not available. In such a case, no special setting is necessary since the device is merely not used. However, it is possible to avoid display of corresponding setting items for a user by the display part 108 so that the user can be prevented from carrying out setting for the setting items. Alternatively, it is also possible to display such a message on the display part 108 that the device is not available. Further, since the item addition determining part 44 has the function of comparing setting items, the item addition determining part 44 can detect unnecessary setting items, and the setting information updating part 25 can delete the unnecessary setting items at a time of updating.

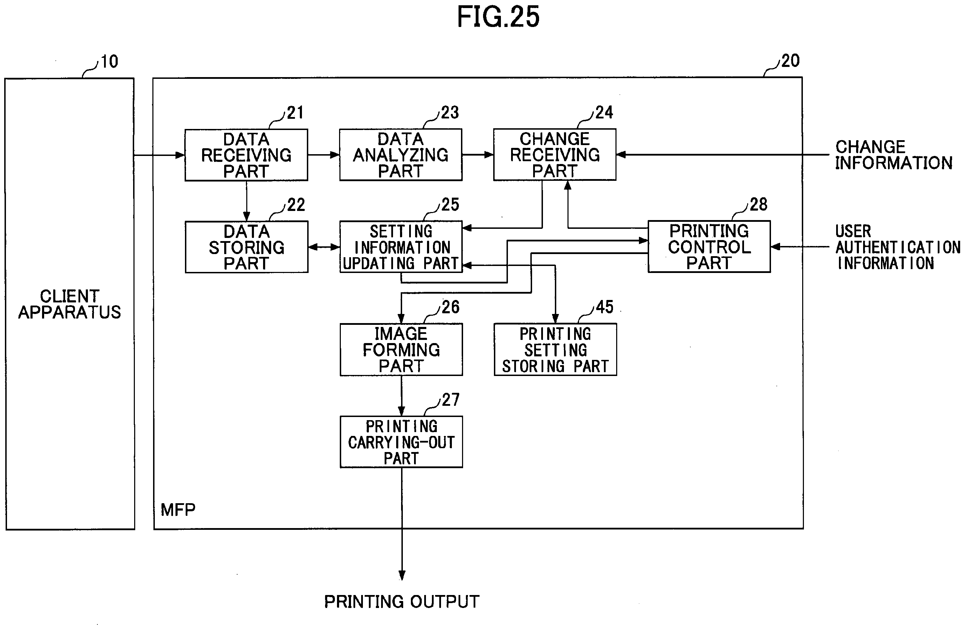

FIG. 25 shows a functional block diagram illustrating a first embodiment of a MFP 20. The first embodiment has the same configuration as that of the first example described above with reference to FIGS. 1-21, except for the following points.

In addition to the first example with reference to FIG. 3, the MFP 20 shown in FIG. 25 has a printing setting storing part 45 that stores printing settings that are previously set in a manner as being associated with user identification information. The user identification information includes a user ID and a password as mentioned above, and the printing settings include setting items and setting contents.

The printing setting storing part 45 can store specific setting items and setting contents for each user. For example, for a user A, setting contents "2" (pages) can be stored for a setting item "collecting printing setting", and, for a user B, setting contents "color" can be stored for a setting item "monochrome/color printing setting". Such printing settings are those that respective users previously set and are registered by the printing setting storing part 45.

In the above-mentioned example, even when the user A sets setting contents "OFF" for the setting item "collecting printing setting" from the client apparatus 10, and outputs printing data for the MFP 20, since the setting contents "2" (pages) are set for setting item "collecting printing setting" by the printing setting storing part 45 in the MFP 20 as mentioned above, the setting information updating part 25 rewrites the above- mentioned setting contents "OFF" in printing setting information included in the printing data into "2" (pages) according to the same setting contents stored by the printing setting storing part 45 for the corresponding setting item "collecting printing setting", and updates the printing data. Thereby, even when the user A does not input change information in the MFP 20, it is possible to carry out printing that is controlled automatically as being suitable to a type of a device (the MFP 20) or in a manner desired by the user A.

In the first embodiment, the setting information updating part 25 can thus update printing setting information included in printing data stored by the data storing part 22 by using printing settings stored by the printing setting storing part 45 as change information in a case where the change receiving part 24 has not received change information for a predetermined time period.

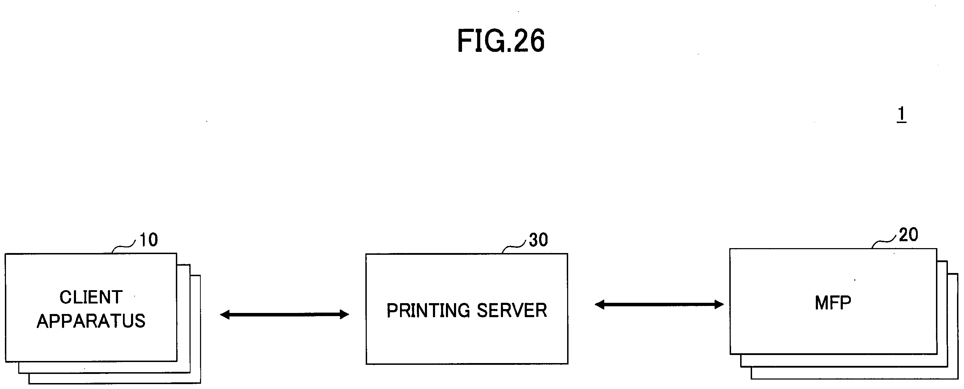

FIG. 26 shows a configuration example of a printing system (information processing system) in any one of fifth through ninth examples and the second embodiment of the present invention. The printing system shown in FIG. 26 includes a printing server 30, one or more MFP(s) 20 as an example of image forming apparatus(es) and one or more client apparatus(es) 10. These apparatuses 30, 20 and 10 are connected together by a network such as a LAN, the Internet or such. It is noted that, as mentioned above, the printing system in any one of the fifth through ninth examples and the second embodiment can use MFP(s) as an example of image forming apparatus(es). However, one(s) applicable as image forming apparatus(es) is not limited to MFP(s). That is, the MFP (s) 20 in the printing system in any one of the fifth through ninth examples and the second embodiment may be a laser printer (LP) that has a sole function of a printing device, or such.

In the printing system according to any one of the fifth through ninth examples and the second embodiment, a user creates printing data by directly operating the client apparatus 10, and transmits the printing data from the client apparatus 10 to the printing server 30, and the printing server 30 stores the printing data. Then, by directly operating the MFP 20, the user causes the printing server 30 to transmit the printing data stored by the printing server 30 as mentioned above to the MFP 20, and outputs an image or images based on the printing data from the MFP 20.

The client apparatus 10 is a computer that has data (document data, image data or such) to be printed, and transmits printing data including the data to be printed, to the printing server 30, in response to a user's input of a printing instruction. The client apparatus 10 can request an input of user authentication information (user identification information, for example, a user ID and a password) from the user when a printing instruction is input by the user, and can include the user authentication information in the printing data.

The printing server 30 is a computer ;(information processing apparatus) that stores printing data received from the client apparatus 10. The printing server can carry out user authentication based on user authentication information included in the received printing data, and store the printing data concerning a corresponding printing request only when the authentication has succeeded. In this case, an authentication server can be provided separately, and the printing server 30 can cause the authentication server to carry out the authentication.

The MFP 20 acting as an image forming apparatus has a hardware configuration described above with reference to FIG. 2, obtains printing data stored by the printing server 30 in response to a user's printing instruction, and prints an image or images based on the obtained printing data. The MFP 20 can request an input of user authentication information (user identification information) from the user, and carry out an authentication operation based on the input user authentication information. The authentication operation is carried out according to a procedure described above with reference to FIGS 7-21, for example. In this case, an authentication server can be provided separately, and the MFP 20 can cause the authentication server to carry out the authentication operation. In this case, the MFP 20 can obtain the printing data obtained from the printing server 30 only when the authentication has succeeded.

It is noted that the printing server 30 can also be provided as plural printing servers 30.

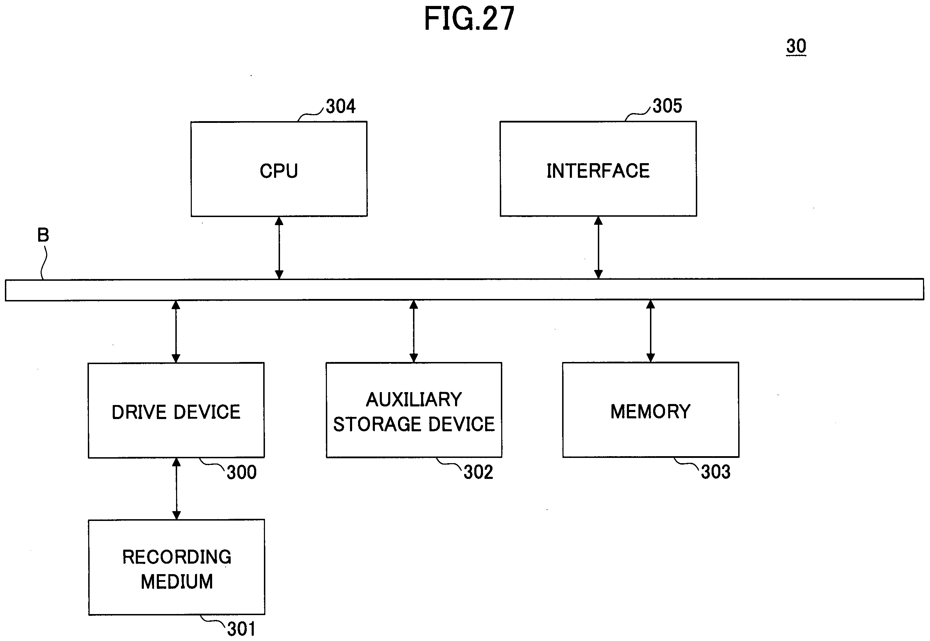

FIG. 27 shows a hardware configuration example of the printing server 30. The printing server 30 of FIG. 27 includes a driver device 300, an auxiliary storage device 302, a memory 303, a CPU 304 and an interface 305, which are mutually connected by a bus B.

A program for performing operations of the printing server 30 is provided by means of a recording medium 301 such as a CD-ROM. Then when the recording medium storing the program is set in the drive device 300, the program is installed in the auxiliary storage device 302 from the drive device 300. However, such installing of the program can be carried out not only by using the recording medium 301 but also can be downloaded by using a network from another computer. The auxiliary storage device 301 stores the installed program, and also stores necessary files, data and so forth.

The memory 303 stores the program read from the auxiliary storage device 302 when a starting-up instruction for the program is given. The CPU 304 carries out functions of the printing server 30 according to the program stored by the memory 303. The interface 305 is used for connecting to the network.

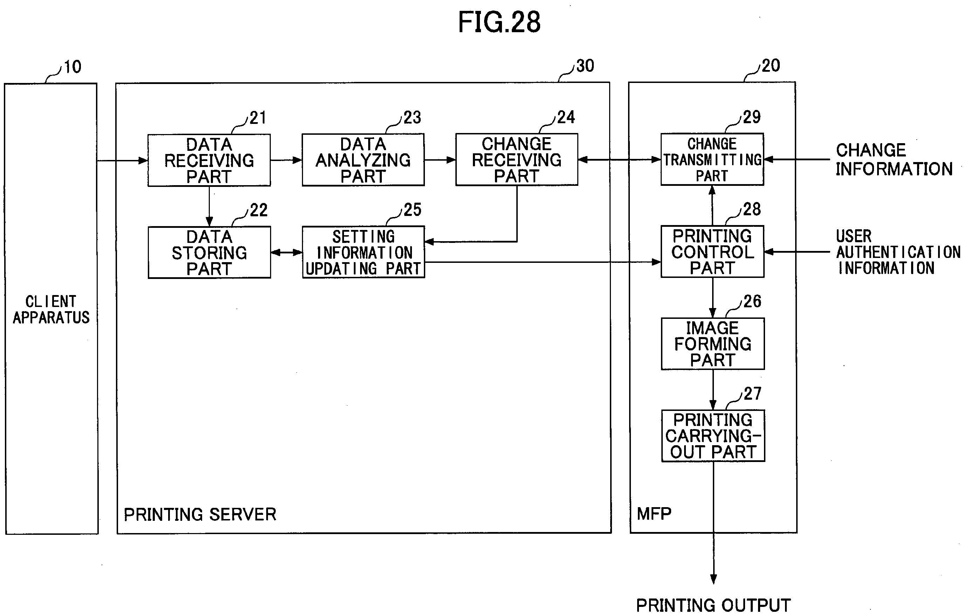

With reference to FIG. 28, a printing system according to the fifth example will now be described. The printing server 30 in the printing system includes a data receiving part 21 that receives printing data created in the client apparatus 10 and converted by the printer driver, a data storing part 22 that stores the received printing data, and a data analyzing part 23 that analyzes the printing data. These parts are realized as a result of the program installed in the printing driver 30 being executed by the CPU 304. The data analyzing part 23 analyzes printing setting information included in the printing data, and recognizes setting items and setting contents included in the printing setting information.

Further, the printing server 30 includes a change receiving part 24 that receives an input of change information from a user via the MFP 20, and a setting information updating part 25 that updates the printing setting information included in the printing data stored by the data storing part 22, according to the change information received by the change receiving part 24. Also these parts are realized as a result of the program installed in the printing server 30 being executed by the CPU 304.

On the other hand, the MFP 20 includes a change transmitting part 29 that transmits the change information to the change receiving part 24 of the printing server 30 when the change information is input by a user to the MFP 20, under the control of the printing control part 28 in a case where secret printing is carried out. The printing control part 28 has the same configuration as that included in the MFP 20 in any one of the first through fourth examples and the first embodiment described above. The MFP 20 further includes an image forming part 26 that forms an image or images based on updated printing setting information in response to an instruction from a user, and a printing carrying-out part 27 that prints on a paper sheet (s) the image or images formed based on the updated printing setting information, and thus, outputs the image or images. These parts correspond to the image processing part 106 and the image outputting part 105 described above with reference to FIG. 2.

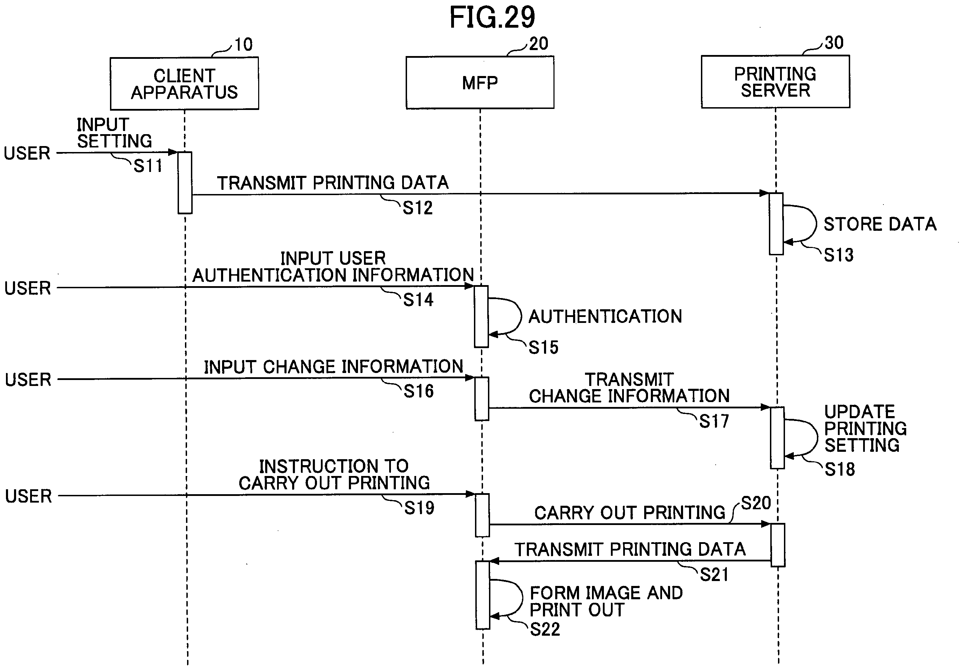

The MFP 20 can be configured to carry out secret printing, and in this case, the MFP 20 includes the printing control part 28. The printing control part 28 receives an input of user authentication information (user identification information) in step S14 of FIG. 29 described below and carries out user authentication in step S15. When the user authentication has succeeded, the printing control part 28 controls the change transmitting part 29, and causes the change transmitting part 29 to transmit the change information input to the change receiving part of the printing server 30. As a result, updating of the printing setting information according to the change information by the setting information updating part 25 of the printing server 30 can be carried out.

Further, the printing control part 28 of the MFP 20 outputs printing data transmitted from the setting information updating part 25 of the printing server 30 to the image forming part 26, the image forming part 26 forms an image or images, and the printing carrying-out part 27 prints the image or images based on the printing data from the MFP 20. The printing control part 28 and the change transmitting part 29 can be realized as a result of the program installed in the MFP 20 being executed by the CPU 101. It is noted that, in a case where the MFP 20 has a configuration in which the printing control part 28 is not provided, printing data transmitted from the setting information updating part 25 of the printing server 30 is directly provided to the image forming part 26, the image forming part 26 forms an image or images, and the printing carrying-out part 27 prints the image or images based on the printing data from the MFP 20.

The printing server 30 receives printing data from the printer driver mounted in the client apparatus 10, stores the printing data in the data storing part 22 and receives, if any, a change of printing setting information from the user based on change information transmitted via the change transmitting part 29 of the MFP 20, until receiving an instruction for printing execution from the user.

The user can input change information from the operating part 109 with keys or the operations panel, for example, of the MFP 20 in step S16 of FIG. 29. At this time, by using communications between the MFP 20 and the printing server 30, the change transmitting part 29 of the MFP 20 can obtain printing setting information currently set in printing data stored by the data storing part 22 of the printing server 30 via the change receiving part 24 of the printing server 30, and cause the display part 108 to display the printing setting information. Thereby, the user can recognize setting items and corresponding setting contents, and can carry out a setting change based thereon.

It is noted that, identification information (for example, IP address) of the printing server 30, which is used by the MFP 20 for obtaining from the printing server 30 printing setting information of printing data stored by the data storing part 22 of the printing server 30, is previously registered in the recording medium 103 of the MFP 20. By using the registered identification information, the MFP 20 communicates with the printing server 30, from which the MFP 20 can obtain the printing setting information.

The change of the printing setting information is such that, for example, although the user sets setting contents "both-sides printing is not to be carried out" at a time of inputting a printing instruction from the client apparatus 10, the user then changes the setting contents into "both-sides printing is to be carried out" for the purpose of saving paper sheets to be used for the printing .

In this case, when the user changes the setting contents from "both-sides printing is not to be carried out" into "both-sides printing is to be carried out" from the operating part 109 with keys or the operations panel of the MFP 20, the change receiving part 24 of the printing server 30 receives corresponding change information from the change transmitting part 29 of the MFP 20 (steps S16, S17 of FIG. 29), and sends the change information to the setting information updating part 25. The setting information updating part 25 then updates the corresponding setting contents of the printing setting information included in the printing data according to the sent change information (step S18 of FIG. 29). In this case the setting contents are rewritten into "both-sides printing is to be carried out".

After thus carrying out the setting change to the printing setting information of the printing data stored by the data storing part 22, the user confirms the changed setting contents from the display part 108 of the MFP 20. Also at this time, as mentioned above, by using communications between the MFP 20 and the printing server 30, the change transmitting part 29 of the MFP 20 can obtain the printing setting information currently set in the printing data stored by the data storing part 22 of the printing server 30 via the change receiving part 24 of the printing server 30, and display the printing setting information by the display part 108 of the MFP 20. The user can press a printing execution button displayed on the display part 108 of the MFP 20 to input an instruction for printing (step S19 of FIG. 29).

The printing control part 28 responds thereto, and, by using communications between the MFP 20 and the printing server 30, receives the printing data in which the printing setting information is updated as mentioned above from the setting information updating part 25 of the printing server 30 (steps S20 and S21), and sends the printing data to the image forming part 26.

Also in this case, as mentioned above, the identification information (for example, IP address) of the printing server 30, which is used by the MFP 20 for obtaining from the printing server 30 printing data stored by the data storing part 22 of the printing server 30, is previously registered in the recording medium 103 of the MFP 20. By using the registered identification information, the MFP 20 can communicate with the printing server 30, from which the MFP 20 can obtain the printing data.

The image forming part 26 of the MFP 20 forms an image or images based on the printing data sent from the printing control part 28. At this time, the image forming part 26 forms an image or images according to the setting contents such as a character size, a margin, the number of lines, the number of characters per line, a selection between monochrome printing and color printing, whether to carry out toner saving and the number of pages to be printed into one paper sheet, for example. Then, the printing carrying-out part 27 prints the image or the images according to the setting contents such as the number of copies, whether to carry out both-sides printing, whether and which positions to punch holes, and whether and which positions to bind with staples, for example (step S22).

When color printing is set in the printing setting information, the image forming part 26 forms toner images with toners of respective colors. When the number of copies as being 2 and punching of two holes on the left side of a paper sheet are set in the printing setting information, the printing carrying-out part 27 carries out color printing on two paper sheets, punches two holes on the left side of each paper sheet, and ejects the paper sheets to an ejecting tray.

With reference to FIG. 29, a specific process will be described in detail. In step S11, a user uses the client apparatus 10 such as a PC, starts an application, and creates a document. When printing the created document, the user designates a destination to which the document is output, carries out printing settings such as a range of printing pages, the number of copies, a monochrome/color printing setting, a collecting printing setting, a paper size setting and a both-sides printing setting and toner saving setting, for example, and inputs an instruction for the destination to output printing data.

In step S12 of FIG. 29, the thus-prepared document data and printing setting information are converted into printing data by the printer driver, and the printing data is transmitted to the destination. At this time, when other printing data is already stored in the destination, the printing data is temporarily stored in the client apparatus 10 until the other printing data is processed. In the fifth example, the destination is the printing server 30. At this time, when the other printing data stored in the printing server 30 is processed and an available memory area is thus created in the printing server 30, the printing data temporarily stored in the client apparatus 10 is then transmitted to the printing server 30 via the network. The printing server 30 stores the thus-transmitted printing data (step S13 of FIG. 29) until the user inputs an instruction. In response to the instruction being input to the printing server 30 by the user (step S19, S20 of FIG. 29) from the MFP 20, the printing server 30 reads the stored printing data, and transmits the read printing data to the MFP 20 (step S21), under the condition that user authentication (steps S14 and S15) has succeeded by the MFP 20 in a case where secret printing is carried out. The MFP 20 then carries out printing based on the transmitted printing data (step S22).

Since the MFP 20 does not carry out printing until the user inputs the instruction as mentioned above, the user can change printing settings (printing setting information) included in the printing data stored in the printing server 30 from the MFP 20 (steps S16, S17, S18) until the user inputs the above-mentioned instruction.

When using the MFP 20, in a case where secret printing is carried out and user authentication is required, the user inputs user identification information (user authentication information) by using the operating part 109 with keys or the operations panel (step S14 of FIG. 29). The MFP 20 determines, based on user identification information previously registered and stored in the memory or such, whether there is already registered user identification information that agrees with the input user identification information, and allows a further operation by the user when it is determined that there is already registered user identification information that agrees with the input user identification information (step S15 of FIG. 29). For this purpose, the MFP 20 can include the printing control part 28.

On the other hand, when it is determined that there is no already registered user identification information that agrees with the input user identification information, the printing control part 28 requires a new registration of user identification information from the user, or denies a further operation by the user. For the sake of convenience, it is assumed that the printing control part 28 denies an operation by the user in this case. User identification information includes, for example, a user ID and a password, which may include characters, numerals and so forth.

The printing server 30 includes the recording medium 301 acting as the data storing part 22 that can store plural sets of printing data. The MFP 20 includes the display part 108, which can be used to display a list of the plural sets of printing data stored by the recording medium 301 of the printing server 30 by using communications between the MFP 20 and the printing server 30. For example, FIG. 5 shows a screen of displaying plural sets of printing data.

The screen of FIG. 5 is displayed in a case where user authentication carried out by the printing control part 28 (steps S14, S15 of FIG. 29) has succeeded in a case where security printing is carried out. Further, this screen can be scrolled so that any printing data can be selected, and selected printing data is displayed in a reverse state ("DATA 3" in FIG. 5). When a user wishes to select one set of printing data, the printing data is caused to be in a reverse state, and a button "FIX" is pressed. Thus, the printing data can be selected through communications with the printing server 30. Further, the screen includes a button "RETURN" for returning to the original screen. In one example, the original screen is a login screen used for user authentication carried out by the printing control part 28.

When the printing data is thus selected, printing setting information included in the printing data is displayed on the display part 108 via communications between the MFP 20 and the printing server 30. The printing setting information includes setting items and setting contents, and the change receiving part 24 of the printing server 30 reads the printing data from the data storing part 22, extracts the printing setting information from the printing data, transmits the extracted printing setting information to the MFP 20, and causes the display part 108 of the MFP 20 to display the printing setting information. FIG. 6 shows a screen thus displaying the printing setting information on the display part 108 of the MFP 20.

In a case where the user sets, not to carry out collecting printing at a time of printing setting from the client apparatus 10, "OFF" is displayed in the screen of FIG. 6 for "COLLECTING PRINTING SETTING". Then, when the user recognizes that a toner remaining amount in the MFP 20 is small, the user considers carrying out collecting printing for the purpose of saving toner. In this case, the user presses the button "CHANGE" of "COLLECTING PRINTING SETTING", and thereby, the above-mentioned "OFF" (setting contents) is changed into "2" (for printing "2" pages into one paper sheet) in the displayed screen (setting change). Then, when the user presses the button "EXECUTE" (step S16 of FIG. 29), the MFP 20 transmits the change information (setting contents changed as mentioned above) to the printing server 30 (step S17). The printing server 30 then updates the corresponding printing setting information according to the thus-transmitted change information (changed setting contents) (step S18). The printing data in which the printing setting information is thus updated is transmitted to the MFP 20 as a return for a printing instruction that is sent from the MFP 20 (steps S19, S20). That is, the MFP 20 obtains the printing data (steps S20, S21) in response to the printing instruction input by the user (step S19), and carries out printing based on the updated printing setting information (step S22).

In a case where user authentication is carried out such as in a case where secret printing is carried out, printing data can include user identification information (user authentication information). In this case, the printing control part 28 of the MFP 20 acting as a data receiving part can cause the display part 108 to display printing data including user identification information of a user who is authenticated, and can receive a selection of the printing data from the user. In this case, when the change receiving part 24 of the printing server 30 receives change information from the user from the change transmitting part 29 of the MFP 20 (steps S16, S17 of FIG. 29), the setting information updating part 25 of the printing server 30 can update the printing setting information included in the printing data including the user identification information of the user who is authenticated according to the change information (step S18).

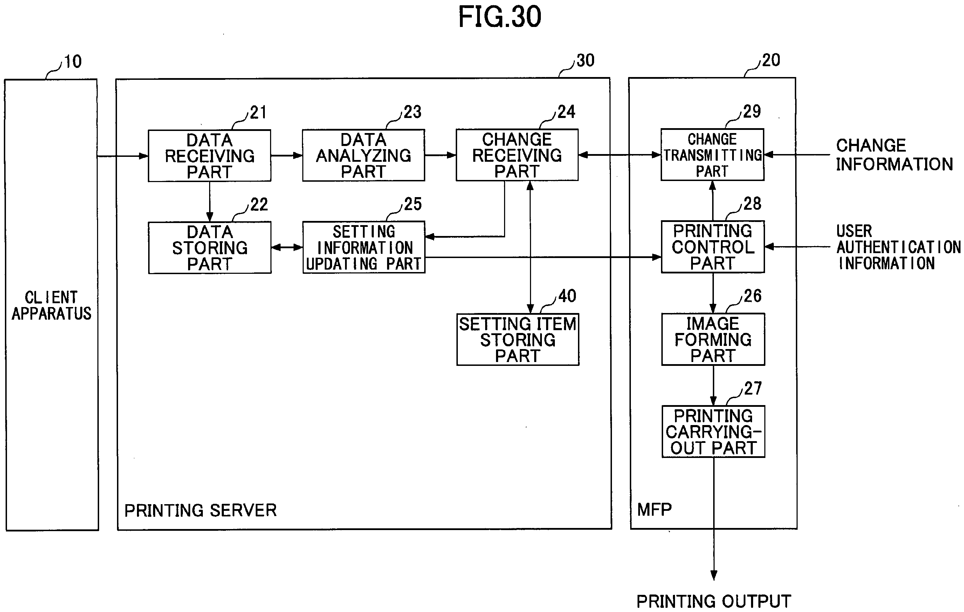

FIG. 30 shows a functional block diagram of a sixth example (printing system). The sixth example has the same configuration as that of the fifth example described above with reference to FIGS. 26-29, except for points described below.

In addition to the configuration shown in FIG. 28, the printing server 30 shown in FIG. 30 includes a setting item storing part 40 that stores setting items to be displayed on the display part 108 of the MFP 20. The setting items stored by the setting item storing part 40 include only setting items that should be displayed, for the purpose of avoiding such a redundant display that it is troublesome for a manager (user) of the MFP 20 to scroll a displayed screen.

The change receiving part 24 of the printing server 30 transmits the setting items stored by the setting item storing part 40 of the printing server 30 and setting contents that are included in printing setting information included in printing data stored by the data storing part 22 of the printing server 30 and also correspond to the setting items stored by the setting item storing part 40 to the MFP 20, and causes the display part 108 of the MFP 20 to display the transmitted setting items and setting contents. Since the number of setting items to be actually displayed on the display part 108 of the MFP 20 is thus made small, a setting change carried out by the user from the MFP 20 can be easily carried out.

In a case where the printing server 30 is shared by plural users, setting items can be stored by the setting item storing part 40 for each user. That is, setting items can be stored in such a manner as being associated with user identification information (user authentication information). User identification information is input by a user at a time of user authentication from the MFP 20. Therefore, after user identification information is thus input by a user, a process is carried out based on the input user identification information, and, via communications between the MFP 20 and the printing server 30, a list of printing data stored by the data storing part 22 of the printing server 30 is displayed on the display part 108 of the MFP 20. Then, for printing data selected by the user from the list of printing data displayed on the display part 108 of the MFP 20, setting items that are stored by the setting item storing part 40 as being associated with the user identification information, and setting contents that are included in printing setting information included in the selected printing data and also correspond to these setting items, are displayed on the display part 108 of the MFP 20.

The user sees the thus-displayed setting contents, and can change, if necessary, the setting contents from the MFP 20. When receiving thus- changed setting contents as change information from the change transmitting part 29 of the MFP 20 (step S17), the change receiving part 24 of the printing server 30 sends the changed setting contents (change information) to the setting information updating part 25. The setting information updating part 25 updates the printing setting information according to the changed setting contents (change information) (step S18). A process carried out after that is the same as that in the fifth example described above. That is, the printing data in which the printing setting information is thus updated is transmitted from the printing server 30 to the MFP 20 (step S21), the image forming part 26 forms an image or images based on the updated respective setting contents of the printing data in the MFP 20, and the printing carrying-out part 27 prints and outputs the formed image or images based on the updated respective setting contents of the printing data (step S22).

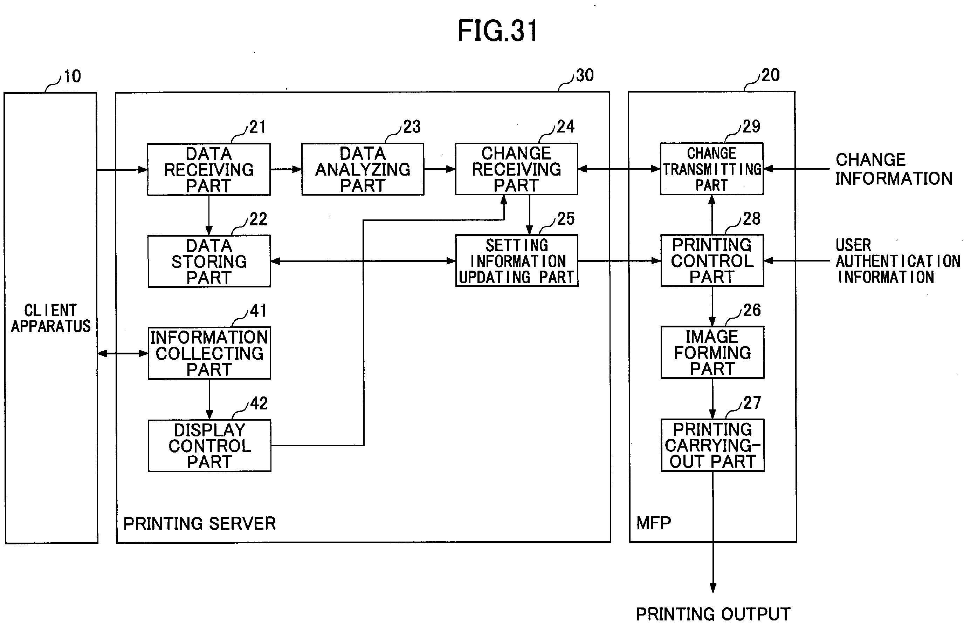

FIG. 31 shows a functional block diagram of a seventh example of a printing system. Except for the following points, the seventh example has the same configuration as that of the fifth example described above with reference to FIGS. 26-29.

The printing server 30 shown in FIG. 31 includes, in addition to the configuration in the fifth example shown in FIG. 28, an information collecting part 41 that makes an inquiry at predetermined intervals to devices among those that the MFP 20 has, states of which devices change as the MFP 20 is used, and collects information of these devices. The printing server 30 in the seventh example further includes a display determining part 42 that determines, from the thus-collected information, setting items and setting contents of printing setting information to be displayed on the display part 108 of the MFP 20.

The MFP 20 has devices such as a developing unit including a toner cartridge, a paper feeding unit, a finisher that carries out punching holes and binding with staples, an exposure device, a charging unit, a transfer unit, a fixing unit, a scanner, a feeder and so forth. To these devices, IC chips or such are provided, in which information for identifying the devices such as manufacturing numbers, product names and so forth, and information concerning current states of the devices such as a toner remaining amount, the number of remaining paper sheets, and so forth, are stored.

As devices among the above-mentioned devices the MFP 20 has, states of which devices change as the MFP 20 is used, the following devices can be cited. That is, the developing unit in which a toner remaining amount is reduced as the MFP 20 is used, the paper feeding unit in which the number of remaining paper sheets is reduced as the MFP 20 is used, and the finisher in which the number of remaining staples is reduced as the MFP 20 is used, can be cited.

The information collecting part 41 of the printing server 30 makes an inquiry at predetermined intervals into these devices of the MFP 20 by using communications with the MFP 20, and collects information concerning the devices such as a toner remaining amount for each color, the number of remaining paper sheets, the number of remaining staples, and so forth, from the IC chips or such provided in the devices. The intervals at which an inquiry is made can be any intervals. It is noted that the intervals are preferably shorter for a device for which a change of a state is sharp.

For example, when detecting from the collected information that a toner remaining amount is equal to or less than a predetermined amount, in a case where the number of copies to be printed is so large as to be equal to or more than 10, and settings are made such that "both-sides printing is not to be carried out" and "collecting printing is not to be carried out", the display determining part 42 can determine to display these setting items and setting contents for the purpose of urging a user to change the setting contents. In this case, the display determining part 42 sends instructions to the change receiving part 24 that then causes the display part 108 in the MFP 20 to display these setting contents accordingly by using communications between the printing server 30 and the MFP 20.

The display determining part 42 can hold a display condition for setting items to be displayed on the display part 108 of the MFP 20. For example, a display condition is such that, as mentioned above, "when a toner remaining amount is equal to or less than a predetermined amount, the number of copies to be printed is equal to or more than 10, and settings are made such that neither both-sides printing nor collecting printing is to be carried out, the corresponding setting items and setting contents are to be displayed". Therefore, the display determining part 42 can determine setting items and setting contents to be displayed on the display part 108 of the MFP 20 based on such a display condition.

The user sees the setting items and setting contents displayed on the display part 108 of the MFP 20, and can recognize that a toner remaining amount is small, and it is better to change settings. Then, for example, the user can change, from the MFP 20, setting contents of a both-sides printing setting into "to carry out both-sides printing", and/or setting contents of a collecting printing setting into "2" (pages), "4" (pages) or such, so as to reduce the number of copies for the purpose that all printing and outputting operations based on the printing data can be completed within the toner remaining amount.

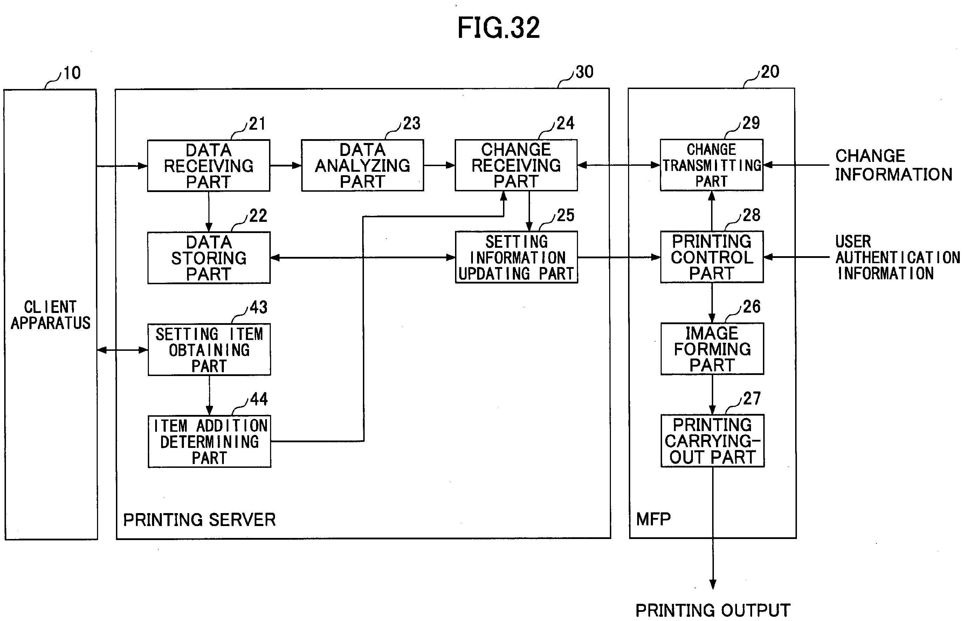

FIG. 32 shows a functional block diagram illustrating an eighth example of a printing system. The eighth example has the same configuration as that of the fifth example described above with reference to FIGS. 26-29, except for the following points.

In addition to the configuration of the fifth example shown in FIG. 28, the printing server 30 in the eighth example shown in FIG. 32 has a setting item obtaining part 43 that makes an inquiry, by using communications between the printing server 30 and the MFP 20, into respective devices included in the MFP 20 at a time of starting up of the MFP 20, i.e., power supply in the MFP 20 is turned on, determines, from information collected from the respective devices in response to the inquiry, which devices can be used, and obtains setting items of devices that can be used, as setting items for which user's setting can be carried out from the MFP 20. The printing server 30 in the eighth example further has an item addition determining part 44 that compares setting items included in printing setting information included in printing data with setting items obtained by the setting item obtaining part 43, and determines whether there is a setting item that is to be added.

There may be a case where setting items for printing settings set from the client apparatus 10 are different from setting items that can be actually set in the MFP 20. For example, the above-mentioned case is a case where the printer driver of the client apparatus 10 is a device common driver or such, and thus, the printer driver does not cover all the functions that the MFP 20 has, or a case where an optional function is added to the MFP 20. For example, in a case where the MFP 20 does not originally have a finisher, and a finisher is afterward added as an optional device, the devices that the MFP 20 has change accordingly. The thus- added device is a device that can be used. However, if a user does not recognize the added device (finisher), setting items and setting contents concerning the finisher are not set from the client apparatus 10 by the user.

Therefore, the setting item obtaining part 43 of the printing server 30 obtains setting items that can be set, from the information of the devices collected as mentioned above from the MFP 20 by using communications between the printing server 30 and the MFP 20. For example, in a case where the finisher is added to the MFP 20 as mentioned above, and information of the finisher is obtained as information of a device that the MFP 20 has by the setting item obtaining part 43, the setting item obtaining part 43 obtains setting items of the finisher, such as a punching hole setting, a binding with staples setting, and so forth. In a case where the finisher is such that only binding with staples is available, a binding with staples setting is obtained as a setting item by the setting item obtaining part 43.

The item addition determining part 44 of the printing server 30 determines setting items and setting contents of printing setting information to be displayed by the display part 108 of the MFP 20. For example, in a case where the finisher is added as mentioned above, a punching hole setting and a binding with staples setting are available, and thus, the item addition determining part 44 determines to add setting items, i.e., a punching hole setting and a binding with staples setting to setting items to be displayed by the display part 108 of the MFP 20. At this time, setting contents of these setting items are set as "OFF" as default settings.

The user sees the setting items "punching hole setting" and "binding with staples setting" that are thus displayed on the display part 108 of the MFP 20, and therefore recognizes that these functions can be used. Then, when the user wishes to use these functions, the user changes the above-mentioned default setting contents "OFF" of these setting items into "ON", and/or further, inputs specific positions of punching holes and/or specific positions of binding with staples to set as setting contents for the setting items.

When the user thus changes the settings (setting items and setting contents), the change receiving part 24 of the printing server 30 receives corresponding change information from the MFP 20 by using communications between the printing server 30 and the MFP 20, and the setting information updating part 25 of the printing server 30 adds the setting items to the printing setting information according to the change information. The setting information updating part 25 further adds setting contents to the printing setting information according to the change information and updates the printing setting information of the printing data. In a case where the change information further indicates a change of other setting contents, the setting information updating part 25 changes corresponding setting contents and updates the printing setting information of the printing data.

Next, when the user inputs an instruction to execute printing from the MFP 20 (step S19), the printing server 30 receives the instruction and transmits the printing data to the MFP 20 by using communications between the printing server 30 and the MFP 20 (steps S20, S21). The image forming part 26 in the MFP 20 then forms an image or images based on the updated printing data that is transmitted from the printing server 30 as mentioned above, and the printing carrying-out part 27 prints the image or images on paper, and outputs printouts (step S22).

It is noted that there may be another case where, contrary to the above-mentioned case, a device exists in the MFP 20 and is made not available. In such a case, no special setting is necessary since the device is merely not used. However, it is possible to avoid display of corresponding setting items for a user by the display part 108 of the MFP 20 so that the user can be prevented from carrying out settings for the setting items of the device. Alternatively, it is also possible to display such a message on the display part 108 that the device is not available. Further, since the item addition determining part 44 of the printing server 30 has the function of comparing setting items as mentioned above, the item addition determining part 44 can detect unnecessary setting items, and the setting information updating part 25 can delete the unnecessary setting items at a time of updating.

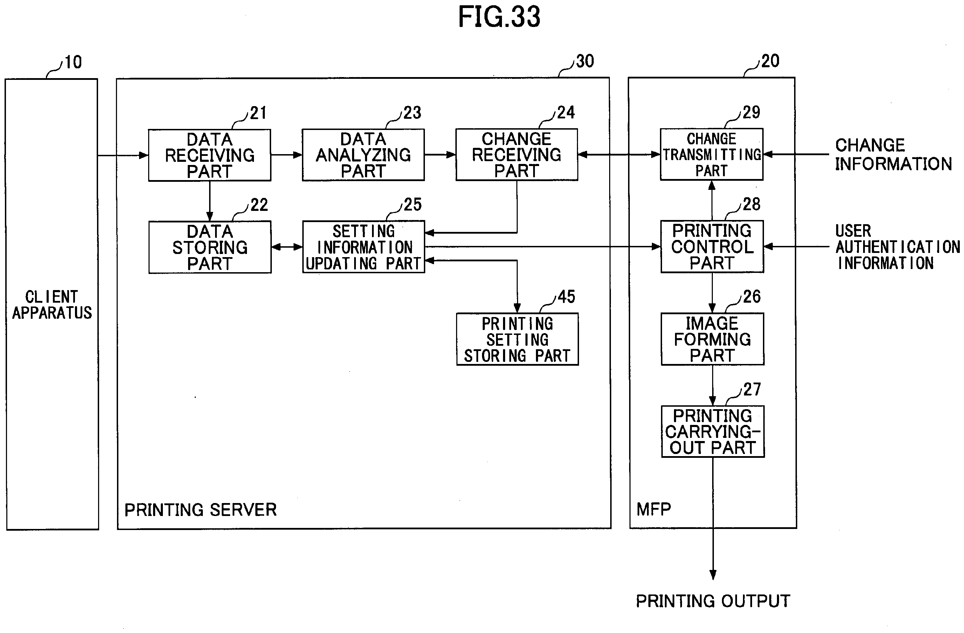

FIG. 33 shows a functional block diagram illustrating a second embodiment of a printing system. The second embodiment has the same configuration as that of the fifth example described above with reference to FIGS. 26-29, except for the following points.

In addition to the fifth example with reference to FIG. 28, the printing server 30 shown in FIG. 33 has a printing setting storing part 45 that stores printing settings that are previously set in a manner as being associated with user identification information. The user identification information (user authentication information) includes a user ID and a password as mentioned above, and the printing settings include setting items and setting contents.

The printing setting storing part 45 of the printing server 30 can store specific setting items and setting contents for each user. For example, for a user A, setting contents "2" (pages) can be stored for a setting item "collecting printing setting", and, for a user B, setting contents "color" can be stored for a setting item "monochrome/color printing setting". Such printing settings are those that respective users previously set and are registered by the printing setting storing part 45.

In the above-mentioned example, even when the user A sets setting contents "OFF" for the setting item "collecting printing setting" from the client apparatus 10, and outputs printing data for the printing server 30, since the setting contents "2" (pages) are set for setting item "collecting printing setting" by the printing setting storing part 45 in the printing server 30 as mentioned above, the setting information updating part 25 rewrites the above-mentioned setting contents "OFF" in printing setting information included in the printing data into "2" (pages) according to the same setting contents stored by the printing setting storing part 45 for the corresponding setting item "collecting printing setting", and updates the printing data. Thereby, even when the user A does not input change information in the MFP 20, it is possible to carry out printing that is controlled automatically as being suitable to a type of a device (the MFP 20) or in a manner desired by the user A.

In the second embodiment, the setting information updating part 25 of the printing server 30 can thus update printing setting information included in printing data stored by the data storing part 22 by using printing settings stored by the printing setting storing part 45 as change information in a case where the change receiving part 24 has not received change information for a predetermined time period.

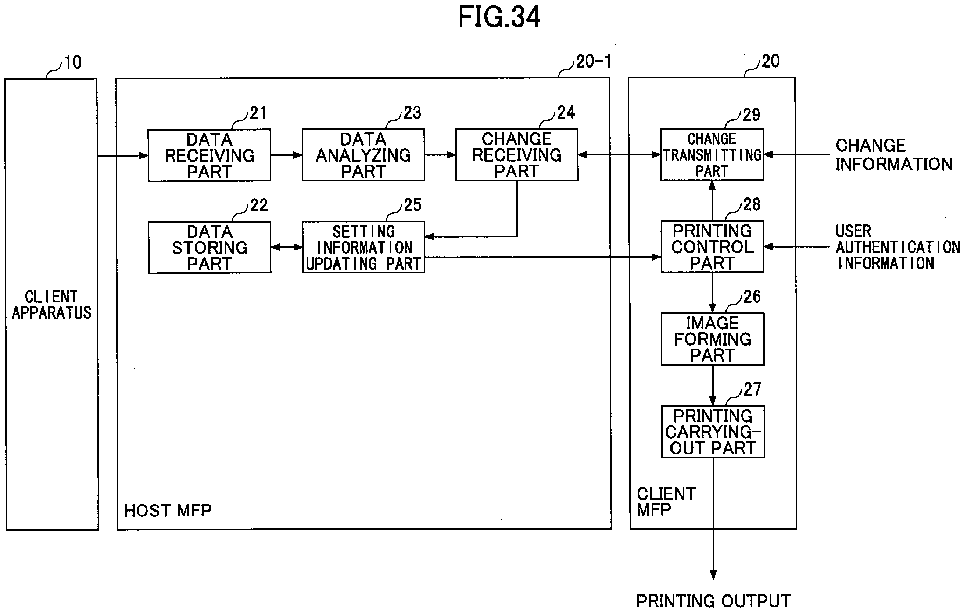

FIG. 34 shows a configuration example of a printing system (information processing system) in a ninth example of the present invention. The printing system shown in FIG. 34 includes a host MFP 20-1 as an example of an image forming apparatus (first image forming apparatus), a client MFP 20 as an example of an image forming apparatus (second image forming apparatus), and a client apparatus 10. These apparatuses 20-1, 20 and 10 are connected together by a network such as a LAN, the Internet or such. It is noted that, as mentioned above, the printing system in the ninth example can use a MFP as an example of an image forming apparatus. However, one applicable as an image forming apparatus is not limited to a MFP. That is, both or either one of the host MFP 20-1 or the client MFP 20 in the printing system in the ninth example may be a laser printer (LP) that has a sole function of a printing device, or such.

In the same way, also in a printing system in any one of tenth through thirteenth examples described later, both or either one of a host MFP 20-1 or a client MFP 20 may be a laser printer (LP) that has a sole function of a printing device, or such. In the printing system in the ninth example, a user creates printing data by directly operating the client apparatus 10, and transmits the printing data from the client apparatus 10 to the host MFP 20-1, and the host MFP 20-1 stores the printing data. Then, by directly operating the client MFP 20, the user causes the host MFP 20-1 to transmit the printing data stored by the host MFP 20- 1 as mentioned above to the client MFP 20, and outputs an image or images based on the printing data from the client MFP 20.

The client apparatus 10 is a computer that has data (document data, image data or such) to be printed, and transmits printing data including the data to be printed to the host MFP 20-1, in response to a user's input of a printing instruction. The client apparatus 10 can request an input of user authentication information (user identification information, for example, a user ID and a password) from the user when a printing instruction is input by the user, and can include the user authentication information in the printing data.

The host MFP 20-1 has a hardware configuration, for example, as one described with reference to FIG. 2, and, in response to a user's printing instruction, prints an image or images based on printing data. It is noted that the hardware configuration of the host MFP 20-1 will be referred to as attaching a suffix "-1" to a reference numeral of each part/component shown in FIG. 2. For example, a CPU 101 of the host MFP 20-1 will be referred to as a CPU 101-1.

The host MFP 20-1 in the ninth example stores printing data received from the client apparatus 10. The host MFP 20-1 can carry out user authentication based on user authentication information included in received printing data, and store the printing data concerning a corresponding printing request only when the authentication has succeeded. In this case, an authentication server can be provided separately, and the host MFP 20-1 can cause the authentication server to carry out the authentication.

The same as the host MFP 20-1, the client MFP 20 also has a hardware configuration described above with reference FIG. 2, for example, obtains printing data stored by the host MFP 20-1 in response to a user's printing instruction, and prints an image or images based on the obtained printing data. The client MFP 20 can request an input of user authentication information (user identification information) from the user, and carry out an authentication operation based on the input user authentication information (secret printing). The authentication operation is carried out according to a procedure described above with reference to FIGS. 7-21, for example. In this case, an authentication server can be provided separately, and the client MFP 20 can cause the authentication server to carry out the authentication operation. In this case, the client MFP 20 can obtain the printing data obtained from the host MFP 20-1 only when the authentication has succeeded.

It is noted that the host MFP 20-1 can be provided as plural host MFPs 20-1.

With reference to FIG. 34, a printing system according to the ninth example will now be described. The host MFP 20-1 in the printing system includes a data receiving part 21 that receives printing data created in the client apparatus 10 and converted by the printer driver, a data storing part 22 that stores the received printing data, and a data analyzing part 23 that analyzes the printing data. These parts are realized as a result of the program installed in the host MFP 20-1 being executed by the CPU 101-1. The data analyzing part 23 analyzes printing setting information included in the printing data, and recognizes setting items and setting contents included in the printing setting information.

Further, the host MFP 20-1 includes a change receiving part 24 that receives an input of change information from a user via the client MFP 20, and a setting information updating part 25 that updates the printing setting information included in the printing data stored by the data storing part 22, according to the change information received by the change receiving part 24. Also these parts are realized as a result of the program installed in the host MFP 20-1 being executed by the CPU 101-1.

On the other hand, the client MFP 20 includes a change transmitting part 29 that transmits the change information to the change receiving part 24 of the host MFP 20-1 when the change information is input by a user to the client MFP 20, under the control of the printing control part 28 in a case where secret printing is carried out. The printing control part 28 has the same configuration as that included in the MFP 20 in any one of the first through fourth examples and the first embodiment described above. The client MFP 20 further includes an image forming part 26 that forms an image or images based on updated printing setting information in response to an instruction from a user, and a printing carrying-out part 27 that prints on a paper sheet (s) the image or images formed based on the updated printing setting information, and thus, outputs the image or images. These parts correspond to the image processing part 106 and the image outputting part 105 described above with reference to FIG. 2.

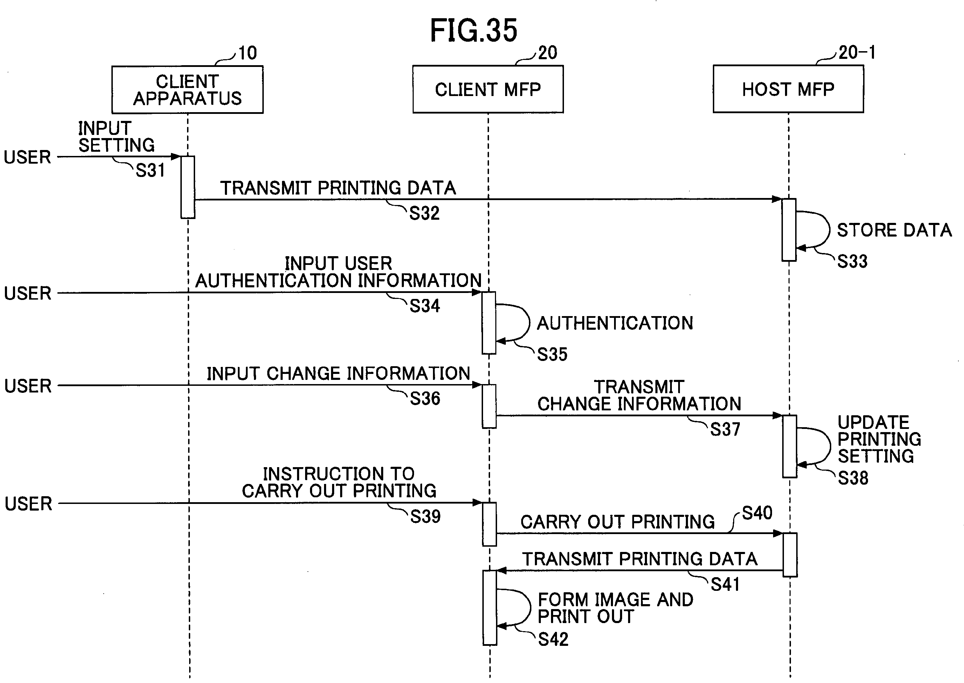

The client MFP 20 can be configured to carry out secret printing, and in this case, the client MFP 20 includes the printing control part 28. The printing control part 28 receives an input of user authentication information (user identification information) in step S34 of FIG. 35 described below and carries out user authentication in step S35. When the user authentication has succeeded, the printing control part 28 controls the change transmitting part 29, and causes the change transmitting part 29 to transmit the change information input to the change receiving part of the host MFP 20-1. As a result, updating of the printing setting information according to the change information by the setting information updating part 25 of the host MFP 20-1 can be carried out.

Further, the printing control part 28 of the client MFP 20 outputs printing data transmitted from the setting information updating part 25 of the host MFP 20-1 to the image forming part 26, and the image forming part 26 forms an image or images and the printing carrying-out part 27 prints the image or images based on the printing data from the client MFP 20. The printing control part 28 and the change transmitting part 29 can be realized as a result of the program installed in the client MFP 20 being executed by the CPU 101. It is noted that, in a case where the client MFP 20 has a configuration in which the printing control part 28 is not provided, printing data transmitted from the setting information updating part 25 of the host MFP 20-1 is directly provided to the image forming part 26, the image forming part 26 forms an image or images, and the printing carrying-out part 27 prints the image or images based on the printing data from the client MFP 20.

The host MFP 20-1 receives printing data from the printer driver mounted in the client apparatus 10, stores the printing data in the data storing part 22 and receives, if any, a change of printing setting information from the user based on change information transmitted from the change transmitting part 29 of the client MFP 20, until receiving an instruction for printing execution from the client MFP 20 from the user.

The user can input change information from the operating part 109 with keys or the operations panel, for example, of client the MFP 20 in step S36 of FIG. 29. At this time, by using communications between the client MFP 20 and the host MFP 20-1, the change transmitting part 29 of the client MFP 20 can obtain printing setting information currently set in printing data stored by the data storing part 22 of the host MFP 20-1 via the change receiving part 24 of the host MFP 20-1, and cause the display part 108 of the client MFP 20 to display the printing setting information. Thereby, the user can recognize setting items and corresponding setting contents, and can carry out a setting change based thereon from the client MFP 20.

It is noted that identification information (for example, IP address) of the host MFP 20-1, which is used by the client MFP 20 for obtaining from the host MFP 20-1 printing setting information of printing data stored by the data storing part 22 of the host MFP 20-1, is previously registered in the recording medium 103 of the client MFP 20. By using the registered identification information, the client MFP 20 communicates with the host MFP 20-1, from which the client MFP 20 can obtain the printing setting information.

The change of the printing setting information is such that, for example, although the user sets setting contents "both-sides printing is not to be carried out" at a time of inputting a printing instruction from the client apparatus 10, the user then changes the setting contents into ; "both-sides printing is to be carried out" for the purpose of saving paper sheets to be used for the printing.

In this case, when the user changes the setting contents from "both-sides printing is not to be carried out" into "both-sides printing is to be carried out" as mentioned above from the operating part 109 with keys or the operations panel of the client MFP 20, the change receiving part 24 of the host MFP 20-1 receives corresponding change information from the change transmitting part 29 of the client MFP 20 (steps S36, S37 of FIG. 35), and sends the change information to the setting information updating part 25. The setting information updating part 25 then updates the corresponding setting contents of the printing setting information included in the printing data according to the sent change information (step S38 of FIG. 35). In this case the setting contents are rewritten into "both-sides printing is to be carried out".

After thus carrying out the setting change to the printing setting information of the printing data stored by the data storing part 22, the user confirms the changed setting contents from the display part 108 of the client MFP 20. Also at this time, as mentioned above, by using communications between the client MFP 20 and the host MFP 20-1, the change transmitting part 29 of the client MFP 20 can obtain the printing setting information currently set in the printing data stored by the data storing part 22 of the host MFP 20 via the change receiving part 24 of the host MFP 20, and display the printing setting information by the display part 108 of the client MFP 20. The user can press a printing execution button displayed on the display part 108 of the client MFP 20 to input an instruction for printing (step S39 of FIG. 35).

The printing control part 28 responds thereto, and, by using communications between the client MFP 20 and the host MFP 20-1, receives the printing data in which the printing setting information is updated as mentioned above from the setting information updating part 25 of the host MFP 20-1 (steps S40 and S41), and sends the printing data to the image forming part 26.

Also in this case, as mentioned above, the identification information (for example, IP address) of the host MFP 20-1, which is used by the client MFP 20 for obtaining from the host MFP 20-1 printing data stored by the data storing part 22 of the host MFP 20-1, is previously registered in the recording medium 103 of the client MFP 20. By using the registered identification information, the client MFP 20 can communicate with the host MFP 20-1, from which the client MFP 20 can obtain the printing data.

The image forming part 26 of the client MFP 20 forms an image or images based on the printing data sent from the printing control part 28. At this time, the image forming part 26 forms an image or images according to the setting contents such as a character size, a margin, the number of lines, the number of characters per line, a selection between monochrome printing and color printing, whether to carry out toner saving and the number of pages to be printed into one paper sheet, for example. Then, the printing carrying-out part 27 prints the image or the images according to the setting contents such as the number of copies, whether to carry out both-sides printing, whether and which positions to punch holes, and whether and which positions to bind with staples, for example (step S42).

When color printing is set in the printing setting information, the image forming part 26 forms toner images with toners of respective colors. When the number of copies as being 2 and punching of two holes on the left side of a paper sheet are set in the printing setting information, the printing carrying-out part 27 carries out color printing on two paper sheets, punches two holes on the left side of each paper sheet, and ejects the paper sheets to an ejecting tray.

With reference to FIG. 35, a specific process will be described in detail. In step S31, a user uses the client apparatus 10 such as a PC, starts an application, and creates a document. When printing the created document, the user designates a destination to which the document is output, carries out printing settings such as a range of printing pages, the number of copies, a monochrome/color printing setting, a collecting printing setting, a paper size setting and a both-sides printing setting and toner saving setting, for example, and inputs an instruction for the destination to output printing data.

In step S42 of FIG. 35, the thus-prepared document data and printing setting information are converted into printing data by the printer driver, and the printing data is transmitted to the destination. At this time, when other printing data is already stored in the destination, the printing data is temporarily stored in the client apparatus 10 until the other printing data is processed. In the ninth example, the destination is the host MFP 20-1. At this time, when the other printing data stored in the host MFP 20-1 is processed and an available memory area is thus created in the host MFP 20-1, the printing data temporarily stored in the client apparatus 10 is then transmitted to the host MFP 20-1 via the network. The host MFP 20-1 stores the thus-transmitted printing data (step S33 of FIG. 35) until the user inputs an instruction. In response to the instruction being input to the host MFP 20-1 by the user (step S39, S40 of FIG. 35) from the client MFP 20, the host MFP 20-1 reads the stored printing data, and transmits the read printing data to the client MFP 20 (step S41), under the condition that user authentication (steps S34 and S35) has succeeded by the client MFP 20 in a case where secret printing is carried out. The client MFP 20 then carries out printing based on the transmitted printing data (step S42).

Since the client MFP 20 does not carry out printing until the user inputs the instruction as mentioned above, the user can change printing settings (printing setting information) included in the printing data stored in the host MFP 20-1 from the client MFP 20 (steps S36, S37, S38) until the user inputs the above-mentioned instruction.

When using the client MFP 20, in a case where secret printing is carried out and user authentication is required, the user inputs user identification information (user authentication information) by using the operating part 109 with keys or the operations panel of the client MFP 20 ;(step S34 of FIG. 35). The client MFP 20 determines, based on user identification information previously registered and stored in the memory or such, whether there is already registered user identification information that agrees with the input user identification information, and allows a further operation by the user when it is determined that there is already registered user identification information that agrees with the input user identification information (step S35 of FIG. 35). For this purpose, the client MFP 20 can include the printing control part 28.

On the other hand, when it is determined that there is no already registered user identification information that agrees with the input user identification information, the printing control part 28 requires a new registration of user identification information from the user, or denies a further operation by the user. For the sake of convenience, it is assumed that the printing control part 28 denies an operation by the user in this case. User identification information includes, for example, a user ID and a password, which may include characters, numerals and so forth.

The host MFP 20-1 includes the recording medium 103-1 acting as the data storing part 22 that can store plural sets of printing data. The client MFP 20 includes the display part 108, which can be used to display a list of the plural sets of printing data stored by the recording medium 103-1 of the host MFP 20-1 by using communications between the client MFP 20 and the host MFP 20-1. For example, FIG. 5 shows a screen of displaying plural sets of printing data.

The screen of FIG. 5 is displayed in a case where user authentication carried out by the printing control part 28 (steps S34, S35 of FIG. 35) has succeeded in a case where security printing is carried out. Further, this screen can be scrolled so that any printing data can be selected, and selected printing data is displayed in a reverse state ("DATA 3" in FIG. 5). When a user wishes to select one set of printing data, the printing data is caused to be in a reverse state by user, and a button "FIX" is pressed. Thus, the printing data can be selected through communications with the host MFP 20-1. Further, the screen includes a button "RETURN" for returning to the original screen. In one example, the original screen is a login screen used for user authentication carried out by the printing control part 28.

When the printing data is thus selected, printing setting information included in the printing data is displayed on the display part 108 of the client MFP 20 via communications between the client MFP 20 and the host MFP 20-1. The printing setting information includes setting items and setting contents, and the change receiving part 24 of the host MFP 20-1 reads the printing data from the data storing part 22, extracts the printing setting information from the printing data, transmits the extracted printing setting information to the client MFP 20, and causes the display part 108 of the client MFP 20 to display the printing setting information. FIG. 6 shows a screen thus displaying the printing setting information on the display part 108 of the client MFP 20.

In a case where the user sets not to carry out collecting printing at a time of printing setting from the client apparatus 10, "OFF" is displayed in the screen of FIG. 6 for "COLLECTING PRINTING SETTING". Then, when the user recognizes that a toner remaining amount in the client MFP 20 is small, the user considers carrying out collecting printing for the purpose of saving toner. In this case, the user presses the button "CHANGE" of "COLLECTING PRINTING SETTING", and thereby, the above-mentioned "OFF" (setting contents) is changed into "2" (for printing "2" pages into one paper sheet) in the displayed screen (setting change). Then, when the user presses the button "EXECUTE" (step S36 of FIG. 29), the MFP 20 transmits the change information (changed setting contents changed as mentioned above) to the host MFP 20-1 (step S37). The host MFP 20-1 then updates the corresponding printing setting information according to the thus-transmitted change information (changed setting contents) (step S38). The printing data in which the printing setting information is thus updated is transmitted to the client MFP 20 as a return for a printing instruction that is sent from the client MFP 20 (steps S39, S40). That is, the client MFP 20 obtains the printing data (steps S40, S41) in response to the printing instruction input by the user (step S39), and carries out printing based on the updated printing setting information (step S42).

In a case where user authentication is carried out such as in a case where secret printing is carried out, printing data can include user identification information (user authentication information). In this case, the printing control part 28 of the client MFP 20 acting as a data receiving part can cause the display part 108 of the client MFP 20 to display printing data including user identification information of a user who is authenticated, and can receive a selection of the printing data from the user. In this case, when the change receiving part 24 of the host MFP 20-1 receives change information from the user from the change transmitting part 29 of the client MFP 20;(steps S36, S37 of FIG. 35), the setting information updating part 25 of the host MFP 20-1 can update the printing setting information included in the printing data including the user identification information of the user who is authenticated according to the change information (step S38).

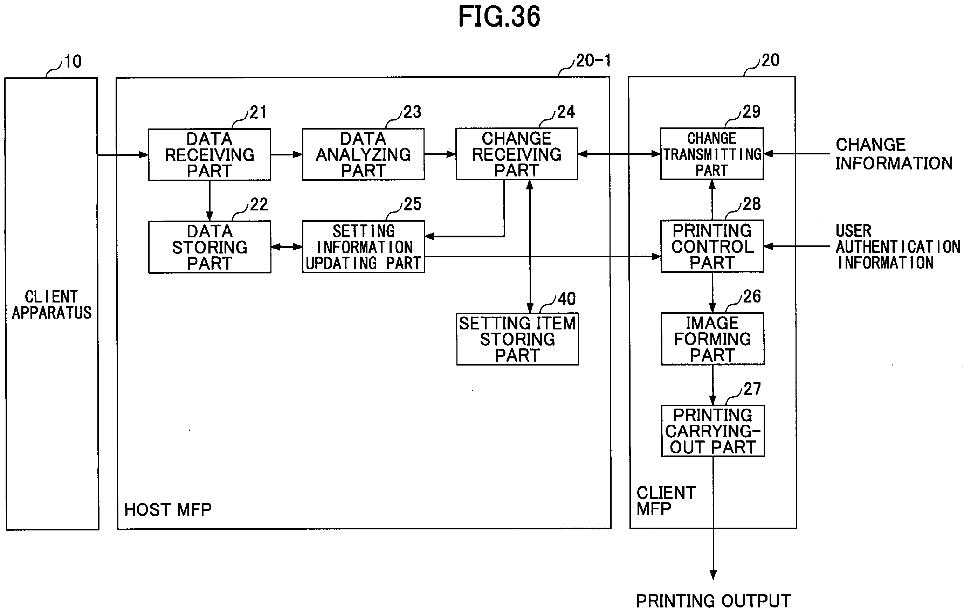

FIG. 36 shows a functional block diagram of a tenth example (printing system). The tenth example has the same configuration as that of the ninth example described above with reference to FIGS. 34-35, except for points described below.

In addition to the configuration shown in FIG. 34, the host MFP 20-1 shown in FIG. 36 includes a setting item storing part 40 that stores setting items to be displayed on the display part 108 of the client MFP 20. The setting items stored by the setting item storing part 40 include only setting items that should be displayed, for the purpose of avoiding such a redundant display that it is troublesome for a manager (user) of the client MFP 20 to scroll a displayed screen.

The change receiving part 24 of the host MFP 20-1 transmits the setting items stored by the setting item storing part 40 of the host MFP 20-1 and setting contents that are included in printing setting information included in printing data stored by the data storing part 22 of the host MFP 20-1 and also correspond to the setting items stored by the setting item storing part 40 to the client MFP 20, and causes the display part 108 of the client MFP 20 to display the transmitted setting items and setting contents. Since the number of setting items to be actually displayed on the display part 108 of the client MFP 20 is thus made small, a setting change carried out by the user from the client MFP 20 can be easily carried out.

In a case where the host MFP 20-1 is shared by plural users, setting items can be stored by the setting item storing part 40 for each user. That is, setting items can be stored in such a manner as being associated with user identification information (user authentication information). User identification information is input by a user at a time of user authentication from the client MFP 20. Therefore, after user identification information is thus input by a user, a process is carried out based on the input user identification information, and, via communications between the client MFP 20 and the host MFP 20-1, a list of printing data stored by the data storing part 22 of the host MFP 20-1 is displayed on the display part 108 of the client MFP 20. Then, for printing data selected by the user from the list of printing data displayed on the display part 108 of the client MFP 20, setting items that are stored by the setting item storing part 40 as being associated with the user identification information, and setting contents that are included in printing setting information included in the selected printing data and also correspond to these setting items, are displayed on the display part 108 of the client MFP 20.

The user sees the thus-displayed setting contents, and can change, if necessary, the setting contents from the client MFP 20. When receiving thus-changed setting contents as change information from the change transmitting part 29 of the client MFP 20 (step S37), the change receiving part 24 of the host MFP 20-1 sends the changed setting contents (change information) to the setting information updating part 25. The setting information updating part 25 updates the printing setting information according to the changed setting contents (change information) (step S38). A process carried out after that is the same as that in the ninth example described above. That is, the printing data in which the printing setting information is thus updated is transmitted from the host MFP 20-1 to the client MFP 20 (step S41), the image forming part 26 forms an image or images based on the updated respective setting contents of the printing data in the client MFP 20, and the printing carrying-out part 27 prints and outputs the formed image or images based on the updated respective setting contents of the printing data (step S42).

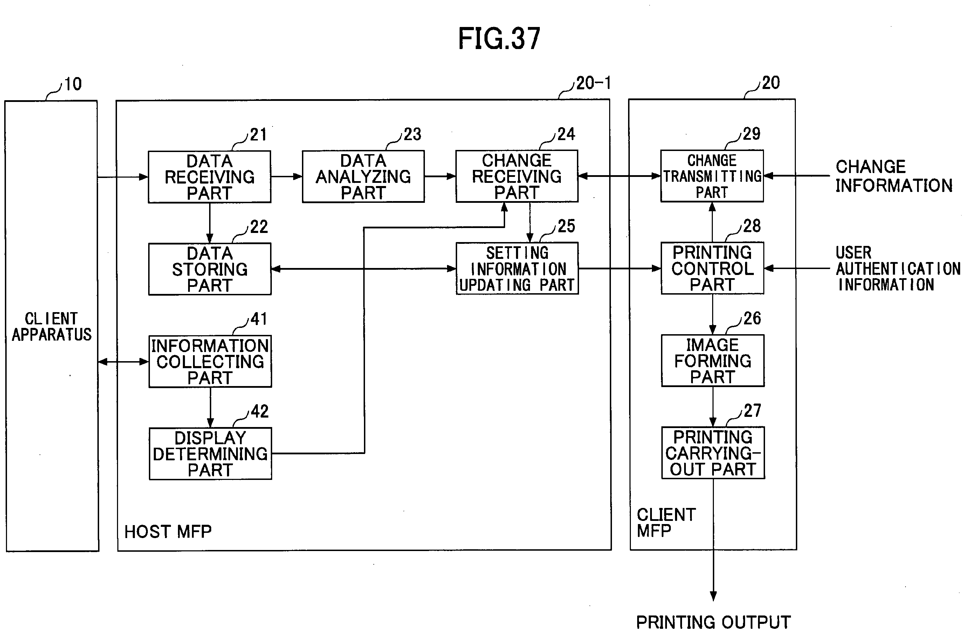

FIG. 37 shows a functional block diagram of an eleventh example of a printing system. Except for the following points, the eleventh example has the same configuration as that of the ninth example described above with reference to FIGS. 34-35.

The host MFP 20-1 shown in FIG. 37 includes, in addition to the configuration in the ninth example shown in FIG. 34, an information collecting part 41 that makes an inquiry at predetermined intervals to devices among those that the client MFP 20 has, states of which devices change as the client MFP 20 is used, and collects information of these devices. The host MFP 20-1 in the eleventh example further includes a display determining part 42 that determines, from the thus- collected information, setting items and setting contents of printing setting information to be displayed on the display part 108 of the client MFP 20.

The client MFP 20 has devices such as a developing unit including a toner cartridge, a paper feeding unit, a finisher that carries out punching holes and binding with staples, an exposure device, a charging unit, a transfer unit, a fixing unit, a scanner, a feeder and so forth. To these devices, IC chips or such are provided, in which information for identifying the devices such as manufacturing numbers, product names and so forth, and information concerning current states of the devices such as a toner remaining amount, the number of remaining paper sheets, and so forth, is stored.

As devices among the above-mentioned devices the client MFP 20 has, states of which devices change as the client MFP 20 is used, the following devices can be cited. That is, the developing unit in which a toner remaining amount is reduced as the client MFP 20 is used, the paper feeding unit in which the number of remaining paper sheets is reduced as the client MFP 20 is used, and the finisher in which the number of remaining staples is reduced as the client MFP 20 is used, can be cited.

The information collecting part 41 of the host MFP 20-1 makes an inquiry at predetermined intervals into these devices of the client MFP 20 by using communications with the client MFP 20, and collects information concerning the devices such as a toner remaining amount for each color, the number of remaining paper sheets, the number of remaining staples, and so forth, from the IC chips or such provided in the devices. The intervals at which an inquiry is made can be any intervals. It is noted that the intervals are preferably shorter for a device for which a change of a state is sharp.

For example, when detecting from the collected information that a toner remaining amount is equal to or less than a predetermined amount, in a case where the number of copies to be printed is so large as to be equal to or more than 10, and settings are made such that "both-sides printing is not to be carried out" and "collecting printing is not to be carried out", the display determining part 42 can determine to display these setting items and setting contents for the purpose of urging a user to change the setting contents. In this case, the display determining part 42 sends instructions to the change receiving part 24 that then causes the display part 108 in the client MFP 20 to display these setting contents accordingly by using communications between the host MFP 20-1 and the client MFP 20.

The display determining part 42 can hold a display condition for setting items to be displayed on the display part 108 of the client MFP 20. For example, a display condition is such that, as mentioned above, "when a toner remaining amount is equal to or less than a predetermined amount, the number of copies to be printed is equal to or more than 10, and settings are made such that neither both-sides printing nor collecting printing is to be carried out, the corresponding setting items and setting contents are to be displayed". Therefore, the display determining part 42 can determine setting items and setting contents to be displayed on the display part 108 of the client MFP 20 based on such a display condition.

The user sees the setting items and setting contents displayed on the display part 108 of the client MFP 20, and can recognize that a toner remaining amount is small, and it is better to change settings. Then, for example, the user can change, from the client MFP 20, setting contents of a both- sides printing setting into "to carry out both-sides printing", and/or setting contents of a collecting printing setting into "2" (pages), "4" (pages) or such, so as to reduce the number of copies for the purpose that all printing and outputting operations based on the printing data can be completed within the toner remaining amount.

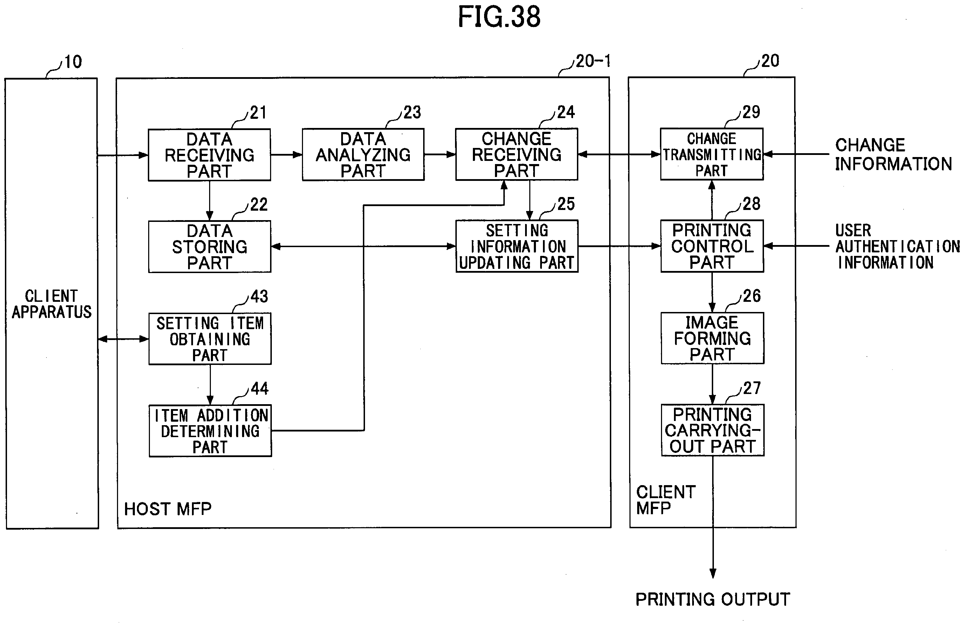

FIG. 38 shows a functional block diagram illustrating a twelfth example t of a printing system. The twelfth example has the same configuration as that of the ninth example described above with reference to FIGS. 34-35, except for the following points.

In addition to the configuration of the ninth example shown in FIG. 34, the host MFP 20-1 in the twelfth example shown in FIG. 38 has a setting item obtaining part 43 that makes an inquiry, by using communications between the host MFP 20-1 and the client MFP 20, into respective devices included in the client MFP 20 at a time of starting up of the client MFP 20, i.e., power supply in the client MFP 20 is turned on, determines, from information collected from the respective device in response to the inquiry, which devices can be used, and obtains setting items of devices that can be used, as setting items for which user's setting can be carried out from the client MFP 20. The host MFP 20-1 in the twelfth example further has an item addition determining part 44 that compares setting items included in printing setting information included in printing data with setting items obtained by the setting item obtaining part 43, and determines whether there is a setting item that is to be added.

There may be a case where setting items for printing settings set from the client apparatus 10 are different from setting items that can be actually set in the client MFP 20. For example, the above-mentioned case is a case where the printer driver of the client apparatus 10 is a device common driver or such, and thus, the printer driver does not cover all the functions that the client MFP 20 has, or a case where an optional function is added to the client MFP 20. For example, in a case where the client MFP 20 does not originally have a finisher and a finisher is afterward added as an optional device, the devices that the client MFP 20 has change accordingly. The thus-added device is a device that can be used. However, if a user does not recognize the added device (finisher), setting items and setting contents concerning the finisher are not set from the client apparatus 10 by the user.

Therefore, the setting item obtaining part 43 of the host MFP 20-1 obtains setting items that can be set, from the information of the devices collected as mentioned above from the client MFP 20 by using communications between the host MFP 20-1 and the client MFP 20. For example, in a case where the finisher is added to the client MFP 20 as mentioned above, and information of the finisher is obtained as information of a device that the client MFP 20 has by the setting item obtaining part 43, the setting item obtaining part 43 obtains setting items of the finisher, such as a punching hole setting, a binding with staples setting, and so forth. In a case where the finisher is such that only binding with staples is available, a binding with staples setting is obtained as a setting item by the setting item obtaining part 43.

The item addition determining part 44 of the host MFP 20-1 determines setting items and setting contents of printing setting information to be displayed by the display part 108 of the client MFP 20. For example, in a case where the finisher is added as mentioned above, a punching hole setting and a binding with staples setting are available, and thus, the item addition determining part 44 determines to add setting items, i.e., a punching hole setting and a binding with staples setting to setting items to be displayed by the display part 108 of the client MFP 20. At this time, setting contents of these setting items are set as "OFF" as default settings.

The user sees the setting items "punching hole setting" and "binding with staples setting" that are thus displayed on the display part 108 of the client MFP 20, and therefore recognizes that these functions can be used. Then, when the user wishes to use these functions, the user changes the above- mentioned default setting contents "OFF" of these setting items into "ON", and/or further, inputs specific positions of punching holes and/or specific positions of binding with staples to set as setting contents for the setting items.

When the user thus changes the settings (setting items and setting contents), the change receiving part 24 of the host MFP 20-1 receives corresponding change information from the client MFP 20 by using communications between the host MFP 20-1 and the client MFP 20, and the setting information updating part 25 of the host MFP 20-1 adds the setting items to the printing setting information according to the change information. The setting information updating part 25 further adds setting contents to the printing setting information according to the change information and updates the printing setting information of the printing data. In a case where the change information further indicates a change of other setting contents, the setting information updating part 25 changes corresponding setting contents and updates the printing setting information of the printing data.

Next, when the user inputs an instruction to execute printing from the client MFP 20 (step S39), the host MFP 20-1 receives the instruction and transmits the printing data to the client MFP 20 by using communications between the host MFP 20-1 and the client MFP 20 (steps S40, S41). The image forming part 26 in the client MFP 20 then forms an image or images based on the updated printing data that is transmitted from the host MFP 20-1 as mentioned above, and the printing carrying-out part 27 prints the image or images on paper, and outputs printouts (step S42).

It is noted that there may be another case where, contrary to the above-mentioned case, a device exists in the client MFP 20 and is made not available. In such a case, no special setting is necessary since the device is merely not used. However, it is possible to avoid display of corresponding setting items for a user by the display part 108 of the client MFP 20 so that the user can be prevented from carrying out setting for the setting items of the device. Alternatively, it is also possible to display such a message on the display part 108 of the client MFP 20 that the device is not available. Further, since the item addition determining part 44 of the host MFP 20-1 has the function of comparing setting items as mentioned above, the item addition determining part 44 can detect unnecessary setting items, and the setting information updating part 25 of the host MFP 20-1 can delete the unnecessary setting items at a time of updating.

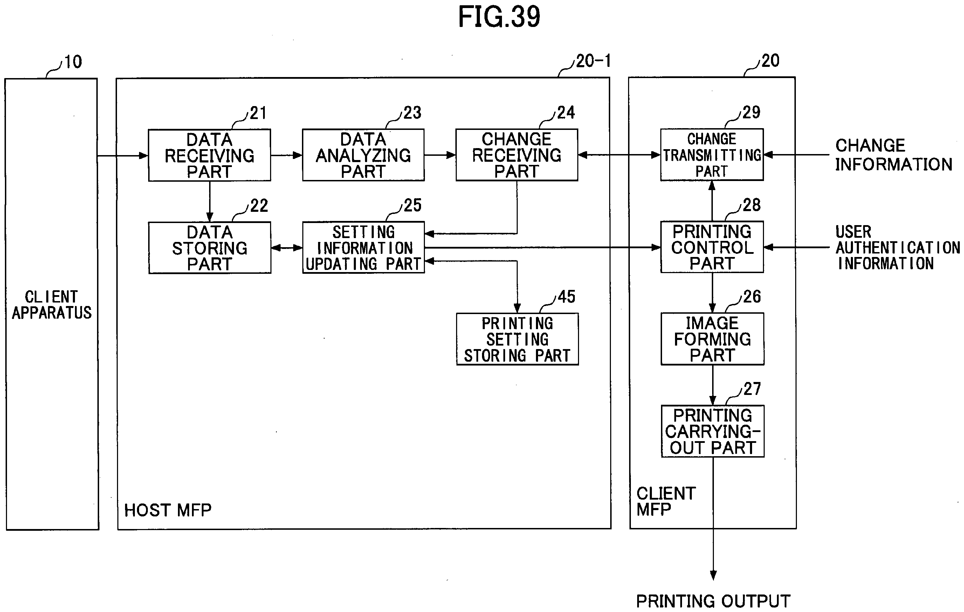

FIG. 39 shows a functional block diagram illustrating a thirteenth example of a printing system. The thirteenth example has the same configuration as that of the ninth example described above with reference to FIGS. 35-36, except for the following points.

In addition to the ninth example with reference to FIG. 34, the host MFP 20-1 shown in FIG. 39 has a printing setting storing part 45 that stores printing settings that are previously set in a manner as being associated with user identification information. The user identification information (user authentication information) includes a user ID and a password as mentioned above, and the printing settings include setting items and setting contents.

The printing setting storing part 45 of the host MFP 20-1 can store specific setting items and setting contents for each user. For example, for a user A, setting contents "2" (pages) can be stored for a setting item "collecting printing setting", and, for a user B, setting contents "color" can be stored for a setting item "monochrome/color printing setting". Such printing settings are those that respective users previously set and are registered by the printing setting storing part 45.

In the above-mentioned example, even when the user A sets setting contents "OFF" for the setting item "collecting printing setting" from the client apparatus 10, and outputs printing data for the host MFP 20-1, since the setting contents "2" (pages) are set for setting item "collecting printing setting" by the printing setting storing part 45 in the host MFP 20-1 as mentioned above, the setting information updating part 25 rewrites the above- mentioned setting contents "OFF" in printing setting information included in the printing data into "2" (pages) according to the same setting contents stored by the printing setting storing part 45 for the corresponding setting item "collecting printing setting", and updates the printing data. Thereby, even when the user A does not input change information from the client MFP 20, it is possible to carry out printing that is controlled automatically as being suitable to a type of a device (the client MFP 20) or in a manner desired by the user A.

In the thirteenth example, the setting information updating part 25 of the host MFP 20-1 can thus update printing setting information included in printing data stored by the data storing part 22 by-using printing settings stored by the printing setting storing part 45 as change information in a case where the change receiving part 24 has not received change information for a predetermined time period.

The present invention is not limited to the specifically disclosed embodiments, and variations and modifications (including addition and deletion) may be made without departing from the scope of the present invention, and any embodiments are covered by the present invention as long as they have the functions and advantages the same as those of the present invention.

### DESCRIPTION OF REFERENCE NUMERALS

10 CLIENT APPARATUS
20 MFP (IMAGE FORMING APPARATUS), CLIENT MFP (SECOND IMAGE FORMING APPARATUS)
20-1 HOST MFP (FIRST IMAGE FORMING APPARATUS)
21 DATA RECEIVING PART
22 DATA STORING PART
23 DATA ANALYZING PART
24 CHANGE RECEIVING PART
25 SETTING INFORMATION UPDATING PART
26 IMAGE FORMING PART
27 PRINTING CARRYING-OUT PART
28 PRINTING CONTROL PART
29 CHANGE TRANSMITTING PART
30 PRINTING SERVER (INFORMATION PROCESSING APPARATUS)
40 SETTING ITEM STORING PART
41 INFORMATION COLLECTING PART
42 DISPLAY DETERMINING PART
43 SETTING ITEM OBTAINING PART
44 ITEM ADDITION DETERMINING PART
45 PRINTING SETTING STORING PART
130 NETWORK

### PATENT DOCUMENTS

PATENT DOCUMENT 1: Japanese Laid-Open Patent Application No. 2004-21456
PATENT DOCUMENT 2: Japanese Laid-Open Patent Application No. 2004-58306

## Claims

1. An image forming apparatus (20) comprising:
a data storing part (22) that stores printing data received from a client apparatus (10) via a network;
a data receiving part (21) that causes a display part to display a list of the printing data stored by the data storing part, and receiving a selection of printing data from the list to be printed;
a change receiving part (24) that causes the display part to display printing setting information that includes setting items and setting contents corresponding to the setting items, the printing setting information being included in the printing data for which the data receiving part has received the selection and being set in the client apparatus (10) for a designated process to be carried out, and receives via the display part an input of change information that is used to change the setting contents of the printing setting information;
an updating part (25) that updates the printing setting information included in the printing data for which the data receiving part has received the selection and stored by the data storing part according to the change information; and
a printing part (27) that prints the printing data for which the data receiving part has received the selection,
a setting item obtaining part (43) that obtains, from information collected as a result of an inquiry being made into respective devices included in the image forming apparatus, setting items that are settable;
an item addition determining part (44) that compares between the setting items included in the printing data for which the data receiving part has received the selection and the setting items obtained by the setting item obtaining part, and determines whether there are setting items that are not included in those included in the printing data for which the data receiving part has received the selection and are to be added, wherein:
when the item addition determining part determines that there are setting items to be added, the change receiving part causes the display part to display the setting items included in the printing data for which the data receiving part has received the selection together with the corresponding setting contents and additionally display the setting items to be added together with the corresponding setting contents that indicate as not being set yet and mean that the corresponding setting items are not applied,
**characterized by**
an authentication part that receives an input of user identification information and carry out user authentication, wherein:
the printing data includes the user identification information, and the updating part updates the printing setting information included in the printing data that includes the user identification of a user who is authenticated, according to the change information that the user inputs; and
a printing setting storing part that stores a printing setting that has been previously set in a manner as being associated with the user identification information, wherein:
the updating part uses the printing setting as the change information stored by the printing setting storing part in a case where the change receiving part has not received any change information for a predetermined period, and updates the printing setting information included in the printing data stored by the data storing part.

2. The image forming apparatus (20) as claimed in claim 1, wherein:
the change receiving part (24) receives the setting contents that are changed by an input of a user as the change information.

3. The image forming apparatus (20) as claimed in claim 2, further comprising:
a setting item storing part that stores the setting items to be displayed by the display part, wherein:
the change receiving part (24) causes the display part to display the setting items stored by the setting item storing part and the setting contents that correspond to the displayed setting items, the displayed setting contents being those included in the printing setting information included in the printing data stored by the data storing part.

4. The image forming apparatus (20) as claimed in claim 2, further comprising:
an information collecting part that makes an inquiry at predetermined intervals into devices included in the image forming apparatus, which devices are those having remaining amounts that change as they are used, and collects information of the devices; and
a display determining part configured to determine, from the setting contents corresponding to the setting items included in the printing data for which the data receiving part (21) has received the selection and the collected information collected by the information collecting part, setting items and the setting contents corresponding to the setting items to be displayed by the display part.

5. The image forming apparatus (20) as claimed in claim 1, wherein:
the setting item obtaining part obtains, from the information collected as a result of the inquiry being made into the respective devices included in the image forming apparatus at a time of starting up of the image forming apparatus, the setting items that are settable.

6. The image forming apparatus (20) as claimed in claim 1, further comprising:
a printing control part that avoids interrupting a printing operation that is based on second printing data even when first printing data exists based on which a printing operation cannot be carried out because of the contents of the first printing data.

7. An image forming method for printing an image based on printing data in an image forming apparatus, comprising:
receiving the printing data from a client apparatus (10) via a network and storing the printing data in a data storing part (22);
displaying a list of the printing data stored by the data storing part, and receiving a selection of printing data from the list to be printed;
displaying printing setting information that includes setting items and setting contents corresponding to the setting items, the printing setting information being included in the printing data for which the selection has been received and being set in the client apparatus (10) for a designated process to be carried out, and receiving via the display part an input of change information that is used to change the setting contents of the printing setting information;
updating the printing setting information included in the printing data for which the selection has been received and storing according to the change information; and
printing the printing data for which the data receiving part has received the selection,
obtaining from information collected as a result of an inquiry being made into respective devices included in the image forming apparatus, setting items that are settable;
comparing between the setting items included in the printing data for which the data receiving part has received the selection and the setting items obtained and determining whether there are setting items that are not included in those included in the printing data for which the selection has been received and are to be added, wherein:
when it is determined that there are setting items to be added, displaying the setting items included in the printing data for which the selection has been received together with the corresponding setting contents and additionally displaying the setting items to be added together with the corresponding setting contents that indicate as not being set yet and mean that the corresponding setting items are not applied,
**characterized by**
receiving an input of user identification information and carrying out user authentication, wherein the printing data includes the user identification information;
updating the printing setting information included in the printing data that includes the user identification of a user who is authenticated, according to the change information that the user inputs;
storing a printing setting that has been previously set in a manner as being associated with the user identification information, wherein the printing setting is used as the change information stored in a case where any change information has not been received for a predetermined period; and
updating the printing setting information included in the printing data stored by the data storing part (22).

8. A computer-readable information recording medium storing a program which, when executed by a computer processor that controls an image forming apparatus, cause the computer to perform a method of:
receiving the printing data and storing the printing data from client apparatus (10) via a network in a data storing part (22);
displaying a list of the printing data stored by the data storing part, and receiving a selection of printing data from the list to be printed;
displaying printing setting information that includes setting items and setting contents corresponding to the setting items, the printing setting information being included in the printing data for which the selection has been received and being set in the client apparatus (10) for a designated process to be carried out, and receiving via the display part an input of change information that is used to change the setting contents of the printing setting information;
updating the printing setting information included in the printing data for which the selection has been received and storing according to the change information; and
printing the printing data for which the data receiving part has received the selection,
obtaining from information collected as a result of an inquiry being made into respective devices included in the image forming apparatus, setting items that are settable; and
comparing between the setting items included in the printing data for which the data receiving part has received the selection and the setting items obtained and determining whether there are setting items that are not included in those included in the printing data for which the selection has been received and are to be added, wherein:
when it is determined that there are setting items to be added, displaying the setting items included in the printing data for which the selection has been received together with the corresponding setting contents and additionally displaying the setting items to be added together with the corresponding setting contents that indicate as not being set yet and mean that the corresponding setting items are not applied,
**characterized by**
receiving an input of user identification information and carrying out user authentication, wherein the printing data includes the user identification information;
updating the printing setting information included in the printing data that includes the user identification of a user who is authenticated, according to the change information that the user inputs;
storing a printing setting that has been previously set in a manner as being associated with the user identification information, wherein the printing setting is used as the change information stored in a case where any change information has not been received for a predetermined period; and
updating the printing setting information included in the printing data stored by the data storing part (22).

9. The image forming apparatus (20) as claimed in claim 1, wherein
the data storing part receives the printing data from the client apparatus (10) via the network and stores the printing data, the printing data being obtained as a result of a printer driver converting document data into the printing data, the printer driver being mounted in the client apparatus (10) and being able to be used in a plurality of types of image forming apparatuses in common.

## Patentansprüche

1. Bilderzeugungsvorrichtung (20), umfassend:
einen Datenspeicherteil (22), der Druckdaten speichert, die von einer Clientvorrichtung (10) über ein Netzwerk empfangen wurden;
einen Datenempfangsteil (21), der einen Anzeigeteil veranlasst, eine Liste der von dem Datenspeicherteil gespeicherten Druckdaten anzuzeigen und eine Auswahl von Druckdaten von der zu druckenden Liste zu empfangen;
einen Änderungsempfangsteil (24), der den Anzeigeteil veranlasst, Druckeinstellungsinformationen anzuzeigen, die Einstellungsgegenstände und Einstellungsinhalte beinhalten, die den Einstellungsgegenständen entsprechen, wobei die Druckeinstellungsinformationen in den Druckdaten beinhaltet sind, für die der Datenempfangsteil die Auswahl empfangen hat und in der Clientvorrichtung (10) eingestellt werden, damit ein bestimmter Prozess ausgeführt werden kann, und über den Anzeigeteil eine Eingabe von Änderungsinformationen empfängt, die zum Ändern der Einstellungsinhalte der Druckeinstellungsinformationen verwendet werden;
einen Aktualisierungsteil (25), der die Druckeinstellungsinformationen aktualisiert, die in den Druckdaten beinhaltet sind, für die der Datenempfangsteil die Auswahl empfangen und durch den Datenspeicherteil gemäß den Änderungsinformationen gespeichert hat; und
einen Druckteil (27), der die Druckdaten druckt, für die der Datenempfangsteil die Auswahl empfangen hat,
einen Einstellungsgegenstandserhaltungssteil (43), der aus Informationen, die als Ergebnis einer Anfrage, die an jeweilige Vorrichtungen gemacht werden, die in der Bilderzeugungsvorrichtung beinhaltet sind, gesammelt wurden, Einstellungsgegenstände erhält, die einstellbar sind;
einen Gegenstandhinzufügungsbestimmungsteil (44), der zwischen den in den Druckdaten beinhalteten Einstellungsgegenständen, für die der Datenempfangsteil die Auswahl empfangen hat, und den durch den Einstellungsgegenstanderhaltungsteil erhaltenen Einstellungsgegenständen vergleicht und bestimmt, ob es Einstellungsgegenstände gibt, die nicht in den Druckdaten beinhaltet sind, für die der Datenempfangsteil die Auswahl empfangen hat und die hinzugefügt werden sollen, wobei:
wenn der Gegenstandhinzufügungsbestimmungsteil bestimmt, dass hinzuzufügende Einstellungsgegenstände vorhanden sind, der Änderungsempfangsteil den Anzeigeteil veranlasst, die Einstellungsgegenstände anzuzeigen, die in den Druckdaten beinhaltet sind, für die der Datenempfangsteil die Auswahl zusammen mit den entsprechenden Einstellungsinhalten empfangen hat und zusätzlich die hinzuzufügenden Einstellungsgegenstände zusammen mit den entsprechenden Einstellungsinhalten anzuzeigen, die angeben, dass sie noch nicht eingestellt wurden, und bedeuten, dass die entsprechenden Einstellungsgegenstände nicht angewendet werden,
**gekennzeichnet durch**
einen Authentifizierungsteil, der eine Eingabe von Benutzeridentifizierungsinformationen empfängt und Benutzerauthentifizierung ausführt, wobei:
die Druckdaten die Benutzeridentifizierungsinformationen beinhalten, und der Aktualisierungsteil die in den Druckdaten beinhalteten Druckeinstellungsinformationen aktualisiert, die die Benutzeridentifizierung eines authentifizierten Benutzers beinhalten, gemäß den vom Benutzer eingegebenen Änderungsinformationen; und
einen Druckeinstellungs-Speicherteil, der eine Druckeinstellung speichert, die zuvor so eingestellt wurde, dass sie den Benutzeridentifizierungsinformationen zugeordnet ist, wobei:
der Aktualisierungsteil die Druckeinstellung als die durch den Druckeinstellungs-Speicherteil gespeicherte Änderungsinformationen in einem Fall verwendet, in dem der Änderungsempfangsteil für einen vorbestimmten Zeitraum keine Änderungsinformationen empfangen hat, und die Druckeinstellungsinformationen aktualisiert, die in Druckdaten beinhaltet sind, die durch den Datenspeicherteil gespeichert werden.

2. Bilderzeugungsvorrichtung (20) nach Anspruch 1, wobei:
der Änderungsempfangsteil (24) die Einstellungsinhalte empfängt, die durch eine Eingabe eines Benutzers geändert werden, als die Änderungsinformationen.

3. Bilderzeugungsvorrichtung (20) nach Anspruch 2, ferner umfassend:
einen Einstellungsgegenstand-Speicherteil, der die von dem Anzeigeteil anzuzeigenden Einstellungsgegenstände speichert, wobei:
der Änderungsempfangsteil (24) den Anzeigeteil veranlasst, die durch den Einstellungsgegenstand-Speicherteil gespeicherten Einstellungsgegenstände und die Einstellungsinhalte anzuzeigen, die den angezeigten Einstellungsgegenständen entsprechen, wobei die angezeigten Einstellungsinhalte diejenigen sind, die in den Druckeinstellungsinformationen beinhaltet sind, die in den durch den Datenspeicherteil gespeicherten Daten beinhaltet sind.

4. Bilderzeugungsvorrichtung (20) nach Anspruch 2, ferner umfassend: einen Informationssammelteil, der in vorbestimmten Intervallen nach Vorrichtungen fragt, die in der Bilderzeugungsvorrichtung beinhaltet sind, wobei diese Vorrichtungen solche sind, die verbleibende Mengen aufweisen, die sich ändern, wenn sie verwendet werden, und Informationen der Vorrichtungen sammeln; und
einen Anzeigebestimmungsteil, der konfiguriert ist, um, aus den Einstellungsinhalten, die den Einstellungsgegenständen entsprechen, die in den Druckdaten beinhaltet sind, für die der Datenempfangsteil (21) die Auswahl und die gesammelten Informationen, die von dem Informationssammelteil gesammelt wurden, empfangen hat, Einstellungsgegenstände und die Einstellungsinhalte, die den von dem Anzeigeteil anzuzeigenden Einstellungsgegenständen entsprechen, zu bestimmen.

5. Bilderzeugungsvorrichtung (20) nach Anspruch 1, wobei:
der Einstellungsgegenstandserhaltungsteil, aus den Informationen, die als Ergebnis einer Anfrage, die an jeweilige Vorrichtungen gemacht werden, die in der Bilderzeugungsvorrichtung beinhaltet sind, zu einem Zeitpunkt des Startens der Bilderzeugungsvorrichtung gesammelt wurden, die Einstellungsgegenstände erhält, die einstellbar sind.

6. Bilderzeugungsvorrichtung (20) nach Anspruch 1, ferner umfassend:
einen Drucksteuerteil, der Unterbrechen eines Druckvorgangs, der auf zweiten Druckdaten basiert, vermeidet, selbst wenn erste Druckdaten bestehen, basierend auf welchen ein Druckvorgang aufgrund der Inhalte der ersten Druckdaten nicht ausgeführt werden kann.

7. Bilderzeugungsverfahren zum Drucken eines Bildes basierend auf Druckdaten in einer Bilderzeugungsvorrichtung, umfassend:
Empfangen der Druckdaten von einer Clientvorrichtung (10) über ein Netzwerk und Speichern der Druckdaten in einem Datenspeicherteil (22);
Anzeigen einer Liste der von dem Datenspeicherteil gespeicherten Druckdaten, und Empfangen einer Auswahl von Druckdaten von der zu druckenden Liste;
Anzeigen von Druckeinstellungsinformationen, die Einstellungsgegenstände und Einstellungsinhalte beinhalten, die den Einstellungsgegenständen entsprechen, wobei die Druckeinstellungsinformationen in den Druckdaten beinhaltet sind, für die die Auswahl empfangen wurde und in der Clientvorrichtung (10) eingestellt werden, damit ein bestimmter Prozess ausgeführt werden kann, und Empfangen, über den Anzeigeteil, einer Eingabe von Änderungsinformationen, die zum Ändern der Einstellungsinhalte der Druckeinstellungsinformationen verwendet werden;
Aktualisieren der Druckeinstellungsinformationen, die in den Druckdaten beinhaltet sind, für die die Auswahl empfangen wurde, und Speichern gemäß den Änderungsinformationen; und
Drucken der Druckdaten, für die der Datenempfangsteil die Auswahl empfangen hat,
Erhalten, aus Informationen, die als Ergebnis einer Anfrage, die an jeweilige Vorrichtungen gemacht werden, die in der Bilderzeugungsvorrichtung beinhaltet sind, gesammelt wurden, von Einstellungsgegenständen, die einstellbar sind;
Vergleichen zwischen den Einstellungsgegenständen, die in den Druckdaten enthalten sind, für die der Datenempfangsteil die Auswahl empfangen hat, und den erhaltenen Einstellungsgegenständen und Bestimmen, ob Einstellungsgegenstände vorhanden sind, die nicht in denjenigen enthalten sind, die in den Druckdaten enthalten sind, für die die Auswahl empfangen wurde und die hinzugefügt werden sollen, wobei:
wenn bestimmt wird, dass es hinzuzufügende Einstellungsgegenstände gibt, Anzeigen der Einstellungsgegenstände, die in den Druckdaten enthalten sind, für die die Auswahl empfangen wurde, zusammen mit den entsprechenden Einstellungsinhalten und zusätzlich Anzeigen der hinzuzufügenden Einstellungsgegenstände zusammen mit den entsprechenden Einstellungsinhalten die angeben, dass sie noch nicht eingestellt wurden, und bedeuten, dass die entsprechenden Einstellungsgegenstände nicht angewendet werden,
**gekennzeichnet durch**
Empfangen einer Eingabe von Benutzeridentifizierungsinformationen und Ausführen einer Benutzerauthentifizierung, wobei die Druckdaten die Benutzeridentifizierungsinformationen enthalten;
Aktualisieren der in den Druckdaten beinhalteten Druckeinstellungsinformationen, die die Benutzeridentifizierung eines authentifizierten Benutzers beinhalten, gemäß den vom Benutzer eingegebenen Änderungsinformationen;
Speichern einer Druckeinstellung, die zuvor so eingestellt wurde, dass sie den Benutzeridentifizierungsinformationen zugeordnet ist, wobei die Druckeinstellung als die Änderungsinformationen verwendet wird, die in einem Fall gespeichert werden, in dem irgendwelche Änderungsinformationen für eine vorbestimmte Zeitdauer nicht empfangen wurden; und
Aktualisieren der Druckeinstellungsinformationen, die in den durch den Datenspeicherteil (22) gespeicherten Druckdaten beinhaltet sind.

8. Computerlesbares Informationsaufzeichnungsmedium, das ein Programm speichert, das, wenn es von einem Computerprozessor ausgeführt wird, der eine Bilderzeugungsvorrichtung steuert, den Computer veranlasst, ein Verfahren auszuführen, zum:
Empfangen der Druckdaten und Speichern der Druckdaten von der Clientvorrichtung (10) über ein Netzwerk in einem Datenspeicherteil (22);
Anzeigen einer Liste der von dem Datenspeicherteil gespeicherten Druckdaten und Empfangen einer Auswahl von Druckdaten von der zu druckenden Liste;
Anzeigen von Druckeinstellungsinformationen, die Einstellungsgegenstände und Einstellungsinhalte beinhalten, die den Einstellungsgegenständen entsprechen, wobei die Druckeinstellungsinformationen in den Druckdaten beinhaltet sind, für die die Auswahl empfangen wurde und in der Clientvorrichtung (10) eingestellt werden, damit ein bestimmter Prozess ausgeführt werden kann, und Empfangen, über den Anzeigeteil, einer Eingabe von Änderungsinformationen, die zum Ändern der Einstellungsinhalte der Druckeinstellungsinformationen verwendet werden;
Aktualisieren der Druckeinstellungsinformationen, die in den Druckdaten beinhaltet sind, für die die Auswahl empfangen wurde, und Speichern gemäß den Änderungsinformationen; und
Drucken der Druckdaten, für die der Datenempfangsteil die Auswahl empfangen hat,
Erhalten, aus Informationen, die als Ergebnis einer Anfrage, die an jeweilige Vorrichtungen gemacht werden, die in der Bilderzeugungsvorrichtung beinhaltet sind, gesammelt wurden, von Einstellungsgegenständen, die einstellbar sind; und
Vergleichen zwischen den Einstellungsgegenständen, die in den Druckdaten enthalten sind, für die der Datenempfangsteil die Auswahl empfangen hat, und den erhaltenen Einstellungsgegenständen und Bestimmen, ob Einstellungsgegenstände vorhanden sind, die nicht in denjenigen enthalten sind, die in den Druckdaten enthalten sind, für die die Auswahl empfangen wurde und die hinzugefügt werden sollen, wobei:
wenn bestimmt wird, dass es hinzuzufügende Einstellungsgegenstände gibt, Anzeigen der Einstellungsgegenstände, die in den Druckdaten enthalten sind, für die die Auswahl empfangen wurde, zusammen mit den entsprechenden Einstellungsinhalten und zusätzlich Anzeigen der hinzuzufügenden Einstellungsgegenstände zusammen mit den entsprechenden Einstellungsinhalten die angeben, dass sie noch nicht eingestellt wurden, und bedeuten, dass die entsprechenden Einstellungsgegenstände nicht angewendet werden,
**gekennzeichnet durch**
Empfangen einer Eingabe von Benutzeridentifizierungsinformationen und Ausführen einer Benutzerauthentifizierung, wobei die Druckdaten die Benutzeridentifizierungsinformationen enthalten;
Aktualisieren der in den Druckdaten beinhalteten Druckeinstellungsinformationen, die die Benutzeridentifizierung eines authentifizierten Benutzers beinhalten, gemäß den vom Benutzer eingegebenen Änderungsinformationen;
Speichern einer Druckeinstellung, die zuvor so eingestellt wurde, dass sie den Benutzeridentifizierungsinformationen zugeordnet ist, wobei die Druckeinstellung als die Änderungsinformationen verwendet wird, die in einem Fall gespeichert werden, in dem irgendwelche Änderungsinformationen für eine vorbestimmte Zeitdauer nicht empfangen wurden; und
Aktualisieren der Druckeinstellungsinformationen, die in den durch den Datenspeicherteil (22) gespeicherten Druckdaten beinhaltet sind.

9. Bilderzeugungsvorrichtung (20) nach Anspruch 1, wobei:
der Datenspeicherteil die Druckdaten von der Clientvorrichtung (10) über das Netzwerk empfängt und die Druckdaten speichert, wobei die Druckdaten als Ergebnis erhalten werden, dass ein Druckertreiber Dokumentdaten in Druckdaten umwandelt, der Druckertreiber in die Clientvorrichtung (10) eingebaut wird und in einer Vielzahl von Arten von Bilderzeugungsvorrichtungen gemeinsam verwendet werden kann.

## Revendications

1. Appareil de formation d'image (20) comprenant :
une partie de stockage de données (22) qui stocke des données d'impression reçues depuis un appareil client (10) par le biais d'un réseau ;
une partie de réception de données (21) qui amène une partie d'affichage à afficher une liste des données d'impression stockées par la partie de stockage de données, et recevant une sélection de données d'impression à partir de la liste à imprimer ;
une partie de réception de modification (24) qui amène la partie d'affichage à afficher des informations de configuration d'impression qui comprennent des éléments de configuration et un contenu de configuration correspondant aux éléments de configuration, les informations de configuration d'impression étant comprises dans les données d'impression pour lesquelles la partie de réception de données a reçu la sélection et étant définies dans l'appareil client (10) pour qu'un processus désigné soit effectué, et reçoit par le biais de la partie d'affichage une entrée d'informations de modification qui est utilisée pour modifier le contenu de configuration des informations de configuration d'impression ;
une partie de mise à jour (25) qui met à jour les informations de configuration d'impression comprises dans les données d'impression pour lesquelles la partie de réception de données a reçu la sélection et stockées par la partie de stockage de données en fonction des informations de modification ; et
une partie d'impression (27) qui imprime les données d'impression pour lesquelles la partie de réception de données a reçu la sélection,
une partie d'obtention d'élément de configuration (43) qui obtient, à partir d'informations recueillies suite à une demande étant effectuée dans des dispositifs respectifs compris dans l'appareil de formation d'image, des éléments de configuration qui peuvent être définis ;
une partie de détermination d'ajout d'élément (44) qui effectue une comparaison entre les éléments de configuration compris dans les données d'impression pour lesquelles la partie de réception de données a reçu la sélection et les éléments de configuration obtenus par la partie d'obtention d'élément de configuration, et détermine s'il existe des éléments de configuration qui ne sont pas compris dans ceux compris dans les données d'impression pour lesquelles la partie de réception de données a reçu la sélection et doivent être ajoutés,
lorsque la partie de détermination d'ajout d'élément détermine qu'il existe des éléments de configuration à ajouter, la partie de réception de modification amenant la partie d'affichage à afficher les éléments de configuration compris dans les données d'impression pour lesquelles la partie de réception de données a reçu la sélection conjointement avec les contenu de configuration correspondant et à afficher en outre les éléments de configuration à ajouter conjointement avec le contenu de configuration correspondant qui indique ne pas encore être défini et signifie que les éléments de configuration correspondants ne sont pas appliqués,
**caractérisé par**
une partie d'authentification qui reçoit une entrée d'informations d'identification d'utilisateur et effectue une authentification d'utilisateur,
les données d'impression comprennent les informations d'identification d'utilisateur, et la partie de mise à jour mettant à jour les informations de configuration d'impression comprises dans les données d'impression qui comprennent l'identification d'un utilisateur qui est authentifié, en fonction des informations de modification que l'utilisateur entre ; et
une partie de stockage de configuration d'impression qui stocke une configuration d'impression qui a été précédemment définie de manière à être associée aux informations d'identification d'utilisateur,
la partie de mise à jour utilisant la configuration d'impression en tant qu'informations de modification stockées par la partie de stockage de configuration d'impression au cas où la partie de réception de modification n'a pas reçu d'informations de modification pendant une période prédéterminée, et mettant à jour les informations de configuration d'impression comprises dans les données d'impression stockées par la partie de stockage de données.

2. Appareil de formation d'image (20) tel que défini dans la revendication 1, dans lequel :
la partie de réception de modification (24) reçoit le contenu de configuration qui est modifié par l'entrée d'un utilisateur en tant qu'information de modification.

3. Appareil de formation d'images (20) tel que défini dans la revendication 2, comprenant en outre :
une partie de stockage d'élément de configuration qui stocke les éléments de configuration à afficher par la partie d'affichage,
la partie de réception de modification (24) amenant la partie d'affichage à afficher les éléments de configuration stockés par la partie de stockage d'éléments de configuration et le contenu de configuration qui correspond aux éléments de configuration affichés, le contenu de configuration affiché étant celui compris dans les informations de configuration d'impression comprises dans les données d'impression stockées par la partie de stockage de données.

4. Appareil de formation d'image (20) selon la revendication 2, comprenant en outre :
une partie de recueil d'informations qui effectue une interrogation à intervalles prédéterminés dans des dispositifs compris dans l'appareil de formation d'image, lesquels dispositifs sont ceux présentant des quantités restantes qui changent lorsqu'elles sont utilisées, et recueille des informations des dispositifs ; et
une partie de détermination d'affichage conçue pour déterminer, à partir du contenu de configuration correspondant aux éléments de configuration compris dans les données d'impression pour lesquelles la partie de réception de données (21) a reçu la sélection et les informations recueillies par la partie de recueil d'informations, des éléments de configuration et le contenu de configuration correspondant aux éléments de configuration à afficher par la partie d'affichage.

5. Appareil de formation d'image (20) tel que défini dans la revendication 1, dans lequel :
la partie d'obtention d'élément de configuration obtient, à partir des informations recueillies suite à l'interrogation effectuée dans les dispositifs respectifs compris dans l'appareil de formation d'image à un moment de démarrage de l'appareil de formation d'image, les éléments de configuration qui sont peuvent être définis.

6. Appareil de formation d'image (20) tel que défini dans la revendication 1, comprenant en outre :
une partie de commande d'impression qui évite l'interruption d'une opération d'impression qui est fonction de deuxièmes données d'impression même lorsque des premières données d'impression existent en fonction desquelles une opération d'impression ne peut pas être effectuée en raison du contenu des premières données d'impression.

7. Procédé de formation d'image destiné à imprimer une image en fonction de données d'impression dans un appareil de formation d'image, comprenant :
la réception des données d'impression depuis un appareil client (10) par le biais d'un réseau et le stockage des données d'impression dans une partie de stockage de données(22);
l'affichage d'une liste des données d'impression stockées par la partie de stockage de données et la réception d'une sélection de données d'impression à partir de la liste à imprimer ;
l'affichage d'informations de configuration d'impression qui comprennent des éléments de configuration et un contenu de configuration correspondant aux éléments de configuration, les informations de configuration d'impression étant comprises dans les données d'impression pour lesquelles la sélection a été reçue et étant définies dans l'appareil client (10) pour qu'un processus désigné soit effectué, et recevant par le biais de la partie d'affichage une entrée d'informations de modification qui sont utilisées pour modifier le contenu de configuration des informations de configuration d'impression ;
la mise à jour des informations de configuration d'impression comprises dans les données d'impression pour lesquelles la sélection a été reçue et le stockage en fonction des informations de modification ; et
l'impression des données d'impression pour lesquelles la partie de réception de données a reçu la sélection,
l'obtention depuis des informations recueillies suite à une interrogation étant effectuée dans des dispositifs respectifs compris dans l'appareil de formation d'image, d'éléments de configuration qui peuvent être définis ;
la comparaison entre les éléments de configuration compris dans les données d'impression pour lesquelles la partie de réception de données a reçu la sélection et les éléments de configuration obtenus et la détermination de savoir s'il existe des éléments de configuration qui ne sont pas compris dans ceux compris dans les données d'impression pour lesquelles la sélection a été reçue et doivent être ajoutés,
lorsque l'on détermine qu'il existe des éléments de configuration à ajouter, l'affichage des éléments de configuration compris dans les données d'impression pour lesquelles la sélection a été reçue conjointement avec le contenu de configuration correspondant et en outre l'affichage des éléments de configuration à ajouter conjointement avec le contenu qui indique ne pas encore être défini et signifie que les éléments de configuration correspondants ne sont pas appliqués,
**caractérisé par**
la réception d'une entrée d'informations d'identification d'utilisateur et la réalisation d'une authentification d'utilisateur, les données d'impression comprenant les informations d'identification d'utilisateur ;
la mise à jour des informations de configuration d'impression comprises dans les données d'impression qui comprennent l'identification d'un utilisateur qui est authentifié, en fonction des informations de modification que l'utilisateur entre ;
le stockage d'une configuration d'impression qui a été précédemment définie de manière à être associée aux informations d'identification d'utilisateur, la configuration d'impression étant utilisée tandis que les informations de modification stockées au cas où de quelconques informations de modification n'ont pas été reçues pendant une période prédéterminée ; et
la mise à jour des informations de configuration d'impression comprises dans les données d'impression stockées par la partie de stockage de données (22).

8. Support d'enregistrement d'informations lisibles par ordinateur stockant un programme qui, lorsqu'exécuté par un processeur d'ordinateur qui commande un appareil de formation d'image, amène l'ordinateur à effectuer un procédé consistant à :
recevoir les données d'impression et stocker les données d'impression depuis l'appareil client (10) par le biais d'un réseau dans une partie de stockage de données (22) ;
afficher une liste des données d'impression stockées par la partie de stockage de données et recevoir une sélection de données d'impression à partir de la liste à imprimer ;
afficher des informations de configuration d'impression qui comprennent des éléments de configuration et un contenu de configuration correspondant aux éléments de configuration, les informations de configuration d'impression étant comprises dans les données d'impression pour lesquelles la sélection a été reçue et étant définies dans l'appareil client (10) pour qu'un processus désigné soit effectué, et recevoir par le biais de la partie d'affichage d'une entrée d'informations de modification qui sont utilisées pour modifier le contenu de configuration des informations de configuration d'impression ;
mettre à jour les informations de configuration d'impression comprises dans les données d'impression pour lesquelles la sélection a été reçue et stocker en fonction des informations de modification ; et
imprimer les données d'impression pour lesquelles la partie de réception de données a reçu la sélection,
obtenir depuis des informations recueillies suite à une interrogation étant effectuée dans des dispositifs respectifs compris dans l'appareil de formation d'image, des éléments de configuration qui peuvent être définis ; et
effectuer une comparaison entre les éléments de configuration compris dans les données d'impression pour lesquelles la partie de réception de données a reçu la sélection et les éléments de configuration obtenus et déterminer s'il existe des éléments de configuration qui ne sont pas compris dans ceux compris dans les données d'impression pour lesquelles la sélection a été reçue et doivent être ajoutés,
lorsque l'on détermine qu'il existe des éléments de configuration à ajouter, afficher les éléments de configuration compris dans les données d'impression pour lesquelles la sélection a été reçue conjointement avec le contenu de configuration correspondant et afficher en outre les éléments de configuration à ajouter conjointement avec le contenu de configuration correspondant qui indique ne pas encore être défini et signifie que les éléments de configuration correspondants ne sont pas appliqués,
**caractérisé par**
la réception d'une entrée d'informations d'identification d'utilisateur et la réalisation d'une authentification d'utilisateur, les données d'impression comprenant les informations d'identification d'utilisateur ;
la mise à jour des informations de configuration d'impression comprises dans les données d'impression qui comprennent l'identification d'un utilisateur qui est authentifié, en fonction des informations de modification que l'utilisateur entre ;
le stockage d'une configuration d'impression qui a été précédemment définie de manière à être associée aux informations d'identification d'utilisateur, la configuration d'impression étant utilisée tandis que les informations de modification stockées au cas où de quelconques informations de modification n'ont pas été reçues pendant une période prédéterminée ; et
la mise à jour des informations de configuration d'impression comprises dans les données d'impression stockées par la partie de stockage de données (22).

9. Appareil de formation d'image (20) tel que défini dans la revendication 1, dans lequel
la partie de stockage de données reçoit les données d'impression depuis l'appareil client (10) par le biais du réseau et stocke les données d'impression, les données d'impression étant obtenues suite à la conversion par un pilote d'imprimante de données de document en données d'impression, le pilote d'imprimante étant monté dans l'appareil client (10) et étant capable d'être utilisé dans une pluralité de types d'appareils de formation d'image en commun.
